# EUROPEAN PATENT APPLICATION

(11) **EP 2 404 589 A1**
(43) Date of publication of application: **11.01.2012**
(21) Application number: 10748690.4
(22) Date of filing: 26.02.2010
(51) Int. Cl.: A61J 3/00

(54) **MEDICATION BOX DISPENSING DEVICE**

(30) Priority: 01.03.2009 JP 2009047461; 30.11.2009 JP 2009272784
(71) Applicant: Yuyama Mfg. Co., Ltd., Toyonaka-shi Osaka 561-0841 (JP)
(72) Inventor: YUYAMA, Shoji, Toyonaka-shi Osaka 561-0841 (JP); SHIGEYAMA, Yasuhiro, Toyonaka-shi Osaka 561-0841 (JP); TSUDA, Hiromichi, Toyonaka-shi Osaka 561-0841 (JP); ITO, Koji, Toyonaka-shi Osaka 561-0841 (JP)
(74) Representative: Einsel, Martin
(86) International application number: PCT/JP2010/053145
(87) International publication number: WO 2010/101095

(57) **Abstract**

To provide a medicine-box delivering apparatus capable of efficiently performing the entire medicine box delivery task, a medicine-box delivering apparatus (10) includes a medicine-box accommodating portion (20) provided for accommodation and delivery of medicine boxes and a loading unit (30). The loading unit (30) includes a loading rack (32) movable at a position adjacent to a putting-in side of the medicine boxes with respect to the medicine-box accommodating portion (20). A plurality of types of loading paths (36) each having a different path width are provided to the loading rack (32). In the medicine-box delivering apparatus (10), under a state in which the medicine boxes are replenished into the loading paths (36), the loading rack (32) is caused to move to a position adjacent to one of medicine-box paths (22), which corresponds to ones of the medicine boxes charged in the loading paths (36). Thus, the medicine boxes prepared in the loading paths (36) are automatically loaded into the medicine-box paths (22).

## Description

### Technical Field

The present invention relates to a medicine-box delivering apparatus capable of delivering medicine boxes each containing medicines according to prescription.

### Background Art

Conventionally, there have been provided medicine supply apparatuses as disclosed in Patent Literatures 1 and 2 below. The medicine supply apparatus disclosed in Patent Literature 1 below is capable of delivering medicines such as unpacked tablets and capsules according to prescription into vials and then supplying the same. Further, the medicine supply apparatus disclosed in Patent Literature 2 below is capable of packaging medicines such as unpacked tablets and capsules, and medicinal powder for each prescription and supplying the same.

### Citation List

### Patent Literature

[PTL 1] JP 2007-75178 A
[PTL 2] JP 2007-246114 A

### Summary of Invention

### Technical Problems

Under the circumstance, in recent years, instead of loading unpacked tablets and capsules, medicinal powder, and the like into separately prepared vials, or instead of packaging the same with packaging sheets, there has been a demand for supplying medicines, for example, in a boxed state as they are like commercially available medicines according to prescription, and practically, the medicines have been supplied in such a form. Thus, there has been a demand for provision of an apparatus suitable to such a supply form. Further, there has been demanded that operations for provision of the medicines in such a supply method are performed as automatically and efficiently as possible.

In order to meet such demand, the inventors of the present invention have conducted extensive studies. As a result, there has been found that, regarding automation of the above-mentioned operations, time and effort are involved with an operation performed by a user, specifically, an operation of replenishing boxes each containing medicines (hereinafter, also referred to as "medicine boxes") with respect to a medicine-box accommodating portion for stocking the medicine boxes. In addition, there has been found that erroneous replenishment is involved, which impairs efficiency of a medicine box delivery task. As a result, there has been found that, when efficiency regarding factors of the replenishing operation of the medicine boxes is mainly increased in the medicine-box delivering apparatus for performing the medicine box delivery task, the entire medicine box delivery task can be more efficiently performed.

Further, there has been found that, regarding an operation of sequentially and automatically delivering medicine boxes MB one by one according to prescription information pieces after the replenishing operation, when a mechanism capable of rapidly and accurately delivering the medicine boxes is provided, the entire medicine box delivery task can be further more efficiently performed.

Under the circumstances, based on the above-mentioned findings, the present invention has been made to provide a medicine-box delivering apparatus capable of efficiently performing the entire medicine box delivery task.

### Solution to Problems

In order to solve the above-mentioned problems, a medicine-box delivering apparatus according to the present invention includes: a medicine-box accommodating portion capable of accommodating a large number of medicine boxes each containing medicines, collecting the medicine boxes according to prescription, and delivering the medicine boxes; and a loading unit capable of loading the medicine boxes into the medicine-box accommodating portion. Further, the medicine-box accommodating portion includes medicine-box paths of a plurality of types each having a different path width, which are arrayed in the medicine-box accommodating portion, and is capable of accommodating the medicine boxes in line in each of the medicine-box paths and sequentially sending out the medicine boxes. Still further, the loading unit includes a loading rack movable at a position adjacent on a medicine-box putting-in side with respect to the medicine-box accommodating portion, the loading rack including loading paths of a plurality of types each having a different path width. In the medicine-box delivering apparatus according to the present invention, the loading rack is, under a state in which the medicine boxes are replenished in the loading paths, movable up to a position adjacent to one of the medicine-box paths, which corresponds to ones of the medicine boxes charged in the loading paths, so as to load the ones of the medicine boxes replenished in the loading paths into corresponding one of the medicine-box paths.

Further, the medicine-box delivering apparatus according to the present invention may include medicine-box recognition means for recognizing types of the medicine boxes to be replenished with respect to the loading rack. When such a configuration is employed, there may be included replenishment instruction means for specifying corresponding one of the loading paths into which the medicine boxes recognized with the medicine-box recognition means are to be replenished, or loading instruction means for specifying the corresponding one of the medicine-box paths into which the medicine boxes recognized with the medicine-box recognition means are to be loaded.

The above-mentioned medicine-box delivering apparatus according to the present invention may further include: loading instruction means for electrically specifying the medicine-box paths; doors openable and closable on inlet sides of the medicine-box paths constituting the medicine-box accommodating portion; and locking means for hindering the doors from being opened and closed in a non-energized state. In an energized state, the medicine-box paths corresponding to ones of the medicine boxes, which are to be loaded, are specified by the charging instruction means, and the doors are opened and closed so that the ones of the medicine boxes can be loaded into the medicine-box paths.

Each of the above-mentioned medicine-box paths may be tilted downward from an inlet side toward an outlet side, and the medicine-box delivering apparatus may further include discharge regulating means provided on the outlet side of each of the medicine-box paths. Further, the discharge regulating means may include a push-up piece for pushing up corresponding one of the medicine boxes from the lower side to the upper side in each of the medicine-box paths, and a receiving piece which moves in association with the push-up piece. When such a configuration is employed, it is preferred that, when the medicine boxes stand by for delivery, the receiving piece project upward from the bottom-surface side of each of the medicine-box paths so that the medicine boxes are stemmed in each of the medicine-box paths, and when the medicine boxes are discharged, the push-up piece be actuated so as to push up the corresponding one of the medicine boxes, and the receiving piece withdraw onto the bottom-surface side of each of the medicine-box paths. Further, it is desired that, in the above-mentioned discharge regulating means, the push-up piece and/or the receiving piece includes a roller attached so as to be freely rotatable at a position which comes into contact with the medicine boxes.

As described above, each of the medicine-box paths may be tilted downward from the inlet side toward the outlet side, and when the discharge regulating means is provided on the outlet side of each of the medicine-box paths, the discharge regulating means may include an abutment surface against which the medicine boxes having passed each of the medicine-box paths abut. When such a configuration is employed, the abutment surface is preferred to include a protrusion provided at a position deviated from a width-direction center of each of the medicine-box paths.

It is desired that a surface of at least one of a bottom surface and side surfaces forming each of the medicine-box paths be formed of a glide promoting member obtained through impregnation of a silicone resin with respect to polyethylene. Still further, it is desired that the surface formed of the glide promoting member include projections and recesses extending in a path direction of each of the medicine-box paths.

In the medicine-box delivering apparatus according to the present invention, each of the medicine-box paths may be tilted downward from the inlet side toward the outlet side, and on the outlet side of each of the medicine-box paths, there may be provided the discharge regulating means capable of stemming the medicine boxes in each of the medicine-box paths for stand by, and discharging the medicine boxes by pushing up the medicine boxes from the bottom-surface side of each of the medicine-box paths. Further, in the medicine-box delivering apparatus according to the present invention, an opening-height adjustment means is attachable and detachable above the discharge regulating means, and the opening-height adjustment means may be attached to the attachment portion so as to reduce a height of an opening region of a part on the outlet side of each of the medicine-box paths.

In the above-mentioned medicine-box delivering apparatus according to the present invention, it is desired that a part on an inlet side of each of the loading paths and/or a part on the inlet side of each of the medicine-box paths be widened in a tapered manner.

Further, the above-mentioned medicine-box delivering apparatus according to the present invention may further include a replenishing unit capable of replenishing the medicine boxes with respect to the loading unit. When such a configuration is employed, it is desired that the replenishing unit include: replenishing paths of a plurality of types each having a different path width; and a stopper capable of stemming the medicine boxes put in each of the replenishing paths, and the medicine boxes prepared in each of the replenishing paths be replenished into corresponding one of the loading paths of the loading rack when the stopper is disengaged under a state in which the replenishing unit is connected to the loading rack of the loading unit.

The medicine-box delivering apparatus according to the present invention may further include: a transport conveyor for transporting the medicine boxes delivered from the medicine-box paths; and supply means provided on a downstream side in a conveying direction of the transport conveyor, the supply means being capable of supplying the medicine boxes transported by the transport conveyor collectively to a predetermined position. In the medicine-box delivering apparatus according to the present invention, the supply means may include a supply conveyor for transferring the medicine boxes transported from the transport conveyor, and a butting surface provided at a position adjacent to the supply conveyor, and a conveying surface of the supply conveyor may be actuated toward the butting surface during transfer of the medicine boxes from the transport conveyor toward the supply conveyor.
Further, in the medicine-box delivering apparatus according to the present invention, the supply means may include a container arrangement portion for arranging a container for accommodating the medicine boxes for each prescription, and container detection means for detecting whether or not the container exists in the container arrangement portion, and detection of the container with the container detection means may be set as only one disengaging condition or one of disengaging conditions for allowing the medicines to be supplied by the supply means.

The above-mentioned container detection means may be in a first detection state when the container is under the detection and may be in a second detection state when the container is out of the detection. Further, when such a container detection means is employed, switching of a detection signal indicating the second detection state to a detection signal indicating the first detection state after completion of delivery of ones of the medicine boxes, which correspond to preceding prescription, may be set as the only one disengaging condition or one of the disengaging conditions for allowing the medicines to be supplied by the supply means, the detection signals being transmitted from the container detection means.

The medicine-box delivering apparatus according to the present invention may further include distance-measuring means capable of measuring a distance from the inlet of each of the medicine-box paths to one of the medicine boxes, which is at a position most on the inlet side. Further, in the medicine-box delivering apparatus according to the present invention, a stock management operation for detecting a stock condition in each of the medicine-box paths can be performed based on the distance detected with the distance-measuring means and a length of one of the medicine boxes loaded in each of the medicine-box paths.

The medicine-box delivering apparatus according to the present invention may further include: an outlet-side sensor provided on the outlet side of each of the medicine-box paths; an inlet-side sensor provided at a position deviated toward the inlet side of each of the medicine-box paths with respect to the outlet-side sensor; and box-jam judging means for judging whether or not the medicine boxes are jammed in each of the medicine-box paths (22), and the box-jam judging means may judge that the medicine boxes are jammed in corresponding one of the medicine-box paths in a condition that the medicine boxes are detected with the inlet-side sensor without being detected with the outlet-side sensor.

The medicine-box delivering apparatus according to the present invention may further include: a medicine-box preparation portion including the loading unit and being capable of preparing the medicine boxes to be loaded at preset specified points in a phase preceding loading of the medicine boxes into the medicine-box paths; and a medicine-box collection portion capable of collecting the medicine boxes prepared in the medicine-box preparation portion without through the medicine-box paths. When such a configuration is employed, it is desired that, when the medicine boxes include medicine boxes erroneously prepared at points other than the preset specified points in the medicine-box preparation portion, the medicine boxes prepared at the points other than the preset specified points in the medicine-box preparation portion be collected by the medicine-box collection portion. Further, it is desired that, when the medicine boxes include the medicine boxes prepared at the points other than the preset specified points, preparation of the medicine boxes with respect to the points other than the preset specified points, at which the erroneously prepared medicine boxes exist, be prohibited.

The medicine-box delivering apparatus according to the present invention may be capable of performing separate prescription for delivering medicine boxes corresponding to one prescription in a plurality of separated times of delivery operations. When such a configuration is employed, it is desired that, for each type of the medicine boxes, a delivery capacity of each type of the medicine boxes that can be exerted in a single delivery operation be defined as a maximum number of medicine boxes that can be delivered at once on a premise that the medicine boxes to be delivered once are of a single type, and depending on a balance between the delivery capacity and a number of medicine boxes to be prescribed, the separate prescription be performed. Specifically, the separate prescription is desired to be performed when any one of the following (Condition 1) and (Condition 2) is satisfied:
(Condition 1) when the medicine boxes contained in one prescription are of a single type, a number of prescribed medicine boxes is larger than a number defined as the delivery capacity; and
(Condition 2) when the medicine boxes contained in one prescription are of a plurality of types, on a premise that medicine boxes of one type, which are contained in the one prescription, are delivered together with medicine boxes of another type, which are contained in the one prescription, a delivery capacity remaining after delivery of the medicine boxes of the another type is smaller than a delivery capacity required for delivery of the medicine boxes of the one type.

### Advantageous Effects of Invention

The medicine-box delivering apparatus according to the present invention includes the medicine-box accommodating portion provided for accommodation and delivery of the medicine boxes and the loading unit capable of loading the medicine boxes into the medicine-box accommodating portion, and the medicine boxes discharged from the medicine-box accommodating portion can be collectively delivered for each prescription. Further, in the medicine-box delivering apparatus according to the present invention, the loading unit includes the loading rack movable at the position adjacent to the putting-in side of the medicine boxes with respect to the medicine-box accommodating portion, and the plurality of types of the loading paths each having a different path width are provided to the loading rack. In the medicine-box delivering apparatus according to the present invention, after an operator replenishes the medicine boxes into the loading paths, the loading rack moves to a position adjacent to one of the medicine-box paths, which corresponds to the medicine boxes charged in the loading paths. Then, the medicine boxes in the loading paths of the loading rack are loaded into the medicine-box paths provided in the medicine-box accommodating portion. Thus, in the medicine-box delivering apparatus according to the present invention, when the operator performs the replenishing operation of the medicine boxes, it is unnecessary for the operator to select one medicine-box path, which corresponds to the medicine boxes to be replenished, from among the large number of the medicine-box paths provided in the medicine-box accommodating portion, or to move to the position at which the corresponding one medicine-box path is provided. Thus, according to the medicine-box delivering apparatus according to the present invention, the replenishing operation for replenishing the medicine boxes into the medicine-box accommodating portion can be efficiently performed.

Further, when the medicine-box delivering apparatus according to the present invention is provided with the medicine-box recognition means for recognizing the types of the medicine boxes to be replenished with respect to the loading rack, and when the replenishment instruction means specifies the loading paths to be replenished with the medicine boxes recognized with the medicine-box recognition means, it is clarified into which of the loading paths the medicine boxes to be replenished by the operator are to be replenished. Thus, with such a configuration, the replenishing operation of the medicine boxes with respect to the loading paths can be more efficiently performed. Further, when the loading path into which the medicine boxes are to be loaded is specified, the medicine boxes are prevented from being erroneously loaded.

In this context, in the medicine-box delivering apparatus according to the present invention, although the medicine boxes can be loaded with use of the loading unit as described above into the medicine-box paths provided in the medicine-box accommodating portion, it is assumed a case where the operator intends to load the medicine boxes directly into the medicine-box paths provided in the medicine-box accommodating portion without use of the loading unit. In the medicine-box delivering apparatus according to the present invention, the large number of medicine-box paths are provided in the medicine-box accommodating portion, and hence it is desired to employ a configuration which enables the operator to instantly understand which of the medicine-box paths the medicine boxes to be loaded are put into.

In order to meet such a demand, the medicine-box delivering apparatus according to the present invention is provided with the medicine-box recognition means so as to recognize the types of the medicine boxes to be replenished with respect to the loading rack, and provided with the loading instruction means so as to specify one medicine-box path into which the medicine boxes MB which are intended to be loaded are to be loaded, from among the large number of the medicine-box paths provided in the medicine-box accommodating portion. In this way, even when the loading unit is not used, the loading operation of the medicine boxes can be easily and smoothly performed with respect to the medicine-box paths provided in the medicine-box accommodating portion.

In this context, as described above, when the medicine boxes can be loaded directly with respect to the medicine-box accommodating portion without use of the loading unit, in terms of stock management and the like of the medicine boxes, it is desired to make sure direct loading with respect to the medicine-box accommodating portion is not unnecessarily performed. In order to meet such a demand, it is possible to employ the following configuration: the locking means is provided to the above-mentioned medicine-box delivering apparatus so that the doors provided on the inlet side of the medicine-box paths in the medicine-box accommodating portion cannot be opened or closed in a non-energized state; and when an energized state is reached and the doors can be opened and closed, one medicine-box path, which corresponds to the medicine boxes to be loaded, is specified by the charging instruction means. When such a configuration is employed, the direct loading with respect to the medicine-box accommodating portion is prevented from being unnecessarily performed by the operator, and the medicine boxes are prevented from being erroneously loaded when the medicine boxes can be directly loaded.

In the medicine-box delivering apparatus according to the present invention, in a case where the medicine-box path of each of the medicine-box paths has a falling gradient toward the outlet side, when the discharge regulating means is provided on the outlet side of each of the medicine-box paths, discharge of the medicine boxes having moved downward in the medicine-box paths can be appropriately controlled. Further, when the above-mentioned discharge regulating means is provided with the push-up piece for pushing up the medicine boxes from the lower side to the upper side in the medicine-box path and a receiving piece which moves in association with the push-up piece, and when the receiving piece projects upward from the bottom surface side of the medicine-box path while the medicine boxes stand by for delivery, the medicine boxes can be reliably stemmed in the medicine-box path. Further, with a structure in which the receiving piece withdraws to the bottom surface side of the medicine-box path when the push-up piece is actuated to push up the medicine box for delivery of the medicine box, the medicine box thus pushed up climbs over the receiving piece to be discharged from the medicine-box path. Thus, with the above-mentioned structure, the medicine boxes prepared in the medicine-box path can be reliably discharged one by one.

Further, when the push-up piece and/or the receiving piece of the above-mentioned discharge regulating means is provided with a roller attached so as to be freely rotatable at a position which comes into contact with the medicine boxes, the medicine boxes glide on the roller to be smoothly discharged. Thus, when the above-mentioned roller is provided, the medicine box delivery task can be more reliably performed at higher speed.

In this context, in the case where the medicine-box path is tilted downward from the inlet side to the outlet side as described above, when the medicine boxes are discharged from the outlet, the medicine boxes standing by in the medicine-box path move (descend) to the outlet side. When the discharge regulating means is provided on the outlet side of the medicine-box path, the medicine box having descended the medicine-box path abuts (collides) against the discharge regulating means. In this case, when the medicine box returns straight in the medicine-box path toward the inlet side, a return amount and momentum of the medicine box, impact on the medicine box, and the like are increased. Thus, it is impossible to completely deny that various failures may occur.

Based on the findings, in the medicine-box delivering apparatus according to the present invention, a protrusion is provided at a position deviated from a width-direction center of the medicine-box path on the abutment surface of the discharge regulating means provided on the outlet side of the medicine-box path. With this, the medicine box having slid down in the medicine-box path returns into a somewhat oblique direction with respect to a longitudinal direction of the medicine-box path. As a result, in comparison with those in the case where the medicine box returns straight toward the inlet side along the longitudinal direction of the medicine-box path which the medicine-box path has descended, the return amount and the momentum of the medicine box to return in the medicine-box path toward the inlet side, the impact on the medicine box, and the like after the medicine box abuts against the abutment surface can be reduced.

In the medicine-box delivering apparatus according to the present invention, when the surface of at least one of the bottom surface and the side surfaces forming each of the medicine-box paths is formed of the glide promoting member obtained through impregnation of a silicone resin with respect to polyethylene, a dynamic friction coefficient of a surface of the part formed of the glide promoting member is reduced, and hence the medicine box can slide down in and be delivered from the medicine-box path at much higher speed. Further, when projections and recesses extending in the path direction of the medicine-box path are formed on the surface formed of the glide promoting member, a contact area of the medicine box and the glide promoting member is reduced. Accordingly, dynamic friction resistance on the medicine box can be further suppressed, and hence the medicine box can slide down and be delivered at much higher speed. In addition, as described above, when the glide promoting member is used as the surface of the medicine-box path or when the projections and recesses are formed on the surface formed of the glide promoting member, it is possible to further lower the tilt angle of the medicine-box path. Accordingly, it is also possible to reduce a height of the medicine-box accommodating portion, and provide a larger number of medicine-box paths in the upper-and-lower direction so that an accommodation capacity for the medicine boxes in the medicine-box accommodating portion can be further enhanced.

In this context, as described above, in the case where the medicine-box path is tilted downward from the inlet side toward the outlet side, the discharge regulating means is provided on the outlet side of the medicine-box path, and the medicine boxes are discharged by being pushed up by the discharge regulating means from the bottom surface side of the medicine-box path, when a height of an opening region of the medicine-box path with respect to the height of the medicine box is appropriately secured above the above-mentioned discharge regulating means, the medicine boxes can be more smoothly discharged.

Based on such findings, in the medicine-box delivering apparatus according to the present invention, the opening-height adjustment means is attachable and detachable above the discharge regulating means so that the height of the opening region corresponding to a part on the outlet side of the medicine-box path can be appropriately adjusted. Thus, when the opening-height adjustment means is appropriately attached and detached, the height of the opening region corresponding to the part on the outlet side of the medicine-box path can be adjusted suitably to a size of the medicine box.

In the above-mentioned medicine-box delivering apparatus according to the present invention, when any one or both of the part on the inlet side of the loading path and the part on the inlet side of the medicine-box path has a shape of being widened in a tapered manner, the medicine boxes can be more easily put into the loading path and the medicine-box path.

Further, when the medicine-box delivering apparatus according to the present invention is additionally provided with the replenishing unit capable of replenishing medicine boxes with respect to the loading unit, medicine boxes to be replenished next with respect to the loading rack can be prepared while the loading rack provided to the loading unit is operated for the loading operation of the medicine boxes with respect to the medicine-box paths provided in the medicine-box accommodating portion. In addition, in the case where the replenishing unit is provided with the replenishing paths of the plurality of types each having a different path width and stoppers capable of stemming the medicine boxes put in the replenishing paths, when the replenishing unit in which the medicine boxes have already been prepared is connected to the loading rack which has completed the loading operation of the medicine boxes and then the stoppers are disengaged, the medicine boxes can be replenished into the loading paths provided to the loading rack. Thus, when the replenishing unit as described above is provided, the medicine boxes can be more rapidly replenished with respect to the loading unit and the medicine-box accommodating portion.

In the medicine-box delivering apparatus according to the present invention, the supply means capable of supplying the medicine boxes transported by the transport conveyor to the predetermined position is provided on the downstream side in the conveying direction of the transport conveyor for transporting the medicine boxes discharged from the medicine-box paths. With this, the medicine boxes can be collectively supplied for each prescription.

In this context, when the medicine boxes are collectively supplied by the supply means on the downstream side with respect to the transport conveyer in the conveying direction as described above, the medicine boxes transported from the transport conveyor to the supply means may locally gather in the supply means. In such a state, the medicine boxes existing in the supply means in a gathering manner may be obstacles to the medicine boxes sequentially transported by the transport conveyor. In a case where such a situation may occur, it is preferred to employ, as the supply means, means including the supply conveyor for transferring the medicine boxes transported from the transport conveyor and the butting surface provided at the position adjacent to the supply conveyor. With such a structure, when the conveying surface of the supply conveyor is actuated toward the butting surface during transfer of the medicine boxes from the transport conveyor toward the supply conveyor, the medicine boxes sequentially transferred onto the conveying surface are prevented from being locally gathered on the conveying surface.

In the case where the supply means is provided as described above, when the container arrangement portion for arranging the container for accommodating the medicine boxes for each prescription is prepared and detection with the separately provided container detection means that the container is in the container arrangement portion is set as the disengaging condition for allowing the medicine boxes to be supplied by the supply means, the medicine boxes can be reliably prepared into the container for each prescription.

Further, in the case where the container detection means is in the first detection state when the container is under the detection and in the second detection state when the container is out of the detection, when switching of a detection signal indicating the second detection state to the detection signal indicating the first detection state after completion of delivery of medicine boxes corresponding to preceding prescription, the detection signals being transmitted from the container detection means, that is, switching of the container detection means from a non-detection state to a detection state is set as the disengaging condition for allowing the medicines to be supplied by the supply means, and when the container into which the medicine boxes corresponding to the preceding prescription have been delivered is left in the container arrangement portion, the medicine boxes are not delivered until the container is replaced with another container for the subsequent prescription. Thus, when the above-mentioned disengaging conditions are set, the medicine boxes delivered as preceding prescription and the medicine boxes delivered as subsequent another prescription are reliably prevented from being delivered into the same container.

When the medicine-box delivering apparatus according to the present invention is provided with the distance-measuring means so that the distance from the inlet of each of the medicine-box paths to one of the medicine boxes, which is at a position most on the inlet side, can be measured, based on a distance measured with the distance-measuring means and a length corresponding to one of the medicine boxes loaded in each of the medicine-box paths, it is possible to perform a stock management operation for detecting a stock condition in each of the medicine-box paths, specifically, grasping the number of the medicine boxes prepared in each of the medicine-box paths, the number of the medicine boxes that can be additionally prepared in each of the medicine-box paths, and the like. Further, with such a configuration, in accordance with the stock conditions of the medicine boxes detected through the stock management operation, it is also possible to appropriately judge timings for preparing the medicine boxes and the number of the medicine boxes. Thus, when the distance-measuring means is provided as described above, the replenishing operation of the medicine boxes can be further more efficiently performed.

Further, in the medicine-box delivering apparatus according to the present invention, when the outlet-side sensor is provided on the outlet side of the medicine-box path and the inlet-side sensor is provided at the position deviated toward the inlet side of the medicine-box path with respect to the outlet-side sensor so that whether or not the medicine boxes exist at positions at which both the sensors are provided can be detected, a stock amount of the medicine boxes in each of the medicine-box paths can be judged. Further, when the box-jam judging means capable of judging whether or not the medicines are jammed in each of the medicine-box paths is provided in addition to the outlet-side sensor and the inlet-side sensor described above, failures in discharge of the medicine boxes, which are caused by box jam occurring in the medicine-box path, are prevented, and the box jam can be rapidly coped with. Further, when the box-jam judging means judges that the box jam is occurring in the condition that the medicine box is detected with the inlet-side sensor without being detected with the outlet-side sensor, the above-mentioned inlet-side sensor and outlet-side sensor can be effectively used for detecting the box jam. As a result, the apparatus structure can be further more simplified.

In the above-mentioned medicine-box delivering apparatus according to the present invention, the loading paths may be appropriately detachable from the loading unit. Similarly, in the medicine-box delivering apparatus according to the present invention, the replenishing paths may be detachable from the replenishing unit. Further, the loading paths and the replenishing paths may be separately detachable one by one from the loading unit and the replenishing unit, respectively, or detachable in units of a loading-path group including the plurality of loading paths and a replenishing-path group including the plurality of replenishing paths. With such a structure, the medicine boxes can be loaded under a state in which the loading paths and the replenishing paths are appropriately detached, and hence operations of preparing the medicine boxes can be further more efficiently performed. In addition, the unit groups may be rearranged based on combinations of the loading paths and the replenishing paths in accordance with the widths of the medicines used by a user. In this way, the unit groups are flexible with practical uses by the user.

In the case where the medicine-box delivering apparatus according to the present invention is provided as described above with the medicine-box preparation portion and the medicine-box collection portion capable of collecting the medicine boxes prepared in the medicine-box preparation portion without through the medicine-box paths, when the medicine boxes include the medicine boxes erroneously prepared at the points other than the specified points in the medicine-box preparation portion, the medicine boxes thus erroneously prepared may be collected by the medicine-box collection portion without being loaded into the medicine-box paths. Further, in the case where the medicine boxes include the medicine boxes erroneously prepared at the points other than the specified points, even when other medicine boxes are replenished with respect to the points at which the medicine boxes thus erroneously prepared exist, the other medicine boxes are collected without being loaded into the medicine-box paths. Thus, in the case where the medicine boxes include the medicine boxes erroneously prepared at the points other than the specified points, preparation of the medicine boxes to those points is prohibited, and thus useless operations of additionally preparing medicine boxes which are only to be collected are avoided, and a collection amount of the medicine boxes can be reduced.

The medicine-box delivering apparatus according to the present invention is capable of performing separate prescription for delivering the medicine boxes corresponding to one prescription in the plurality of times of separate delivery operations. With this configuration, it is possible to cope with the case where the number of the medicine boxes prescribed as one prescription is larger than the number of the medicine boxes that can be delivered in a single delivery operation. Further, when the medicine-box delivery capacity that can be exerted in a single delivery operation is defined based on the types and the numbers of the medicine boxes, it is possible to easily judge whether or not the separate prescription is required to be performed. Specifically, it is possible to judge that the separate prescription needs to be performed when the following condition (Condition 1) is satisfied: when the medicine boxes contained in one prescription are of a single type, the number of prescribed medicine boxes is larger than the number exceeding a defined delivery capacity. Further, it is also possible to judge that the separate prescription needs to be performed when the following condition (Condition 2) is satisfied: also when the medicine boxes contained in one prescription are of a plurality of types, on a premise that medicine boxes of one type, which are contained in the one prescription, are delivered together with medicine boxes of another type, which are contained in the one prescription, a delivery capacity remaining after delivery of the medicine boxes of the another type is smaller than a delivery capacity required for delivery of the medicine boxes of the one type.

### Brief Description of Drawings

[FIG. 1] FIG. 1 is a perspective view of a medicine-box delivering apparatus according to an embodiment of the present invention.
[FIG. 2] FIG. 2 is a partially-broken perspective view of the medicine-box delivering apparatus illustrated in FIG. 1.
[FIG. 3] FIG. 3 is a side view illustrating an inside of a casing constituting the medicine-box delivering apparatus illustrated in FIG. 1.
[FIG. 4] FIG. 4 is a rear view of the medicine-box delivering apparatus illustrated in FIG. 1.
[FIG. 5] FIG. 5 is a plan view illustrating a structure of a medicine-box path.
[FIG. 6] FIG. 6 is a front view illustrating a state in which a medicine-box accommodating portion is viewed from an inlet side of the medicine-box paths.
[FIG. 7] FIG. 7 is a perspective view of discharge regulating means.
[FIGS. 8] FIGS. 8 are sectional views illustrating an internal structure of the discharge regulating means: FIG. 8(a) illustrates a state in which a medicine box is discharged; and FIG. 8(b) illustrates a state in which the medicine box stands by for discharge.
[FIGS. 9] FIG. 9 is a front view illustrating a state in which the vertically arrayed medicine-box paths are viewed from an outlet side.
[FIG. 10] FIG. 10 is a side view illustrating a state in which opening-height adjustment means is attached to the medicine-box path.
[FIG. 11] FIG. 11 is a perspective view of a loading rack.
[FIG. 12] FIG. 12 is a front view illustrating a state in which the loading rack is viewed from a loading inlet side.
[FIG. 13] FIG. 13 is a plan view illustrating structures of a loading path and a replenishment path.
[FIG. 14] FIG. 14 is a sectional view illustrating an internal structure of a supply unit.
[FIG. 15] FIG. 15 is a perspective view of a replenishing unit.
[FIG. 16] FIG. 16 is a block diagram illustrating a control system configured mainly by a control device as a core.
[FIGS. 17] FIG. 17(a) is a schematic perspective view of jam clearing means, and FIG. 17(b) is a front view of the jam clearing means.
[FIG. 18] FIG. 18 is a perspective view illustrating a state in which the jam clearing means is viewed from a front surface side.
[FIG. 19] FIG. 19 is a perspective view illustrating a state in which the jam clearing means is viewed from a rear surface side.
[FIGS. 20] FIG. 20(a) is a side view illustrating a state in which a glide promoting member is attached to a bottom surface of the medicine-box path, and FIG. 20(b) is a perspective view of the glide promoting member.
[FIG. 21] FIG. 21 is a perspective view illustrating a modified example of the discharge regulating means.
[FIGS. 22] FIGS. 22 are explanatory diagrams illustrating an operating state of the discharge regulating means: FIG. 22(a) is an explanatory diagram illustrating the state in which the medicine box stands by for the delivery; and FIG. 22(b) is an explanatory diagram illustrating a state at a timing at which the medicine box is delivered.
[FIGS. 23] FIG. 23(a) is an exploded perspective view of a drive mechanism employed in the discharge regulating means illustrated in FIG. 21, and FIG. 23(b) is a perspective view of the drive mechanism.
[FIG. 24] FIG. 24 is a perspective view of a medicine-box delivering apparatus according to a modified embodiment of the present invention.
[FIG. 25] FIG. 25 is a side view illustrating an internal structure of the medicine-box delivering apparatus illustrated in FIG. 24.
[FIG. 26] FIG. 26 is a side view illustrating an example of medicine-box collecting means
[FIGS. 27] FIG. 27(a) is a block diagram showing a configuration of a management system, and FIG. 27(b) is a block diagram showing a modified example of the management system of FIG. 27(a).
[FIG. 28] FIG. 28 is a display screen showing an example of a basic user interface.
[FIG. 29] FIG. 29 is a display screen showing an example of a charging guide interface.
[FIG. 30] FIG. 30 is a display screen showing an example of a delivery management interface.
[FIG. 31] FIG. 31 is a display screen showing an example of a simple-issuance interface.
[FIGS. 32] FIGS. 32 are display screens showing an example of an actual-stock calculation interface.
[FIG. 33] FIG. 33 is a display screen showing an example of a medicine-box master interface.
[FIGS. 34] FIGS. 34 are perspective views of a path unit: FIG. 34(a) illustrates a state in which the path unit is viewed from a top surface side, and FIG. 34(b) illustrates a state in which the path unit is viewed from a rear surface side.
[FIG. 35] FIG. 35 is a perspective view of bounce suppressing means.
[FIGS. 36] FIGS. 36 are schematic side views illustrating a positional relation of the bounce suppressing means, the medicine-box path, and the medicine box: FIG. 36(a) illustrates a state prior to a delivery operation of the medicine box; and FIG. 36(b) illustrates a state during the delivery operation of the medicine box.
[FIGS. 37] FIGS. 37(a) and 37(b) are explanatory diagrams each illustrating a relation of a stock condition in the medicine-box path and a medicine box prepared in the replenishing unit.
[FIG. 38] FIG. 38 is a perspective view illustrating a modified example of the supply unit.
[FIGS. 39] FIGS. 39(a) and 39(b) are explanatory diagrams each illustrating a state assumed at the time of putting the medicine boxes into the loading rack.
[FIG. 40] FIG. 40 is a main-part enlarged perspective view illustrating a state in which a jumping-out control unit is mounted to the loading rack.
[FIGS. 41] FIGS. 41 are main-part enlarged side views illustrating the state in which the jumping-out control unit is mounted to the loading rack: FIG. 41(a) illustrates a state in which a jumping-out suppression member is closed; and FIG. 41(b) illustrates a state in which the jumping-out suppression member is opened.
[FIG. 42] FIG. 42 is a perspective view of a stopper.
[FIGS. 43] FIGS. 43 are side views illustrating a state in which the stopper illustrated in FIG. 42 is mounted to the medicine-box path: FIG. 43(a) illustrates a state in which two or more medicine boxes are left; and FIG. 43(b) illustrates a state in which one medicine box is left.
[FIG. 44] FIG. 44 is a perspective view illustrating a modified example of the stopper.
[FIGS. 45] FIGS. 45 are side views illustrating a state in which the stopper illustrated in FIG. 44 is mounted to the medicine-box path: FIG. 45(a) illustrates the state in which two or more medicine boxes are left; and FIG. 45(b) illustrates the state in which one medicine box is left.
[FIGS. 46] FIGS. 46 are perspective views illustrating a state in which a modified example of the replenishing unit is viewed from a front surface side: FIG. 46(a) illustrates a state in which a shutter is closed; and FIG. 46(b) illustrates a state in which the shutter is being opened.
[FIGS. 47] FIG. 47(a) is an explanatory diagram in which the shutter constituting the replenishing unit illustrated in FIGS. 46 is viewed from a rear surface side, and FIG. 47(b) is a sectional view illustrating a vicinity of an abutment piece of FIG. 47(a).
[FIGS. 48] FIG. 48(a) is a front view of the medicine box with a swelling lid, and FIG. 48(b) is an explanatory diagram illustrating a difference between a state in which permanent medicine boxes with swelling lids are arrayed in the medicine-box path and a state in which medicine boxes with completely closed lids are arrayed in the medicine-box path.
[FIG. 49] FIG. 49 is an image view showing an example of a manipulation interface.
[FIG. 50] FIG. 50 is an image view showing an example of a medicine-box-path master interface.
[FIG. 51] FIG. 51 is an image view showing an example of a charging-unit non-use setting interface.

### Description of Embodiment

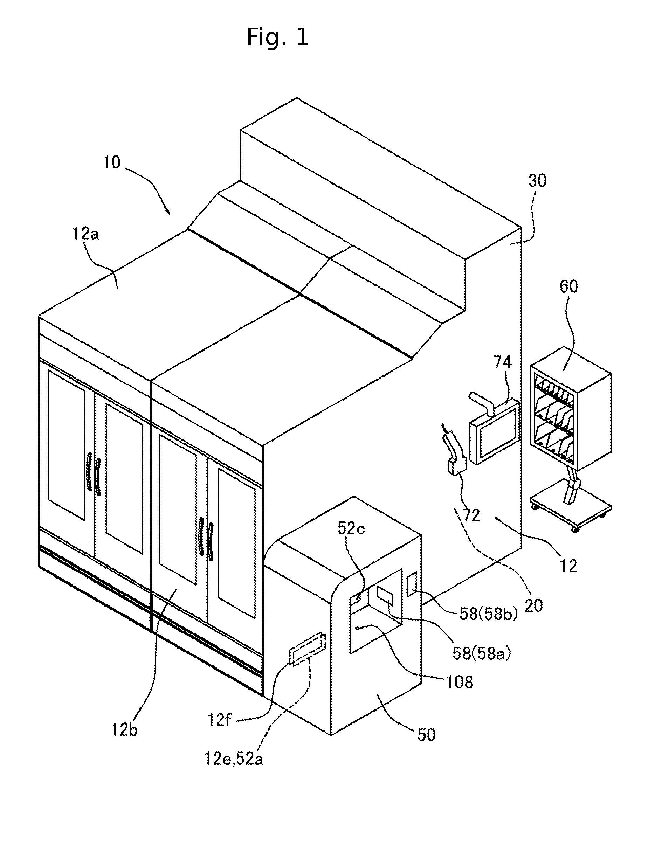

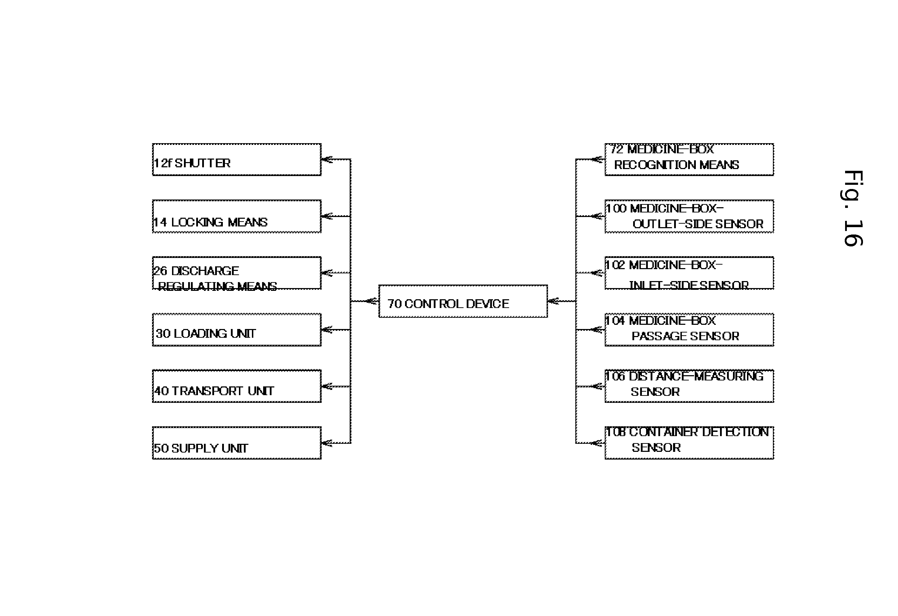

Next, detailed description is made of a medicine-box delivering apparatus 10 according to an embodiment of the present invention with reference to the figures. The medicine-box delivering apparatus 10 is an apparatus for accommodating a large number of medicine boxes each accommodating medicines, appropriately selecting the medicine boxes according to prescription, and then delivering the same. As illustrated in FIGS. 1 to 4, a medicine-box accommodating portion 20, a loading unit 30, and a transport unit 40 are provided in an apparatus main body 12 of the medicine-box delivering apparatus 10. Further, the medicine-box delivering apparatus 10 includes a supply unit 50 connected to the apparatus main body 12, and a replenishing unit 60 appropriately connectable to the apparatus main body 12. Still further, the medicine-box delivering apparatus 10 includes a control device 70 configured as illustrated in FIG. 16. In the following, description is made of each of the portions of the medicine-box delivering apparatus 10.

### <External structure of apparatus main body 12>

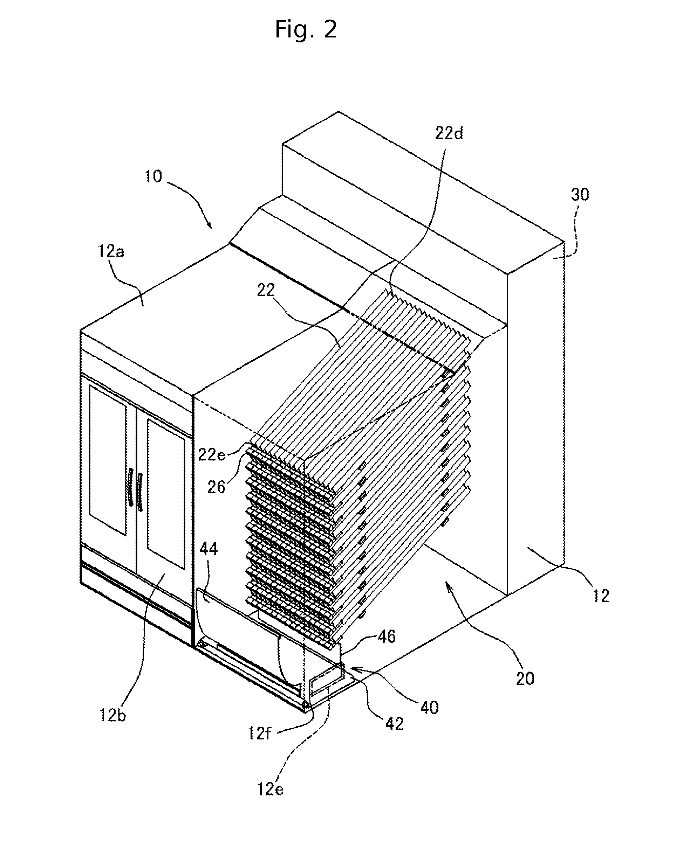

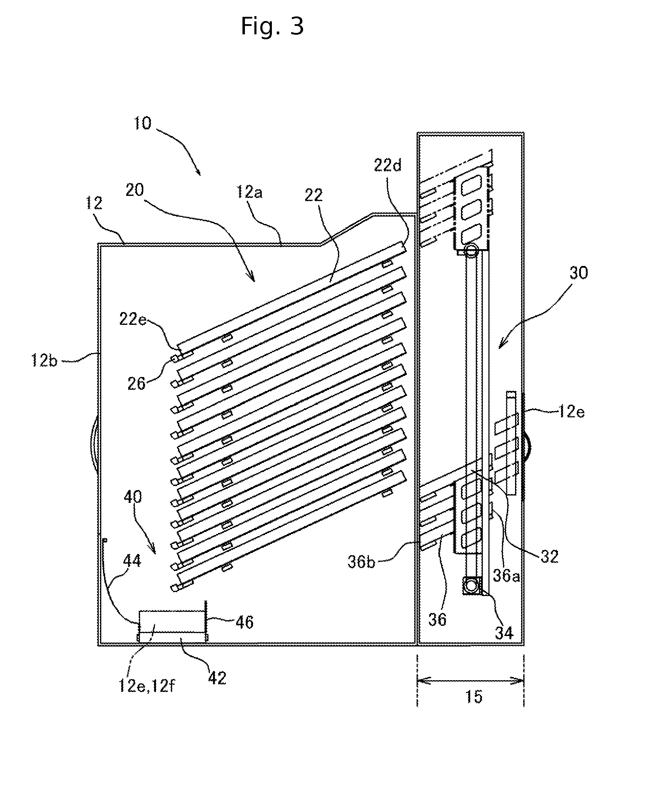

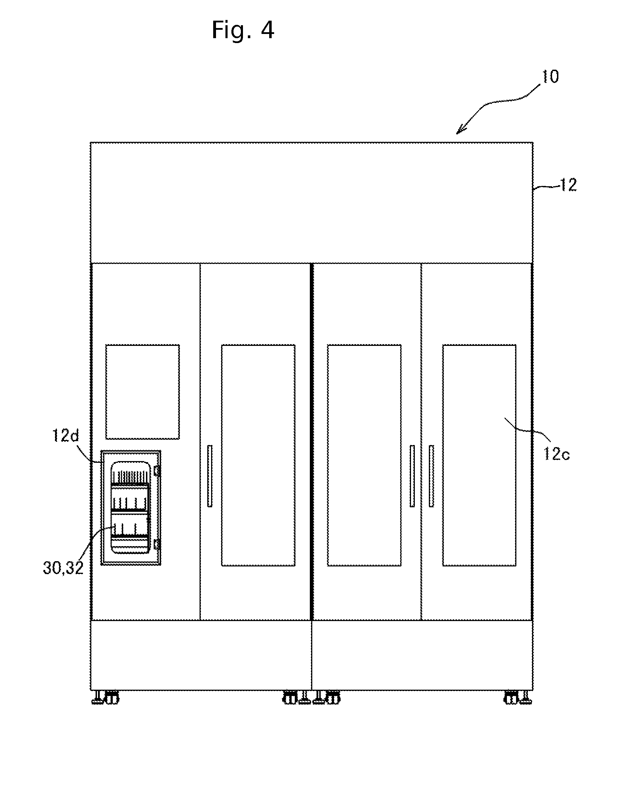

As illustrated in FIGS. 1 to 4, the exterior of a main portion of the apparatus main body 12 is formed of a metal casing 12a. The apparatus main body 12 includes doors 12b and 12c respectively on a front surface side and a rear surface side of the casing 12a. The doors 12c provided on the rear surface side of the casing 12a can be locked with locking means 14 (refer to FIG. 16) that can be locked and unlocked through energization, such as a separately-provided electromagnetic lock. Thus, the doors 12c are openable and closable only when a main power supply (not shown) of the medicine-box delivering apparatus 10 is in an ON state. Further, as illustrated in FIG. 4, on the rear surface side of the casing 12a, there is provided a replenishing door 12d which is opened and closed at the time of replenishing medicine boxes MB with respect to a loading rack 32 (described in detail below) of the loading unit 30. Further, as illustrated in FIGS. 2 and 3, with respect to a side surface of the casing 12a, there are provided a discharge port 12e and a shutter 12f capable of opening and closing the discharge port 12e. When the shutter 12f is opened, the medicine-box delivering apparatus 10 is capable of discharging the medicine boxes MB discharged and collected according to prescription information pieces in the casing 12a to the supply unit 50 side.

### <Medicine-box accommodating portion 20>

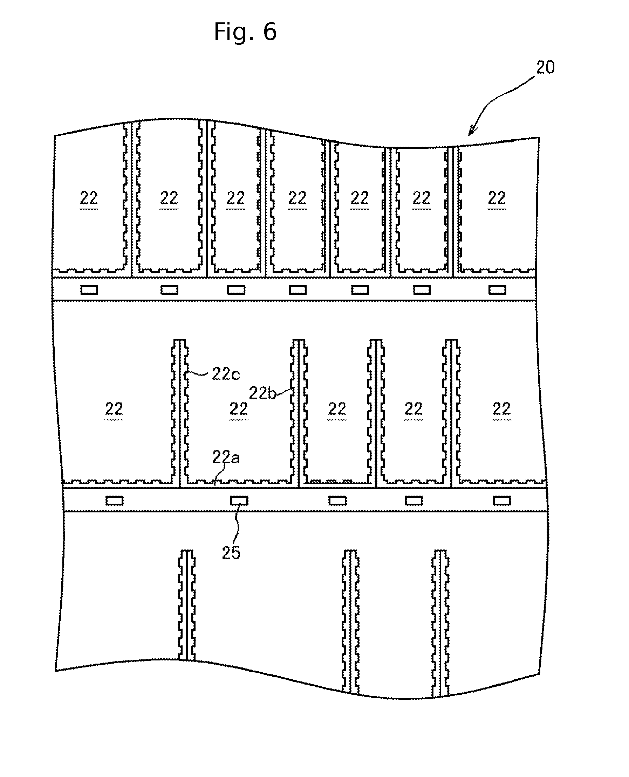

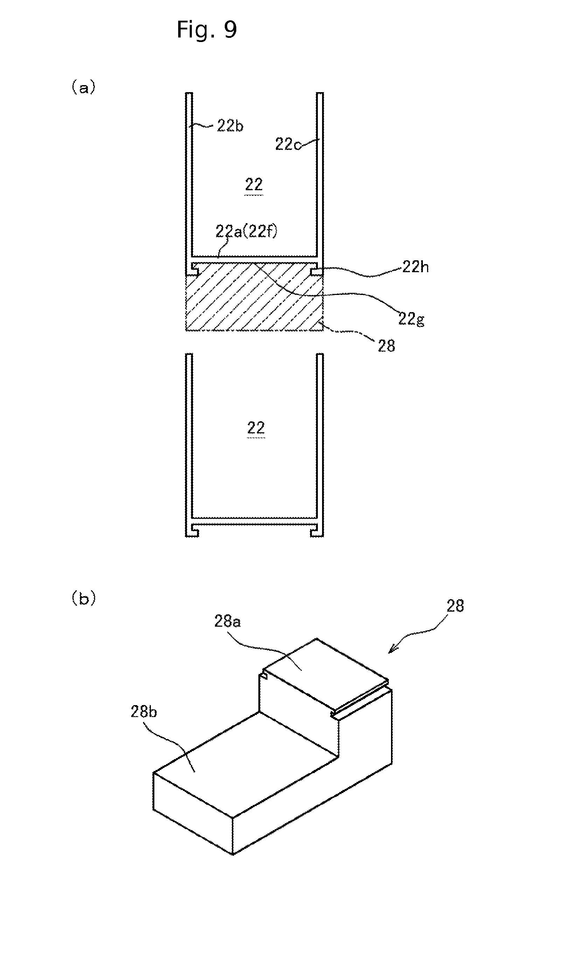

The medicine-box accommodating portion 20 is provided to accommodate a large number of the medicine boxes MB and discharge the same according to prescription. As illustrated in FIGS. 2 and 6, a plurality of medicine-box paths 22 are vertically and laterally provided in front view in the medicine-box accommodating portion 20. As illustrated in FIGS. 6 and 9, each of the medicine-box paths 22 is formed of a member having a gutter-like shape, such as what is called a channel member. Each of the medicine-box paths 22 has a bottom surface 22a and side surfaces 22b and 22c extending parallel to each other in a longitudinal direction, and is opened at both longitudinal ends.

As illustrated in FIGS. 2 and 3, the medicine-box paths 22 are arranged so that the longitudinal direction thereof corresponds to a depth direction of the apparatus main body 12, that is, arranged to be directed from the front surface side to the rear surface side. In each of the medicine-box paths 22, an open part positioned on the rear surface side of the apparatus main body 12 is an inlet 22d, and an open part positioned on the front surface side is an outlet 22e. The medicine-box path 22c is obliquely installed with a falling gradient from the inlet 22d side toward the outlet 22e side. Specifically, the medicine-box path 22 is tilted downward at approximately 25 degrees from the inlet 22d side toward the outlet 22e side. Further, on an inner surface of each of the bottom surface 22a and the side surfaces 22b and 22c of the medicine-box path 22, there are formed projections and recesses (not shown) extending straight in the longitudinal direction of the medicine-box path 22. Thus, a contact area of the medicine box MB passing inside the medicine-box path 22 and the bottom surface 22a as well as the side surfaces 22b and 22c is small, and hence the medicine box MB can smoothly pass without receiving a large frictional force.

A plurality of types of the medicine-box paths 22 each having a different path width (clearance between the side surfaces 22b and 22c) in accordance with thicknesses of the medicine boxes MB to be delivered with use of the medicine-box delivering apparatus 10 are provided in the medicine-box accommodating portion 20. Further, a length from the inlet 22d to the outlet 22e of each of the medicine-box paths 22 is set so that a large number of the medicine boxes MB can be arrayed and arranged. In other words, based on the length of the medicine-box path 22 and a length of the medicine box MB to be loaded into the medicine-box path 22, the number of the medicine boxes MB that can be accommodated in each of the medicine-box paths 22 is determined. Specifically, on a premise that the length of the medicine-box path 22 is L1 and the length of the medicine box MB to be accommodated in the medicine-box path 22 is L2, the maximum number of the medicine boxes MB that can be accommodated in the medicine-box path 22 is determined by L1/L2 (the figures below the decimal point are omitted).

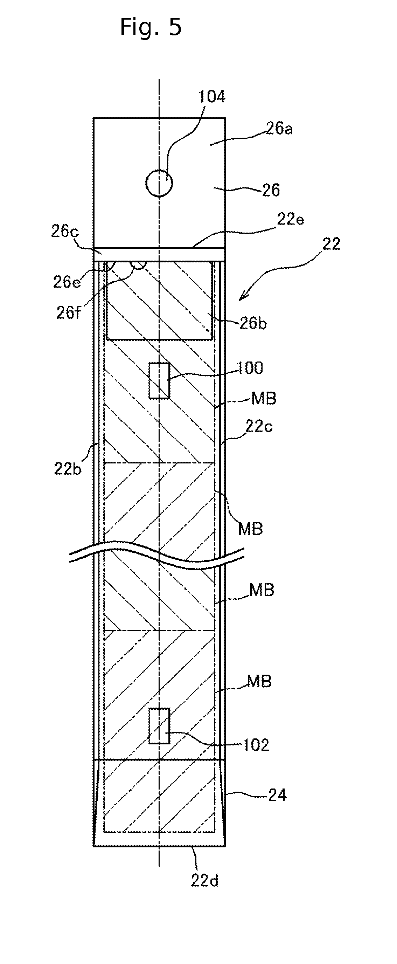

As illustrated in FIG. 5, an inlet member 24 is provided on the inlet 22d side of the medicine-box path 22. Further, as illustrated in FIG. 6, loading instruction means 25 is provided on the inlet 22d side of the medicine-box path 22 and at a position on a lower side of the medicine-box path 22. The inlet member 24 is provided to widen a part on the inlet 22d side of the medicine-box path 22 so that the medicine boxes MB can be more easily loaded into the medicine-box path 22.

In more detail, the side surfaces 22b and 22c of the medicine-box path 22 are formed to become thinner toward the inlet 22d side at a part provided with the inlet member 24. Further, the inner surfaces (surfaces facing the inside of the medicine-box path 22) of the side surfaces 22b and 22c of the medicine-box path 22 are formed to be widened in a tapered manner toward the inlet 22d side of the medicine-box path 22. In much more detail, the inner surfaces of the side surfaces 22b and 22c are tilted at approximately 1 to 5 degrees with respect to outer surfaces of the side surfaces 22b and 22c. With this, an opening width at the inlet 22d of the medicine-box path 22 is slightly larger than opening widths at a midway part and a part corresponding to the outlet 22e of the medicine-box path 22. An opening width at a part provided with the inlet member 24 in the medicine-box path 22 gradually increases toward an end portion on the inlet 22d side. Further, the outer surfaces of the side surfaces 22b and 22c of the medicine-box path 22 are substantially flush with each other at a part to which the inlet member 24 is mounted and at other parts. Thus, hardly any gap is formed between the medicine-box paths 22 and 22 arrayed side by side.

Further, the loading instruction means 25 is provided to issue instructions to an operator as to which of the plurality of medicine-box paths 22 a medicine box MB to be loaded into the medicine-box accommodating portion 20 is loaded into. In this embodiment, the loading instruction means 25 includes a light emitting diode (LED), and is capable of emitting light when the medicine box MB is directly loaded into the medicine-box accommodating portion 20. In this way, the instructions can be issued to the operator as to which of the medicine-box paths 22 the medicine box MB is loaded into.

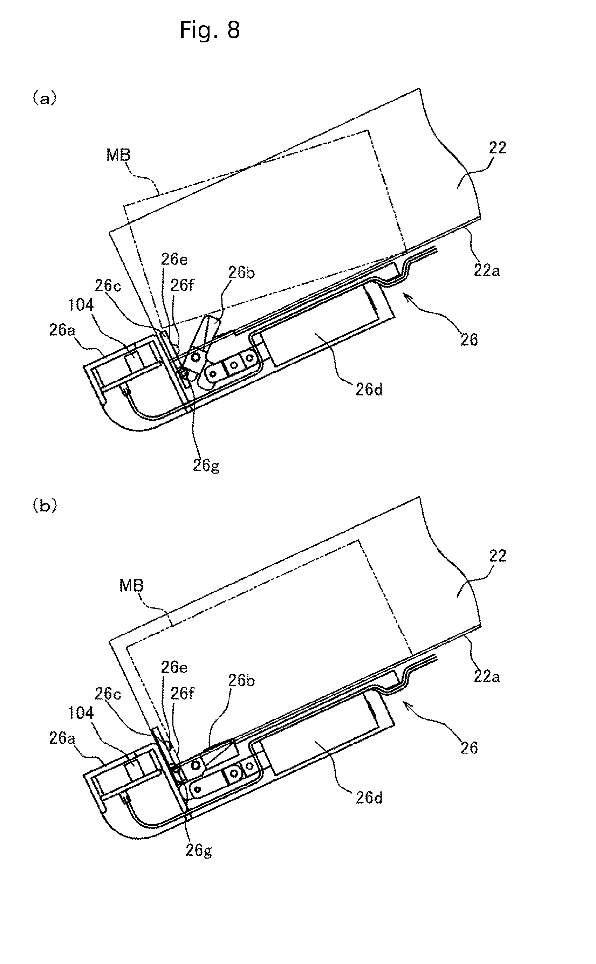

As illustrated, for example, in FIGS. 2, 3, and 5, discharge regulating means 26 is attached onto the outlet 22e side of the medicine-box path 22. The discharge regulating means 26 is a resin member, and as illustrated in FIGS. 8, includes a main-body portion 26a, a push-up piece 26b, and a receiving piece 26c. Further, the discharge regulating means 26 includes a power source 26d for actuating the push-up piece 26b and the receiving piece 26c, the push-up piece 26b and the receiving piece 26c being capable of moving in association with each other by receiving power from the power source 26d.

As illustrated in FIGS. 5 and 8, under the state in which the discharge regulating means 26 is attached to the medicine-box path 22, the main-body portion 26a is positioned at a leading-end part on the outlet 22e side of the medicine-box path 22 and projects upward (into the medicine-box path 22) from the bottom surface 22a side. Thus, the main-body portion 26a is an obstacle hindering passage of the medicine boxes MB prepared in the medicine-box path 22. As a result, the medicine boxes MB prepared in the medicine-box path 22 are not discharged from the outlet 22e only by descending the medicine-box path 22 from the inlet 22d side to the outlet 22e side, and are discharged only by climbing over the main-body portion 26a.

The push-up piece 26b is a member for discharging the medicine boxes MB to be discharged from the outlet 22e of the medicine-box path 22 by pushing up the same from the bottom surface 22a side as illustrated in FIG. 8(a). That is, the push-up piece 26b has a function of helping the medicine box MB prepared at a position most on the outlet 22e side in the medicine-box path 22 to climb over the above-mentioned main-body portion 26a. Further, the receiving piece 26c is a member which slides in the upper-and-lower direction along the above-mentioned main-body portion 26a. The receiving piece 26c is a plate-like member having a function of a stopper for stemming the medicine boxes MB in the medicine-box path 22 such that the medicine box MB most on the outlet 22e side in the medicine-box path 22 is not erroneously discharged from the medicine-box path 22. The receiving piece 26c has a surface which abuts against a side surface of the medicine box MB having passed the medicine-box path 22 (abutment surface 26e).

More detailed description is made of the push-up piece 26b and the receiving piece 26c. The push-up piece 26b is a piece-like member capable of being actuated on an upstream side relative to the above-mentioned main-body portion 26a in the medicine-box path 22. Normally, as illustrated in FIG. 8(b), the push-up piece 26b is substantially flush with the bottom surface 22a of the medicine-box path 22. The push-up piece 26b is supported so as to be turnable about a support shaft 26g by receiving the power from the power source 26d such as what is called a cylinder. Through activation of the power source 26d, as illustrated in FIG. 8(a), the push-up piece 26b can be risen from the bottom surface 22a. When the push-up piece 26b is risen, as illustrated by two-dot chain lines in FIG. 8(a), the medicine box MB positioned on the push-up piece 26b, that is, positioned most on the outlet 22e side in the medicine-box path 22 is pushed up.

Further, as illustrated in FIG. 8(b), normally, the receiving piece 26c projects upward relative to the main-body portion 26a constituting the above-mentioned discharge regulating means 26. Thus, the receiving piece 26c functions as a stopper for stemming the medicine boxes MB loaded in the medicine-box path 22 so as to prevent the medicine boxes MB from being erroneously discharged. Meanwhile, when the power source 26b is activated and the above-mentioned push-up piece 26b turns about the support shaft 26f, as illustrated in FIG. 8(a), the receiving piece 26c withdraws up to the same position as that of an upper end of the main-body portion 26a or lower (bottom surface 22a side) in conjunction with a behavior of the push-up piece 26b. In this way, the medicine boxes MB pushed up by the push-up piece 26b can be smoothly discharged.

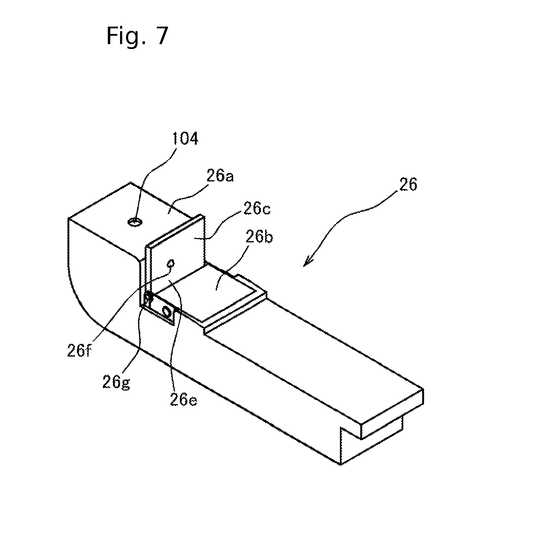

Further, as illustrated in FIGS. 5, 7, and 8, a protrusion 26f may be provided on the surface of the receiving piece 26c (abutment surface 26e). Under the state in which the discharge regulating means 26 is attached to the medicine-box path 22, the protrusion 26f is provided at a position deviated from a width-direction center of the medicine-box path 22. Thus, when the side surface of the medicine box MB having passed (descended) the medicine-box path 22 abuts (collides) against the protrusion 26f, a counteracting force in a direction somewhat tilted with respect to the longitudinal direction of the medicine-box path 22 acts on the medicine box MB.
In this embodiment, the opening width of the medicine-box path 22 is of a size just allowing passage of the medicine box MB. Thus, even when the medicine box MB should obliquely return in the medicine-box path 22 by receiving the counteracting force as described above, the medicine box MB gets stuck between the side surfaces 22b and 22c of the medicine-box path 22, and can hardly return. Therefore, a return amount and momentum of the medicine box MB to return to the inlet 22d side, impact on the medicine box MB, and the like after the medicine box MB having passed (descended) the medicine-box path 22 abuts against the abutment surface 26e of the receiving piece 26c are smaller than those in a case where the medicine box MB returns straight in the medicine-box path 22.

Through operations as described above of the above-mentioned portions, the discharge regulating means 26 is capable of discharging one by one the medicine boxes MB in the medicine-box path 22 sequentially from those on the outlet 22e side. In more detail, when the power source 26 is activated and the medicine box MB most on the outlet 22e side is pushed up by the push-up piece 26b as illustrated in FIG. 8(a), an outward force into a push-up direction acts on the medicine box MB. Further, owing to influences of own weight and weights of other medicine boxes MB arrayed on the upstream side of the medicine-box path 22, another force into an obliquely downward direction (outlet 22e side) along the medicine-box path 22 acts on the medicine box MB pushed up by the push-up piece 26b. Further, when the push-up piece 26b is actuated, the receiving piece 26c withdraws onto the bottom surface 22a side of the medicine-box path 22, with the result that the receiving piece 26c is lowered to a position lower than a top surface of the main-body portion 26a. With this, the medicine box MB pushed up by the push-up piece 26b is discharged from the outlet 22e after climbing over the main-body portion 26a and the receiving piece 26c with the outward force which acts into the push-up direction and the outward force which acts into a direction of the outlet 22e, the outward forces acting synergistically with each other.

Immediately after the push-up piece 26b is actuated as described above so as to push up the medicine box MB, the push-up piece 26b returns into an original state, that is, a state of being substantially flush with the bottom surface 22a of the medicine-box path 22 as illustrated in FIG. 8(b). Further, in conjunction therewith, the receiving piece 26c returns into a state in which the upper-end part thereof projects above the top surface of the main-body portion 26a, that is, enters a state of stemming another medicine box MB having been adjacent on the upstream side (inlet 22d side) of the medicine-box path 22 with respect to the discharged medicine box MB.

The medicine-box accommodating portion 20 is formed of the medicine-box paths 22 structured as described above and arrayed vertically and laterally. Thus, as illustrated, for example, in FIGS. 9, except those of medicine-box paths 22 existing on an uppermost stage, a top surface of each of the medicine-box paths 22 existing thereunder is formed of the bottom surface 22a of another medicine-box path 22 adjacent above. In this embodiment, the top surface of each of the medicine-box paths 22, that is, the bottom surface 22a of the another medicine-box path 22 adjacent above (hereinafter, also referred to as "top surface 22f" when necessary) is provided with slide-in grooves 22h extending along the longitudinal direction of the medicine-box path 22.

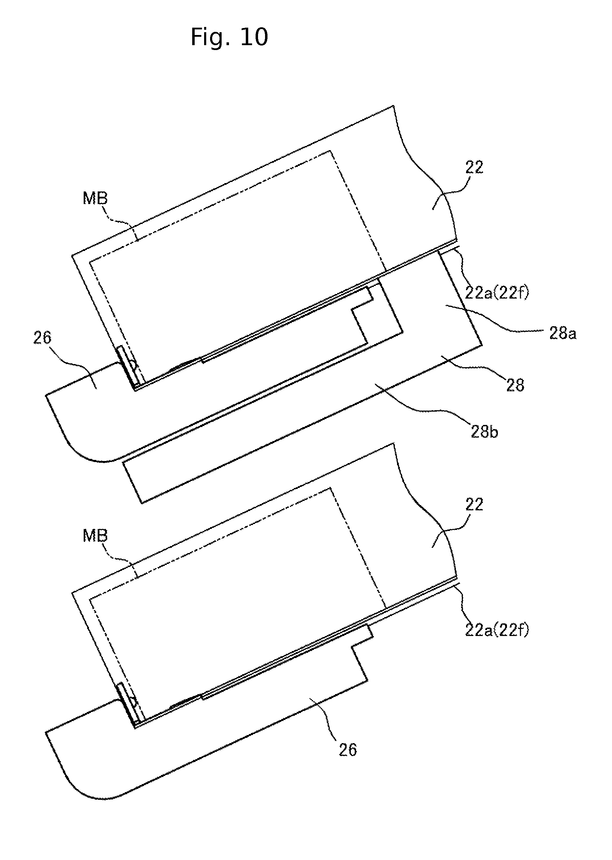

The slide-in grooves 22h have a function as an attachment portion 22g for attaching opening-height adjustment means 28 as illustrated in FIG. 9(b) by sliding-in the same from the outlet 22e side. The opening-height adjustment means 28 is formed of a fixation portion 28a and a block-like height adjustment portion 28b integrated with each other. As illustrated in FIG. 10, when the fixation portion 28a is slid into the slide-in grooves 22h so that the opening-height adjustment means 28 is attached, the height adjustment portion 28b is supported in a cantilever manner. Further, when the opening-height adjustment means 28 is attached in this way, the height adjustment portion 28b is arranged along a bottom surface of the discharge regulating means 26, and projects from the top surface 22f side to the bottom surface 22a side of the medicine-box path. As a result, a height of an opening region forming the outlet 22e of the medicine-box path 22 is reduced. Further, when other opening-height adjustment means 28 different in height are prepared, the height of the opening region of the outlet 22e can be appropriately adjusted.

The medicine-box path 22 is provided with sensors at each part for detecting the medicine box MB. Specifically, as illustrated in FIG. 5, a medicine-box-outlet-side sensor 100 is provided on the outlet 22e side of the medicine-box path 22, and a medicine-box-inlet-side sensor 102 is provided on the inlet 22d side. With those sensors 100 and 102, in each of the medicine-box paths 22, detection can be performed as to whether or not the medicine box MB exists on the outlet 22e side or the inlet 22d side. Further, the main-body portion 26a forming the discharge regulating means 26 is provided with a medicine-box passage sensor 104. When the medicine-box passage sensor 104 detects the medicine box MB passing above the main-body portion 26a, it can be confirmed that the medicine box MB has been discharged from the outlet 22e of the medicine-box path 22.

### <Loading unit 30>

As illustrated in FIG. 3, the loading unit 30 is provided at a position adjacent on the inlet 22d side with respect to the large number of the medicine-box paths 22 constituting the medicine-box accommodating portion 20, for the purpose of loading the medicine boxes MB from the inlet 22d sides into the medicine-box paths 22. The loading unit 30 includes the loading rack 32 and a drive device 34. Although normally standing by at a position corresponding to the replenishing door 12d provided to the rear surface of the casing 12, by being actuated, the loading rack 32 of the loading unit 30 can be freely moved into the vertical and the lateral directions within a region on the inlet 22d sides of the medicine-box paths 22.

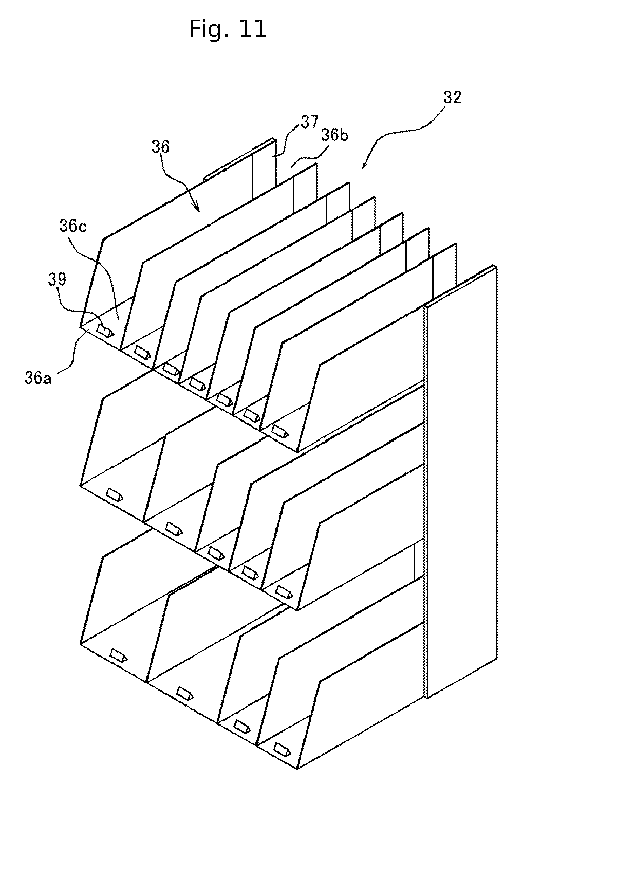

As illustrated in FIG. 11, the loading rack 32 has a structure in which a plurality of loading paths 36 are arrayed vertically and laterally and integrated with each other in front view. A length L3 of each of the loading paths 36 is sufficiently shorter than the above-mentioned length L1 of each of the medicine-box paths 22 (L3<<L1). Specifically, each of the loading paths 36 is set to have a length by which several medicine boxes MB can be put in. Further, similarly to the medicine-box paths 22 forming the above-mentioned medicine-box accommodating portion 20, a plurality of types of the loading paths 36 each having a different path width in accordance with the thicknesses of the medicine boxes MB to be delivered with use of the medicine-box delivering apparatus 10 are provided to the loading rack 32. Sizes and types of the path widths of the loading paths 36 are similar to sizes and types of the path widths of the medicine-box paths 22 provided in the medicine-box accommodating portion 20.

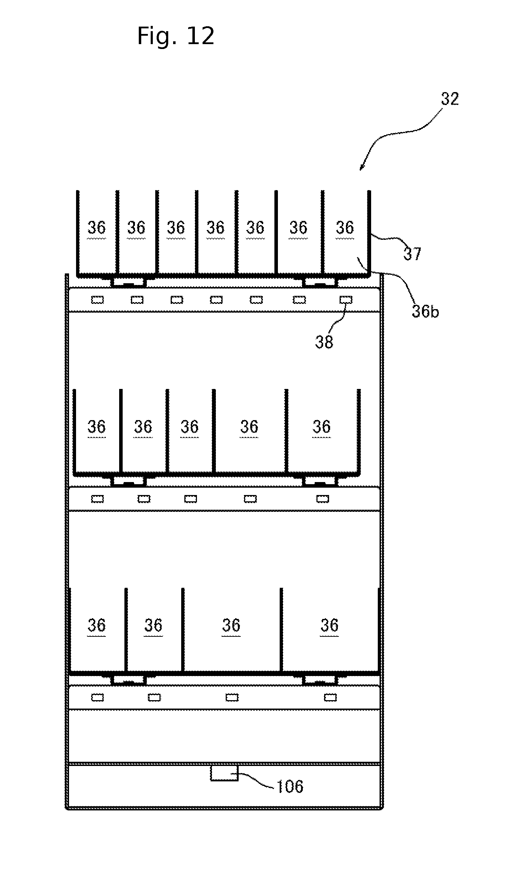

Similarly to the medicine-box path 22, the loading path 36 is formed of what is called a channel member or the like having a gutter-like shape. The loading path 36 is opened at both longitudinal end portions. The end portion on a medicine-box accommodating portion 20 side of the loading path 36 functions as a loading outlet 36a for ejecting the medicine boxes MB to be loaded into each of the medicine-box paths 22. Further, as illustrated in FIG. 12, an end portion on an opposite side (door 12c side) with respect to the loading outlet 36a serves as a loading inlet 36b for replenishing the medicine boxes MB into each of the loading paths 36. The loading path 36 is tilted downward from the loading inlet 36b side toward the loading outlet 36a side.

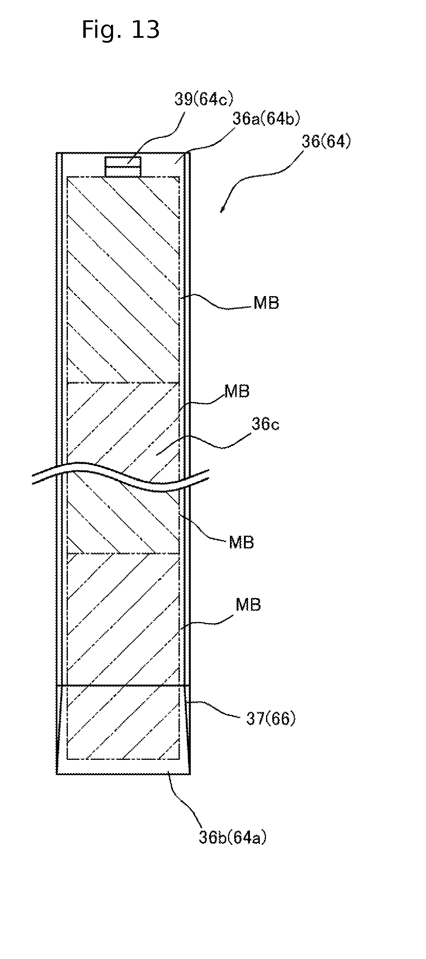

As illustrated in FIGS. 12 and 13, an inlet member 37 and replenishment instruction means 38 are provided on the loading inlet 36b side of the loading path 36. The inlet member 37 has the same structure as that of the inlet member 24 attached to the inlet 22d side of the medicine-box path 22 in the above-mentioned medicine-box accommodating portion 20. That is, as illustrated in FIG. 13, the inlet member 37 is provided to widen a part on the loading inlet 36b side of the loading path 36 so that the medicine boxes MB can be more easily replenished. An opening width at a part to which the inlet member 37 is attached in the loading path 36 is widened in a tapered manner toward the loading inlet 36b side.

The replenishment instruction means 38 indicates an operator which of the plurality of loading paths 36 provided in the loading unit 30 a medicine box MB to be replenished is replenished into. Similarly to the above-mentioned loading instruction means 25, the replenishment instruction means 38 includes a light emitting diode (LED) and emits light when corresponding one of the plurality of loading paths 36 is assigned as a loading path 36 into which the medicine box MB is to be replenished.

Further, as illustrated in FIGS. 11 and 13, a stopper 39 is provided on the loading outlet 36a side of the loading path 36. The stopper 39 normally projects upward from a bottom surface 36c of the loading path 36, and withdraws downward relative to the bottom surface 36c when being actuated by receiving power from a power source (not shown). Thus, when the medicine box MB is replenished into the medicine-box path 36 under a state in which the stopper 39 projects upward, the medicine box MB is stuck by the stopper 39, with the result that the medicine box MB is stocked. When the power source (not shown) is activated so that the stopper 39 is withdrawn downward relative to the bottom surface 36c (disengaged state) at a timing at which the medicine box MB is to be discharged from the loading path 36, the medicine box MB stocked in the loading path 36 descends owing to its own weight along a tilt of the loading path 36 and is discharged from the loading outlet 36a. Thus, after the loading paths 36 provided to the loading rack 32 are replenished with the medicine boxes MB, when the loading rack 32 is moved to a position at which the loading outlet 36a of each of the loading paths 36 faces the inlet 22d of the medicine-box path 22 into which the medicine boxes MB prepared in the loading paths 36 are to be loaded and then the stoppers 39 are disengaged, the medicine boxes MB can be loaded from the loading paths 36 from the loading rack 32 into the medicine-box paths 22 of the medicine-box accommodating portion 20.

Further, the loading rack 32 is provided with a distance-measuring sensor 106 capable of detecting a distance from a measurement object. Thus, when the drive device 34 is actuated so as to move the loading rack 32 on the inlet 22d sides of the medicine-box paths 22, a distance between the inlet 22d and the medicine box MB at the position most on the inlet 22d side in the medicine-box path 22 can be measured with the distance-measuring sensor 106. As described in detail below, the distance detected with the distance-measuring sensor 106 is used for obtaining a stock number NS of the medicine boxes MB in each of the medicine-box paths 22.

### <Transport unit 40>

As illustrated in FIGS. 2 and 3, the transport unit 40 is provided on the front surface side of the casing 12a with respect to the above-mentioned medicine-box accommodating portion 20, that is, provided at a position adjacent on the outlet 22e sides of the medicine-box paths 22. The transport unit 40 includes a transport conveyor 42, a jumping-out preventing member 44, and a guide member 46. The transport conveyor 42 is a belt conveyor provided to transport the medicine boxes MB discharged from the outlets 22e. The transport conveyor 42 is capable of collecting the medicine boxes MB discharged from the outlets 22e of the medicine-box paths 22, and moving the same toward the discharge port 12e. When the transport conveyor 42 is actuated under a state in which the shutter 12f provided to the side surface of the casing 12a is opened, the medicine boxes MB can be transported toward the supply unit 50. That is, the transport conveyor 42 doubles as collection means for collecting the medicine boxes MB discharged from the medicine-box paths 22 constituting the medicine-box accommodating portion 20 and transport means for transporting the collected medicine boxes MB toward the supply unit 50 positioned on a downstream side.

Further, the jumping-out preventing member 44 is a member provided for preventing the medicine boxes MB discharged from the outlets 22e of the medicine-box paths 22 from jumping out to positions deviating from the transport conveyor 42. The jumping-out preventing member 44 is a cloth member, and hence is capable of reducing drop impact of the medicine boxes MB discharged from the outlets 22e. As illustrated in FIGS. 2 and 3, the jumping-out preventing member 44 is installed in a manner of being curved in a circular-arc shape, and hence is capable of smoothly and slowly guiding the medicine boxes MB discharged from the outlets 22e toward the transport conveyor 42. The guide member 46 is a plate-like member positioned below the medicine-box accommodating portion 20 and arranged along the transport unit 40. The guide member 46 is a member for preventing the medicine boxes MB, which have jumped out from the outlets 22e of the medicine-box paths 22 toward the jumping-out preventing member 44, from jumping out below the medicine-box accommodating portion 20 by being bounced back by the jumping-out preventing member 44.

### <Supply unit 50>

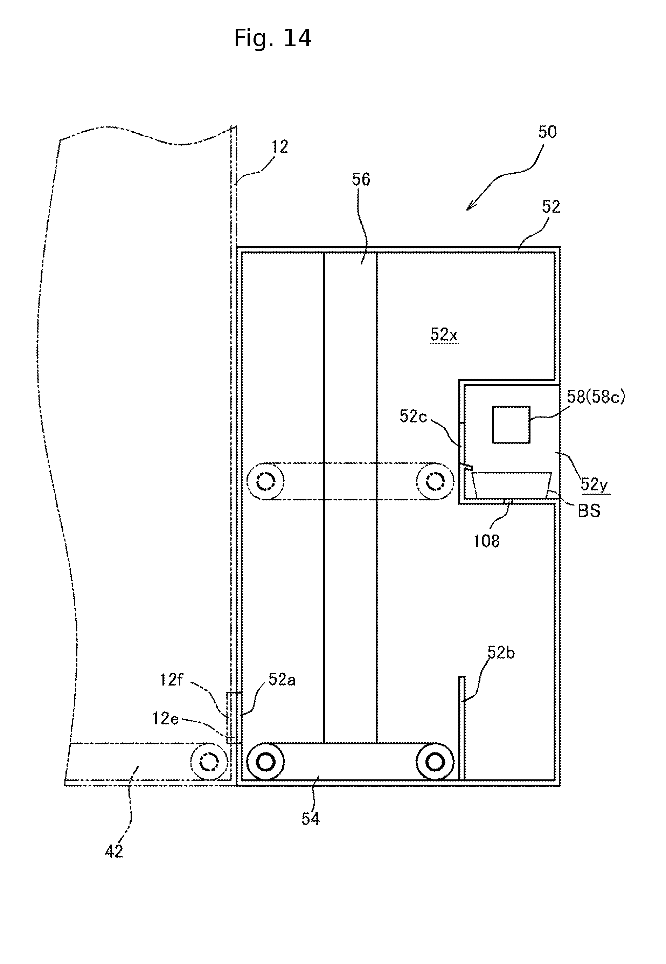

The supply unit 50 is provided to collectively receive the medicine boxes MB transported by the transport conveyor 42 of the transport unit 40 for each prescription and supply the same. As illustrated in FIG. 1, the supply unit 50 is provided at the position adjacent to the discharge port 12e provided to the casing 12. An outer shape of the supply unit 50 is formed of a metal box body 52. Further, as illustrated in FIG. 14, the supply unit 50 includes, inside the box body 52 thereof, a supply conveyor 54 and a lift 56 functioning as means for moving the medicine boxes MB. The supply unit 50 includes not only the means for moving the medicine boxes MB, such as the supply conveyor 54 and the lift 56, but also prescription-information providing means 58 for providing media indicating prescription details to a prepared container BS for each prescription.

As illustrated in FIG. 14, in an inside, the box body 52 has an operating space 52x in which the supply conveyor 54 and the lift 56 operate, and on an outside, includes a container arrangement portion 52y in which the container BS for receiving medicines discharged from the operating space 52x can be arranged. On a lower side of the box body 52, there is provided a receiving port 52a for receiving the medicine boxes MB discharged from the discharge port 12e, and the inside and the outside of the operating space 52x communicate to each other therethrough. The supply conveyor 54 arranged in the operating space 52x includes a belt conveyor, and vertically movable within the operating space 52x by the lift 56. An article conveying direction of the supply conveyor 54 is set to be the same as an article conveying direction of the above-mentioned transport conveyor 42. As illustrated by solid lines in FIG. 14, under a state in which the supply conveyor 54 has descended to the lower side in the box body 52 (hereinafter, this state is also referred to as "medicine-box receiving state"), the medicine boxes MB transported through the receiving port 52a and the discharge port 12e from the transport conveyor 42 arranged in the casing 12 can be transferred onto a conveying surface of the supply conveyor 54.

When the supply conveyor 54 is under the medicine-box receiving state in the operating space 52x, a butting surface 52b is provided at a position adjacent on a downstream side with respect to the supply conveyor 54 in the conveying direction. Thus, when the supply conveyor 54 is actuated in the case where the supply conveyor 54 is under the medicine-box receiving state, the medicine boxes MB transported through the receiving port 52a sequentially butt the butting surface 52b side, and gather to a vicinity of the butting surface 52b. In this way, the medicine boxes MB are prevented from being stacked in a pile at a part near the receiving port 52a on the conveying surface of the supply conveyor 54. As a result, it is possible to maintain a state in which the medicine boxes MB can be smoothly transferred from the transport conveyor 42 side.

Under a state in which the supply conveyor 54 has been moved upward in the operating space 52x (hereinafter, this state is also referred to as "medicine-box discharging state"), a discharge port 52c is provided at a position adjacent in a conveying direction of the medicine boxes MB with respect to the supply conveyor 54. In the supply unit 50, the operating space 52x formed in the box body 52 and the container arrangement portion 52y formed on the outside of the box body 52 communicate to each other through the discharge port 52c. Thus, when the supply conveyor 54 is actuated after being lifted in the operating space 52x so as to be brought into the medicine-box discharging state, the medicine boxes MB carried on the conveying surface can be discharged toward the container arrangement portion 52y through the discharge port 52c.

The container arrangement portion 52y is a part at which the container BS such as a basket for collecting medicine boxes MB for each prescription can be arranged. When the container BS is arranged in the container arrangement portion 52y, the medicine boxes MB delivered through the discharge port 52c are put into the container BS. Further, a container detection sensor 108 (container detection means) is provided to the container arrangement portion 52y, which is capable of detecting whether or not the container BS has been prepared in the container arrangement portion 52y. Detection signals from the container detection sensor 108 constitute actuation conditions for delivery of the medicine boxes MB in the supply unit 50 and the vertical movement of the supply conveyor 54 (detailed description of the actuation conditions is made below).

The prescription-information providing means 58 provides information pieces about prescription (hereinafter, also referred to as "prescription information pieces") in such a manner that an operator can figure out the prescription information pieces based on the prescription information pieces received from the control device 70 and the like described in detail below. For example, the prescription-information providing means 58 may include a journal printer 58a capable of providing prescription information pieces by printing. Further, when a container provided with a storage medium such as an radio frequency identification (RF-ID) tag is prepared as the container BS provided in the container arrangement portion 52y, prescription-information providing means capable of recording prescription information pieces into the storage medium through communication with the storage medium provided to the container BS may be provided as the above-mentioned prescription-information providing means 58. When such a configuration is employed, an operator may read out the prescription information pieces from the storage medium provided to the container BS with use of another device of his/her own (not shown). Alternatively, a display device may be provided to the container BS in addition to the above-mentioned storage medium so that the prescription information pieces stored in the storage medium can be displayed with use of the display device.

In this embodiment, the journal printer 58a and a manual-delivery printer 58b are employed as the prescription-information providing means 58. At a timing at which the medicine box MB is delivered from the discharge port 52c into the container BS, a sheet indicating prescription information pieces printed by the journal printer 58a is put into the container BS prepared in the container arrangement portion 52y. Thus, with reference to a medication list corresponding to prescription data thus put in from the journal printer 58a, the operator can confirm whether the medicine boxes MB delivered from the discharge port 52c have assembled according to prescription, and confirm whether or not there is any medicine or medicine box MB to be brought from a shelf and the like provided other than the medicine-box delivering apparatus 10. Further, when there is a medicine or a medicine box MB to be brought from the shelf and the like provided other than the medicine-box delivering apparatus 10, the manual-delivery printer 58b is also activated to print, on instruction labels, names of medicines and medicine boxes MB to be separately prepared.

### <Replenishing unit 60>

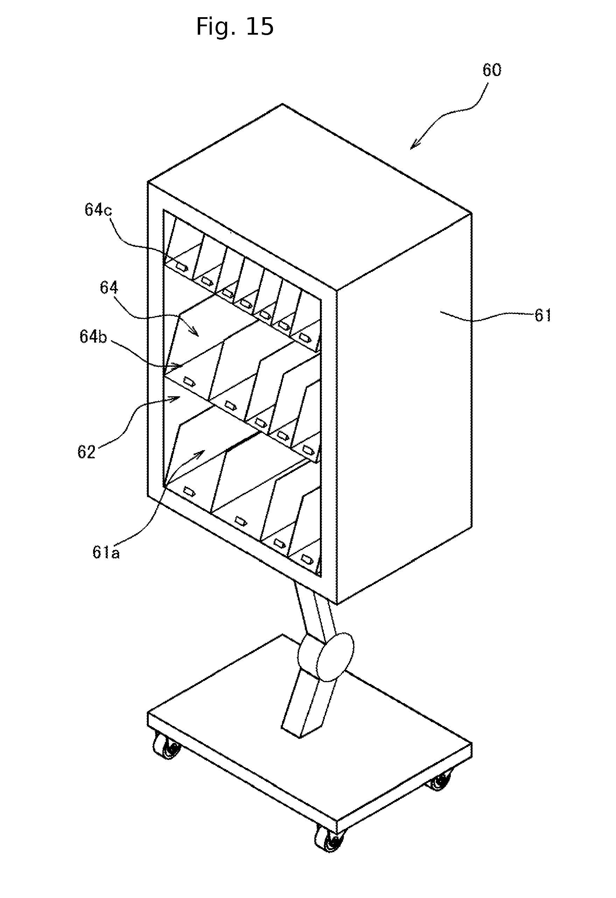

The replenishing unit 60 is provided to replenish the medicine boxes MB into the above-mentioned loading unit 30. As illustrated in FIG. 15, the replenishing unit 60 has a structure in which a replenishing rack 62 is provided in a replenishing-unit main body 61. The replenishing-unit main body 61 is freely movable with respect to the casing 12 of the above-mentioned medicine-box delivering apparatus 10, and has an interior space 61a passing therethrough from the front surface side to the rear surface side.

As illustrated in FIG. 15, the replenishing rack 62 is built in the interior space 61a of the replenishing-unit main body 61. The replenishing rack 62 has substantially the same structure as that of the above-mentioned loading rack 32. That is, a plurality of replenishing paths 64 are vertically and laterally arrayed in the replenishing rack 62. Each of the replenishing paths 64 is formed of what is called a channel member or the like having a gutter-like shape, and opened at both end portions. As illustrated in FIG. 13, one end side of each of the replenishing paths 64 constitutes a put-in port 64a for preparing the medicine boxes MB with respect to the replenishing rack 62, and another end side thereof constitutes a discharge port 64b for discharging medicines from the replenishing rack 62.

In the replenishing rack 62, each of the replenishing paths 64 is tilted downward from the put-in port 64a to the discharge port 64b. Further, a stopper 64c is provided at the end portion on the discharge port 64b side of each of the replenishing paths 64. Thus, the medicine boxes MB put in from the put-in port 64a into each of the replenishing paths 64 sequentially gather on the discharge port 64b side so as to be ready for being put into the loading rack 32. Further, a length L4 of each of the replenishing paths 62 is substantially equal to the length L3 of each of the loading paths 36 constituting the loading rack 32. Thus, in each of the replenishing paths 64, the medicine boxes MB by the same number as that in each of the loading paths 36 can be prepared by being put therein. Further, an inlet member 66 is attached onto the put-in port 64a side of each of the replenishing paths 64. The inlet member 66 has the same structure as that of the inlet member 37 attached to each of the above-mentioned loading paths 36, and is provided to widen a part on the put-in port 64a side of each of the replenishing paths 64 so that the medicine boxes MB can be more easily put thereinto.

Path widths and positional relations of the replenishing paths 64 constituting the replenishing rack 62 are the same as those of the loading paths 36 in the loading rack 32. Further, the replenishing unit 60 is capable of directly or indirectly connecting to each other an end portion on the discharge port 64b side of the replenishing rack 62 and an end portion on the loading inlet 36b side of the loading rack 32 provided on a loading unit 30 side. Thus, when the replenishing rack 62 and the loading rack 32 are connected to each other, the replenishing paths 64 and the loading paths 36 are connected one by one to each other. Thus, when the stoppers 64c provided on the discharge port 64b sides are disengaged after the replenishing rack 62 which is in preparation, that is, in which the medicine boxes MB are put in the replenishing paths 64, is connected to the loading rack 32, the prepared medicine boxes MB flow from the replenishing paths 64 into the loading paths 36 corresponding thereto, with the result that the medicine boxes MB are replenished.

### <Control device 70>

The control device 70 is provided to control operation of the medicine-box delivering apparatus 10. As illustrated in FIG. 16, detection signals from sensors such as the above-mentioned medicine-box-outlet-side sensor 100, medicine-box-inlet-side sensor 102, medicine-box passage sensor 104, distance-measuring sensor 106, and container detection sensor 108 can be input to the control device 70. Further, medicine-box recognition means 72 such as a bar-code reader is connected to the control device 70. Based on detection data from the medicine-box recognition means 72, the control device 70 is capable of specifying information pieces peculiar to the medicine boxes MB, such as those about types and sizes of the medicine boxes MB and types of the medicines accommodated in the medicine boxes MB (hereinafter, also referred to as "medicine-box specifying information pieces").

Based on measuring results from the distance-measuring sensor 106, the control device 70 is capable of calculating a distance L5 from a medicine box MB at the position most on the inlet 22d side to the inlet 22d in each of the medicine-box paths 22 constituting the medicine-box accommodating portion 20. Further, from the distance L5, the length L2 of the medicine box MB loaded in the medicine-box path 22, and the length L1 of the medicine-box path 22, it is possible to obtain a shortage number NL and the stock number NS of the medicine boxes MB in each of the medicine-box paths 22, a number of the medicine boxes MB that can be stocked in each of the medicine-box paths 22 (hereinafter, also referred to as "maximum stock number NM"), and the like. Specifically, the shortage number NL can be obtained through calculation of L5/L2 (the figures below the decimal point are omitted) with the control device 70. Further, the control device 70 is capable of obtaining the maximum stock number NM through calculation of L1/L2 (the figures below the decimal point are omitted). Still further, the control device 70 is capable of obtaining the stock number NS through calculation of NM-NL. Based on the shortage number NL, the stock number NS, and the maximum stock number NM thus obtained, the control device 70 is capable of managing stock of the medicine boxes MB in each of the medicine-box paths 22.

In addition, the control device 70 is capable of managing stock of the medicine boxes MB in a storage and the like provided separately from the medicine-box delivering apparatus 10. Specifically, in the medicine-box delivering apparatus 10, when the medicine boxes MB are prepared by being taken out from the storage and the like so as to be loaded into the medicine-box accommodating portion 20, the medicine boxes MB are recognized with the medicine-box recognition means 72. Thus, by inputting in advance to the control device 70 the number and the types of the medicine boxes MB stored in the storage so that the medicine boxes MB are specified by being recognized with the medicine-box recognition means 72 when the medicine boxes MB are taken out from the storage and the like so as to be prepared with respect to the medicine-box delivering apparatus 10, and by inputting the number of the medicine boxes MB to the control device 70, stock conditions of the medicine boxes MB in the storage and the like can be managed.

The control device 70 has a function of box-jam judging means for judging whether or not the medicine box MB is jammed in each of the medicine-box paths 22. Specifically, when the medicine box MB is detected by the medicine-box-inlet-side sensor 102 without being detected by the medicine-box-outlet-side sensor 100, it is assumed that the medicine box MB loaded from the inlet 22d side into the medicine-box path 22 is jammed in a midway and has not reached the outlet 22e side. Thus, under such a detection state, the control device 70 is capable of judging that the medicine box MB is jammed in the medicine-box path 22.

By activating the loading instruction means 25 and the replenishment instruction means 38 based on the medicine-box specifying information pieces specified based on the detection data from the medicine-box recognition means 72, the control device 70 is capable of issuing instructions to an operator as to which of the medicine-box paths 22 and the loading paths 36 the medicine box MB to be put into is put into. Further, when the medicine box MB is recognized with the medicine-box recognition means 72 before being put into the medicine-box path 22 and the loading path 36, it is also possible to specify the medicine-box path 22 into which the medicine box MB is put based on the medicine-box specifying information pieces, and to judge whether or not the medicine box MB has been put into appropriate one of the medicine-box paths 22 based on whether or not passage of the medicine box MB has been detected by the medicine-box-inlet-side sensor 102 provided to the medicine-box path 22.

Further, based on the detection data transmitted from the medicine-box passage sensor 104 provided at the outlet 22e of each of the medicine-box paths 22, the control device 70 is capable of confirming whether or not the medicine box MB is properly discharged from each of the medicine-box paths 22. Further, based on a history of the detection data from the medicine-box passage sensor 104, the control device 70 is also capable of confirming the number of the medicine boxes MB discharged from the medicine-box paths 22 and managing the stock of the medicine boxes MB.

Until the container BS is detected by the container detection sensor 108 provided in the container arrangement portion 52y of the supply unit 50, the control device 70 does not actuate the transport conveyor 42 constituting the supply unit 50, which is an actuating condition for the transport conveyor 42. More specifically, until a state in which the container BS has been detected by the container detection sensor 108 (first detection state) is reached, the control device 70 does not actuate the transport conveyor 42 for delivering the medicine boxes MB carried on the conveying surface from the discharge port 52c to the container arrangement portion 52y side, which is one of the actuating conditions for the transport conveyor 42. Further, until a state in which the container BS has not been detected by the container detection sensor 108 (second detection state) is once reached and then switched into a state in which another container BS has been detected after the medicine boxes MB corresponding to preceding prescription are discharged from the discharge port 52c, the control device 70 does not actuate the transport conveyor 42 for delivering the medicine box MB carried on the conveying surface from the discharge port 52c to the container arrangement portion 52y side, which is another one of the actuating conditions for the transport conveyor 42. In other words, unless the container BS prepared in the container arrangement portion 52y is replaced for each prescription, the control device 70 does not actuate the transport conveyor 42 for delivering the medicine box MB from the discharge port 52c, which is the another one of the actuating conditions for the transport conveyor 42. With this configuration, the medicine box MB is prevented from being erroneously delivered from the discharge port 52c provided to the supply unit 50 under a state in which the another container BS has not yet been prepared in the container arrangement portion 52y or a state in which the container BS has not yet been replaced after the medicine box MB corresponding to preceding prescription is delivered.

### <Operations of medicine-box delivering apparatus 10>

Next, description is made of operations of the medicine-box delivering apparatus 10. The operations of the medicine-box delivering apparatus 10 are roughly classified into a delivery operation, a management operation, and an automatic loading operation which are mechanically performed under control by the control device 70, and a manual loading operation and a loading preparation operation which are performed by instructions and support from the control device 70.

The delivery operation is an operation of discharging the medicine box MB prepared in the medicine-box accommodating portion 20 according to prescription and delivering the same into the container BS prepared in the container arrangement portion 52y of the supply unit 50. The management operation is an operation of confirming and managing the stock conditions of the medicine boxes MB and whether or not the medicine boxe MB is jammed in the medicine-box path 22. Further, the automatic loading operation is an operation of actuating the loading unit 30 with the control device 70 so as to load the medicine boxes MB prepared in the loading unit 30 into the medicine-box paths 22 constituting the medicine-box accommodating portion 20. The manual loading operation is an operation performed at the time when an operator replenishes the medicine boxes MB into the medicine-box paths 22 provided in the medicine-box accommodating portion 20 without actuating the loading unit 30. Under the control by the control device 70, instructions as to which of the medicine-box paths 22 the medicine boxes MB are to be loaded into are issued. Still further, the loading preparation operation is an operation performed at the time of replenishing medicines with respect to the loading rack 32 provided in the loading unit 30. Under the control by the control device 70, instructions as to which of the loading paths 36 the medicine boxes MB are to be replenished into are issued. In the following, specific description is made of operations of the medicine-box delivering apparatus 10 at the time of performing the above-mentioned operations.

### <Delivery operation>

When the medicine-box delivering apparatus 10 performs the delivery operation, based on the prescription data input to the control device 70, a medicine-box path 22 in which medicine boxes MB to be prescribed are loaded in the medicine-box accommodating portion 20 is selected. After that, the discharge regulating means 26 provided at the outlet 22e of the selected medicine-box path 22 is actuated and the medicine boxes MB are discharged onto the transport conveyor 42 of the conveying unit 40 provided below. In this case, the conveying surface of the transport conveyor 42 is stopped, and the discharge port 12e provided in the side surface of the casing 12a is closed by the shutter 12f. Thus, the medicine boxes MB discharged from the medicine-box paths 22 are collected on the transport conveyor 42. In this way, the shutter 12f is not opened until the supply conveyor 50 provided in the supply unit 50 has descended to a position at a height substantially the same as that of the transport conveyor 42 in the operating space 50x after all the medicine boxes MB corresponding to one prescription are collected on the conveying surface of the transport conveyor 42. When the shutter 12f is opened, the transport conveyor 42 is actuated and the medicines, which are collected correspondingly to one prescription on the transport conveyor 42, are discharged through the discharge port 12e toward the supply unit 50 provided on the downstream side.

During transportation of the medicine boxes MB into the supply unit 50 as described above, the supply conveyor 54 on the supply unit 50 side has already descended to a position on the lower side in the operating space 52x in the box body 52 and has been in a receivable state with respect to the medicine boxes MB transported by the transport conveyor 42 (medicine-box receiving state). Further, in the medicine-box receiving state, the supply conveyor 54 is being actuated so that articles (medicine boxes MB) can be conveyed on the conveying surface thereof toward the butting surface 52b. With this, the medicine boxes MB having been transported onto the conveying surface of the supply conveyor 54 are sequentially moved toward the butting surface 52b. As a result, the medicine boxes MB are prevented from being stacked in a pile near the receiving port 52a, and hence transportation of the medicine boxes MB is not hindered.

When all the medicine boxes MB corresponding to one prescription, which have been assembled after being discharged from the medicine-box accommodating portion 20 as described above, are transported on the supply conveyor 54 of the supply unit 50, the control device 70 once stops the supply conveyor 54 being actuated. After that, the supply conveyor 54 is moved upward in the operating space 52x by the lift 56 so as to be lifted up to a position adjacent to the discharge port 52c (medicine-box discharging state). Further, when the supply conveyor 54 is moving upward in the operating space 52x, the conveying surface of the supply conveyor 54 is driven by a predetermined amount into a direction reverse to the butting surface 52b side. With this, the following failures due to vibration and the like to the supply conveyor 54 are prevented: the medicine boxes MB carried on the conveying surface erroneously fall into the operating space 52x; and the medicine boxes MB are erroneously delivered from the discharge port 52c during a time period between a start of lifting-up of the supply conveyor 54 up to the position facing the discharge port 52c and a timing at which the medicine boxes MB are to be delivered from the discharge port 52c toward the container arrangement portion 52y.

When the supply conveyor 54 enters the medicine-box discharging state as described above, based on the detection signals transmitted from the container detection sensor 108, the control device 70 confirms whether or not the container BS is prepared in the container arrangement portion 52y. Further, based on the detection signals transmitted from the container detection sensor 108, the control device 70 confirms whether the container BS currently existing in the container arrangement portion 52y is prepared not for preceding prescription but for current prescription. Specifically, the state in which the container BS has not been detected by the container detection sensor 108 (second detection state) is reached after the medicine boxes MB are delivered from the discharge port 52c for the preceding prescription. Then, the control device 70 judges that the container BS prepared for the preceding prescription has been removed from the container arrangement portion 52y. Further, after confirming as described above that the container BS prepared for the preceding prescription has been removed from the container arrangement portion 52y, when the state in which the container BS has been detected by the container detection sensor 108 (first detection state) is reached again, the control device 70 judges that the another container BS for the current prescription has been prepared in the container arrangement portion 52y. When it is confirmed that the another container BS for the current prescription has been prepared in this way, the control device 70 actuates the supply conveyor 54 so as to move medicine boxes MB to the discharge port 52c. With this, the medicine boxes MB carried on the supply conveyor 54 are discharged from the discharge port 52c into the container BS prepared in the container arrangement portion 52y.

Further, during a series of the operations described above, the prescription date is sent from the control device 70 to the journal printer 58a, and the medication list corresponding to the prescription data is put into the container BS prepared in the container arrangement portion 52y. Further, when there is a medicine or a medicine box MB to be brought from the shelf and the like provided other than the medicine-box delivering apparatus 10, the manual-delivery printer 58b is also activated to print out instruction labels representing there are medicines or medicine boxes MB to be separately prepared. Thus, with reference to printed materials printed by the journal printer 58a and the instruction label printed by the manual-delivery printer 58b, an operator can confirm whether the medicine boxes MB delivered from the discharge port 52c have assembled accordingly to the prescription, and confirm whether or not there is any medicine or medicine box MB that has to be prepared from the shelf and the like provided other than the medicine-box delivering apparatus 10 and prepare the same.

### <Management operation>

The management operation is an operation of confirming and managing the stock conditions of the medicine boxes MB prepared in the medicine-box accommodating portion 20 and whether or not the medicine box MB is jammed in each of the medicine-box paths 22 based on the detection signals input to the control device 70 from the sensors such as the distance-measuring sensor 106 in addition to the medicine-outlet-side sensor 100, the medicine-box-inlet-side sensor 102, and the medicine-box passage sensor 104 which are provided to each of the medicine-box paths 22 in the medicine-box accommodating portion 20. More specifically, the control device 70 is capable of confirming the stock conditions of the medicine boxes MB in the medicine-box accommodating portion 20 at a predetermined timing such as a time point at which a delivery task for the medicine boxes MB is completed. In order to confirm the stock conditions of the medicine boxes MB, the control device 70 first actuates the drive device 34 so as to move the loading rack 32 on the inlet 22d sides of the medicine-box paths 22 provided in the medicine-box accommodating portion 20. Then, the control device 70 measures the distance L5 between the inlet 22d and the medicine box MB at the position most on the inlet 22d side of each of the medicine-box paths 22 with the distance-measuring sensor 106 provided to the loading rack 32. After that, based on the length L2 of the medicine box MB put in each of the medicine-box paths 22, the control device 70 obtains the shortage number NL of the medicine boxes MB from values obtained by dividing the distance L5 by the length L2 (the figures below the decimal point are omitted).

Further, from values obtained by dividing the length L1 of the medicine-box path 22 by the length L2 of the medicine box MB (the figures below the decimal point are omitted), the control device 70 is capable of grasping the maximum number of the medicine boxes MB that can be stocked in the medicine-box path 22 (maximum stock number NM). Thus, the control device 70 is capable of obtaining the current stock number NS by subtracting the shortage number NL obtained as described above from the maximum stock number NM. Further, from the shortage number NL and the stock number NM, the control device 70 is also capable of judging which type of and how many medicine boxes MB are to be replenished by the time of the following delivery, and notifying an operator of the same.

Specifically, information pieces about the shortage number NL, the stock number NM, and as to which type of and how many medicine boxes MB are to be replenished can be notified through intermediation of, for example, the printed materials printed by the above-mentioned journal printer 58a and manual-delivery printer 58b and information transmission media such as an indicator 74 including a liquid crystal monitor and the like. Further, it may be possible to employ a structure in which an LED or a display device for notifying a shortage state in each of the medicine-box paths 22 is provided on the outlet 22e side or the inlet 22d side of the medicine-box accommodating portion 22. Means for notifying the above-mentioned shortage information pieces and stock information pieces may be formed in a mode of sharing components used for different purposes, such as the journal printer 58a, the manual-delivery printer 58b, and the indicator 74, or may be constituted by a device provided separately from those components.

The control device 70 is also capable of grasping the number of medicine boxes MB put in the medicine-box paths 22 by the automatic loading operation and the manual loading operation which are described in detail below (hereinafter, also referred to as "loaded number NC"), and grasping the number of medicine boxes MB discharged from the medicine-box paths 22 (hereinafter, also referred to as "discharged number NO") based, for example, on the detection signals from the medicine-box passage sensor 104. Based on a difference between the loaded number NC and the discharged number NO, the control device 70 is also capable of obtaining the number of stocks assumed to theoretically exist (hereinafter, also referred to as "theoretical stock number NR"). Further, the control device 70 is also capable of issuing a warning that some failure such as erroneous loading of the medicine boxes MB with respect to the medicine-box paths 22 may be occurring in a case where a difference has been found between the theoretical stock number NR and the stock number NS obtained based on measured data from the distance-measuring sensor 105 as described above as a result of comparison therebetween. Still further, the control device 70 is also capable of issuing a warning after judging that the medicine box MB is jammed in the medicine-box path 22 when the medicine box MB is detected by the medicine-box-inlet-side sensor 102 provided to each of the medicine-box paths 22 without being detected by the medicine-box-outlet-side sensor 100.

Specifically, it is possible to employ a configuration in which, when an error state is reached owing, for example, to jam of the medicine box MB in the medicine-box path 22, warnings are issued through intermediation of, for example, the printed materials printed by the above-mentioned journal printer 58a and manual-delivery printer 58b and the information transmission media such as the indicator 74 including a liquid-crystal monitor and the like. Further, it is also possible to employ a structure in which the LED, the display device, or the like for notifying that the error as described above is occurring in the medicine-box path 22 is provided on the outlet 22e side or the inlet 22d side of the medicine-box path 22. The warning means for warning the error such as jam of the medicine box MB may be formed in a mode of sharing the components used for different purposes, such as the above-mentioned journal printer 58a, manual-delivery printer 58b, LED, and display device, or may be constituted by a device provided separately from those components.

### <Automatic loading operation>

The automatic loading operation is an operation of loading the medicine boxes MB charged in the loading paths 36 of the loading rack 32 into the medicine-box paths 22, which is performed under control by the control device 70 onto the operation of the loading unit 30. In more detail, at the time of the automatic loading operation, first, the medicine boxes MB are prepared in the loading paths 36. In this case, when the types of the medicine boxes MB are recognized with the medicine-box recognition means 72 including a bar-code reader before the medicine boxes MB are charged into the loading paths 36, the replenishment instruction means 38 provided to the loading rack 32 are activated based on the recognition results. In this way, instructions as to positions of the loading paths 36 into which the medicine boxes MB are to be replenished are issued to an operator. Further, when replenishment of the medicine boxes MB into the loading paths 36 is completed, the operation of the drive device 34 is controlled by the control device 70 so that the loading rack 32 moves to positions of the medicine-box paths 22 into which the medicine boxes MB prepared in the loading paths 36 are to be charged. With this, when the loading outlet 36a of the loading path 36 in which the medicine boxes MB to be loaded are replenished faces the inlet 22d of the medicine-box path 22 into which the medicine boxes MB are to be loaded, the stopper 39 provided near the loading outlet 36a is disengaged. In this way, the medicine boxes MB are loaded from the loading path 36 into the medicine-box path 22.

After the medicine box MB are loaded from one of the plurality of loading paths 36 into a specific one of the medicine-box paths 22 as described above, in order to load other medicine boxes MB from next loading paths 36 into other medicine-box paths 22, the loading rack 32 vertically and laterally moves on the inlet 22d sides of the medicine-box paths 22. After that, in a way similar to that described above, the medicine boxes MB are loaded from the loading paths 36 into the medicine-box paths 22. In this way, after all the medicine boxes MB prepared in the loading paths 36 are loaded onto the medicine-box accommodating portion 20 side by sequentially moving the loading rack 32 and disengaging the stopper 39 provided to each of the loading paths 36, the loading rack 32 returns to a position (fixed position) adjacent to the replenishing door provided on the rear surface side of the casing 12 in preparation for next loading operations.

### <Manual loading operation>

The medicine-box delivering apparatus 10 is not only capable of loading the medicine boxes MB from the loading rack 32 into the medicine-box paths 22 by the above-mentioned automatic loading operation, but also capable of directly loading the medicine boxes MB into the medicine-box paths 22 by allowing an operator to open the doors 12c provided on the rear surface side of the casing 12. In this case, when the manual loading operation is performed, unless the operator accurately understands a target medicine-box path 22 into which the medicine boxes MB which are intended to be loaded are to be loaded, there is a risk that the medicine boxes MB are erroneously loaded into incorrect ones of the medicine-box paths 22 to load the medicine boxes MB. As a countermeasure, when the manual loading operation is performed, based on the types of the medicine boxes MB recognized with the medicine-box recognition means 72, the loading instruction means 25 including a light-emitting diode issues instructions as to which of the medicine-box paths 22 the medicine boxes MB are to be loaded into.

Further, as described above, the medicine-box delivering apparatus 10 in this embodiment is incapable of unlocking the locking means 14 including an electromagnetic lock unless the main power supply (not shown) is turned on, and hence incapable of opening or closing the doors 12c provided on the rear surface side of the casing 12. Thus, under a non-energized state, that is, under a state in which the medicine-box recognition means 72 cannot be used and the loading instruction means 25 is not activated, the operator cannot open the doors 12c so as to charge the medicine boxes MB on his/her own.

### <Loading preparation operation>

The loading preparation operation is an operation performed at the time of preparing the medicine boxes MB with respect to the loading rack 32 in preparation for loading the medicine boxes MB into the medicine-box paths 22 by actuating the loading unit 30. In the medicine-box delivering apparatus 10 in this embodiment, the following methods are employed as methods of preparing the medicine boxes MB with respect to the loading rack 32: a method in which the replenishing door 12d provided on the rear surface side of the casing 12 is opened and then the medicine boxes MB are manually replenished by an operator with respect to the loading rack 32 standing by on an inner side relative to the replenishing door 12d; and a method in which the medicine boxes MB are prepared with respect to the replenishing rack 62 of the separately-prepared replenishing unit 60 and then the replenishing unit 60 is connected to the loading rack 32 so that the medicine boxes MB are replenished at once into the loading paths 36.

In the case where the medicine boxes MB are manually replenished by an operator into the loading rack 32 standing by on the inner side relative to the replenishing door 12d, when the operator makes the medicine-box recognition means 72 to recognize the medicine boxes MB prior to replenishment, the control device 70 activates the replenishment instruction means 38 provided to the loading unit 30 based on the recognition results.
In this way, instruction is made as to which of the loading paths 36 the medicine boxes MB are to be put into. Specifically, the replenishment instruction means 38 including a light-emitting diode, which is provided at a position of the loading path 36 into which the medicine boxes MB are to be replenished, emits light.

Meanwhile, when the medicine boxes MB are prepared with use of the replenishing unit 60, the operator first puts, for preparation, the medicine boxes MB into the replenishing paths 64 constituting the replenishing rack 62. After the medicine boxes MB are completed to be put into the replenishing rack 62, the end portion on the discharge port 64b side of the replenishing rack 62 is connected to the end portion on the replenishing inlet 36b side of the replenishing rack 32. When the connection therebetween is confirmed, the stopper 64c provided on the discharge port 64b side of each of the replenishing paths 64 in the replenishing unit 60 is disengaged by the control device 70. In this way, the medicine boxes MB prepared in the replenishing paths 64 flow into the loading paths 36 at once to be replenished.

As described above, in the medicine-box delivering apparatus 10 in this embodiment, the loading unit 30 includes the loading rack 32 movable at a position adjacent to the putting-in side of the medicine boxes MB with respect to the medicine-box accommodating portion 20, and the plurality of types of the loading paths 36 each having a different path width are provided to the loading rack 32. Thus, when an operator replenishes the medicine boxes MB into the loading paths 36 and causes, under the operation control by the control device 70, the loading rack 32 to move to a position adjacent to one of the medicine-box paths 22, which corresponds to ones of the medicine boxes MB charged in the loading paths 36, the ones of the medicine boxes MB prepared in the loading paths 36 can be mechanically loaded into the target one of the medicine-box paths 22. Thus, with use of the medicine-box delivering apparatus 10 in this embodiment, it is unnecessary for the operator to select each time the one medicine-box path 22, which corresponds to the medicine boxes MB to be replenished, from among the large number of the medicine-box paths 22 provided in the medicine-box accommodating portion 20, or to move to the position at which the one medicine-box path 22 is provided. Thus, the loading operation of the medicine boxes MB can be performed with high efficiency.

With use of the medicine-box delivering apparatus 10 in this embodiment, when the types of the medicine boxes MB to be replenished into the loading rack 32 are recognized with the medicine-box recognition means 72, the light-emitting diode constituting the replenishment instruction means 38 emits light. Thus, the replenishment instruction means 38 enables an operator to instantly understand into which of the loading paths 36 the medicine boxes MB are to be replenished. Further, similarly, in this embodiment, also when the doors 12c on the rear side of the casing 12 is opened so as to directly load the medicine boxes MB into the medicine-box paths 22, the loading instruction means 25 specifies the medicine-box path 22 based on the recognition results from the medicine-box recognition means 72. In this way, it is possible to understand into which of the medicine-box paths 22 the medicine boxes MB to be loaded are loaded. Thus, a replenishing operation of the medicine boxes MB with respect to the loading paths 36 and the medicine-box paths 22 can be performed with higher efficiency, and the medicine boxes MB are prevented from being erroneously loaded into incorrect ones of the loading paths 36 and the medicine-box paths 22. Note that, as described above in this embodiment, a structure is illustrated as an example in which the replenishment instruction means 38 and the loading instruction means 25 are activated based on the recognition results from the medicine-box recognition means 72, but the present invention is not limited thereto. For example, the medicine-box delivering apparatus 10 need not include any one or both of those components.

Further, regarding the case where the doors 12c are opened so that the medicine boxes MB are directly charged into the medicine-box paths 22, the medicine-box delivering apparatus 10 is provided with the locking means 14 which is not unlocked unless energized. Thus, under a state in which the doors 12c are openable and the medicine boxes MB can be loaded into the medicine-box paths 22, the loading instruction means 25 energized to emit light is in an actuatable state without fail, and hence the medicine boxes MB are prevented from being erroneously loaded. Note that, as described above in this embodiment, an example is illustrated in which the locking means 14 including an electromagnetic lock is provided, but the present invention is not limited thereto. For example, the locking means 14 may be omitted.

As described above, the medicine-box delivering apparatus 10 is provided with the discharge regulating means 26 at the outlet 22e of the medicine-box path 22 having a falling gradient. While the medicine boxes MB stand by for delivery, the receiving piece 26c constituting the discharge regulating means 26 projects upward from the bottom surface 22a side of the medicine-box path 22, and blocks the medicine-box path 22. Thus, while standing by for delivery, the medicine boxes MB are reliably prevented from being erroneously discharged from the medicine-box path 22. Further, when the medicine boxes MB are delivered, the above-mentioned receiving piece 26c withdraws toward the bottom surface 22a side of the medicine-box path 22 down to a position lower than the main-body portion 26a. Thus, the medicine boxes MB to be discharged are smoothly discharged without being stuck by the receiving piece 26c. Further, the main-body portion 26a at a position adjacent to the receiving piece 26c is projecting upward from the bottom surface 22a side of the medicine-box path 22. Thus, even when the receiving piece 26c withdraws toward the bottom surface 22a side and the medicine box MB on the outlet 22e side is discharged, another medicine box MB having been adjacent on the upstream side (inlet 22d side) of the medicine-box path 22 with respect to the discharged medicine box MB abuts against the main-body portion 26a, and hence is not discharged. Thus, with the above-mentioned structure, the medicine boxes MB can be reliably discharged one by one.

Further, in the above-mentioned discharge regulating means 26, the protrusion 26f is provided at a position deviated from the center of the abutment surface 26e. Thus, when the medicine box MB having slid down in the medicine-box path 22 abuts (collides) against the abutment surface 26e, the medicine box MB returns into a somewhat oblique direction with respect to the longitudinal direction of the medicine-box path 22. Therefore, in comparison with those in the case where the medicine box MB returns straight toward the inlet side along the longitudinal direction of the medicine-box path 22 which has descended the medicine-box path 22, the return amount and the momentum of the medicine box MB to return in the medicine-box path 22 toward the inlet 22d side, the impact on the medicine box MB, and the like after the medicine box MB abuts against the abutment surface 26e are smaller. Note that, as described above in this embodiment, a structure is illustrated as an example in which the protrusion 26f is provided on the abutment surface 26e, but the present invention is not limited thereto. For example, the protrusion 26f may be omitted.

In the medicine-box delivering apparatus 10, the height adjustment means 28 is attached above (on the top surface 22f side of) the discharge regulating means 26 provided at a position on the outlet 22e side of the medicine-box path 22. With this, an opening height of at a part corresponding to the outlet 22e of the medicine-box path 22 can be adjusted. Thus, in accordance with heights of the medicine boxes MB to be loaded into the medicine-box path 22, by appropriately adjusting the opening height of the medicine-box path 22 with the height adjustment means 28 thus attached, failures in discharge of the medicine boxes MB bounced up by the discharge regulating means 26 can be prevented from occurring. Note that, as described above in this embodiment, a structure is illustrated as an example in which the attachment portion 22g is provided so that the height adjustment means 28 can be attached. However, it is not necessary to provide the structure capable of attaching the height adjustment means 28 when the medicine-box path 22 into which the medicine boxes MB are to be loaded is determined in advance and the opening height of each of the medicine-box paths 22 can be adjusted in advance, or when problems with discharge of the medicine boxes MB are not assumed even with some variations of the opening heights with respect to the sizes of the medicine boxes MB.

Further, as described above in this embodiment, a structure is illustrated as an example in which the fixation portion 28a of the opening-height adjustment means 28 is slid into the slide-in grooves 22h provided on the top surface 22f of the medicine-box path 22 so that the height adjustment portion 28b is fixed in a cantilever manner, and the height adjustment portion 28b is arranged along the bottom surface of the discharge regulating means 26 positioned thereabove. However, the present invention is not limited thereto. Specifically, the height adjustment means 28 may be formed of a block-like member including a part corresponding to the height adjustment portion 28b, and fixed to the bottom surface of the discharge regulating means 26 provided for the medicine-box path 22 positioned thereabove. Even with such a structure, similarly to the case described above in this embodiment, attachment and detachment of the height adjustment means 28 enables the height of the opening region of a part on the outlet 22e side of the medicine-box path 22 to be adjusted.

As described above, in the medicine-box delivering apparatus 10, the inlet members 24, 37, and 66 are mounted respectively to the part on the inlet 22d side of the medicine-box path 22, the part on the loading inlet 36b side of the loading path 36, and the part on the put-in port 64a side of the replenishing path 64, and path widths of the medicine-box path 22 and the loading path 36 are widened in a tapered manner. Thus, the medicine boxes MB can be easily put into the medicine-box paths 22, the loading paths 36, and the replenishing paths 64. Note that, as described above in this embodiment, a structure is illustrated as an example in which the inlet members 24, 37, and 66 are mounted respectively to all the medicine-box paths 22, the loading paths 36, and the replenishing paths 64. However, the present invention is not limited thereto. For example, any one or all of those members may be omitted. Further, as described above in this embodiment, a structure is illustrated as an example in which the inlet members 24, 37, and 66 are additionally mounted so as to widen upstream ends of the medicine-box path 22, the loading path 36, and the replenishing path 64 (end portion on the inlet 22d side, end portion on the loading inlet 36b side, and end portion on the put-in port 64a side). However, the present invention is not limited thereto, and the medicine-box path 22, the loading path 36, and the replenishing path 64 themselves may be formed in a shape of being widened toward the inlet 22d side and the loading inlet 36b side.

The above-mentioned medicine-box delivering apparatus 10 has a structure in which the replenishing unit 60 is provided separately from the loading unit 30 and the medicine boxes MB can be replenished with respect to the loading unit 30 with use of the replenishing unit 60. Thus, in the medicine-box delivering apparatus 10, while the loading rack 32 constituting the loading unit 30 is actuated for the automatic loading operation, the medicine boxes MB to be replenished next into the loading rack 32 are prepared in the replenishing unit 60. In this way, when the loading rack 32 returns to the position (fixed position) at which the replenishing door 12d is provided, the medicine boxes MB thus prepared can be immediately replenished with respect to the loading rack 32. Thus, as a result of provision of the replenishing unit 60, a loading operation of the medicine boxes MB with respect to the medicine-box paths 22 can be more efficiently performed.

Further, the above-mentioned replenishing unit 60 includes the plurality of types of the replenishing paths 64 each having a different path width. The arrangement and the path widths of the replenishing paths 64 correspond to the arrangement and the path widths of the loading paths 36 provided to the loading rack 30. Thus, after the loading rack 30 is connected to the replenishing unit 60, when the stoppers 64 stemming the medicine boxes MB put in the replenishing paths 64 are disengaged, the medicine boxes MB prepared in the replenishing paths 64 flow at once into the loading paths 36 to be replenished. Accordingly, with provision of the replenishing unit 60 as described above, time periods required for the loading operation of the medicine boxes MB with respect to the loading unit 30 and the medicine-box accommodating portion 20 can be drastically saved. Note that, as described above in this embodiment, a structure is illustrated as an example in which the stopper 64 is provided to each of the replenishing paths 64 so that the medicine boxes can be held therewith in the replenishing paths 64, but the present invention is not limited thereto. Specifically, instead of providing the stopper 64 to each of the replenishing paths 64, a shutter and the like capable of opening and closing an opening part on the front surface side of the replenishing-unit main body 61 may be provided.

As described above in this embodiment, a structure is illustrated as an example in which one replenishing unit 60 is prepared. However, the present invention is not limited thereto, and more replenishing units 60 may be prepared. Further, in the medicine-box delivering apparatus 10 described above in this embodiment, the loading unit 30 includes one loading rack 32. However, the present invention is not limited thereto, and more loading racks 32 may be included.

The above-mentioned medicine-box delivering apparatus 10 includes the transport conveyor 42 for transporting the medicine boxes MB discharged from the medicine-box paths 22, and hence is capable of sorting the medicine boxes MB transported by the transport conveyor 42 for each prescription in the supply unit 50, and supplying the medicine boxes MB by putting the same into the container BS prepared in the container arrangement portion 52y. Thus, according to the medicine-box delivering apparatus 10, the plurality of discharged medicine boxes MB can be accurately collected for each prescription and then separately supplied. Note that, the supply unit 50 described above in this embodiment is merely an example, and various modifications may be made thereto in accordance with circumstances such as installation spaces prepared in a hospital, a pharmacy, and the like in which the medicine-box delivering apparatus 10 is installed, and how to supply the medicine boxes MB (medicines).

Further, as described above in this embodiment, a structure is illustrated as an example in which the supply unit 50 is provided only at the position adjacent to the side surface on one side of the medicine-box delivering apparatus 10 (right side surface viewed from the door 12b side). However, the present invention is not limited thereto. Specifically, a plurality of the supply units 50 may be provided at, for example, positions adjacent to both the right and left side surfaces of the medicine-box delivering apparatus 10 so that the medicine boxes MB delivered from the medicine-box accommodating portion 20 can be supplied into the container BS through the plurality of supply units 50. With such a structure, a plurality of paths for supplying the medicine boxes MB are formed, and hence the delivery task for the medicine boxes MB can be much more efficiently performed accordingly.

Under a state in which the supply conveyor 54 receives the medicine boxes MB transported from the transport conveyor 42, the above-mentioned supply unit 50 actuates the supply conveyor 54 so as to cause the medicine boxes MB to move toward the butting surface 52b provided at the position adjacent to the supply conveyor 54. In this way, the medicine boxes MB are prevented from being stacked in a pile near the receiving port 52a. Thus, with the above-mentioned structure, the medicine boxes MB are smoothly transferred from the transport conveyor 42 to the supply conveyor 54. Note that, the conveying surface of the supply conveyor 54 is not necessarily actuated as described above when the medicine boxes MB are received from the transport conveyor 42, and the supply conveyor 54 may stand by with the conveying surface thereof being stopped. Further, the conveying surface of the supply conveyor 54 may be continuously actuated toward the butting surface 52b, or may be intermittently actuated at appropriate timings.

Further, as described above, the conveying surface of the supply conveyor 54 is reversed during lifting-up of the supply conveyor 54 in the operating space 52x after receiving the medicine boxes MB from the transport conveyor 42 so that the medicine boxes MB gathered on the butting surface 52b side are returned substantially to a center of the conveying surface. Thus, the following failures due to vibration and the like caused by lifting-up the supply conveyor 54 in the box body 52 of the supply unit 50 are prevented: the medicine boxes MB on the conveying surface fall into the operating space 52x; and the medicine boxes MB are erroneously delivered prior to a timing at which the medicine boxes MB are delivered from the discharge port 52c. Further, the conveying surface is reversed during lifting-up of the supply conveyor 54, and hence it is unnecessary to additionally secure a time period for returning the medicine boxes MB substantially to the center of the conveying surface. As a result, it is possible to save the time period required for the delivery task for the medicine boxes MB. Note that, as described above in this embodiment, the conveying surface is reversed during lifting up the supply conveyor 54, but the present invention is not limited thereto. For example, the conveying surface may be reversed before lifting-up of the supply conveyor 54. With this, although the time period required until delivery of the medicine boxes MB is somewhat longer than that in the case described above in this embodiment, instead, it is possible to further reduce the risk that the medicine boxes MB erroneously fall in the operating space 52x or into the container arrangement portion 52y.

As described above, the supply unit 50 does not deliver the medicine boxes MB from the discharge port 52c until the container detection sensor 108 detects that the container BS for receiving the medicine boxes MB is prepared in the container arrangement portion 52y. Thus, the medicine boxes MB can be reliably prepared into the container BS for each prescription, and hence are prevented from being mixed with medicine boxes MB according to other prescription. Note that, the medicine-box delivering apparatus 10 does not necessarily have such a configuration. For example, instead of the configuration in which the medicine boxes MB are not delivered from the discharge port 52c until the container detection sensor 108 detects the container BS, it is possible to employ a configuration in which the medicine boxes MB are not delivered from the discharge port 52c until an operator operates separately provided buttons, the indicator 74 of a touch-panel type, or the like.

Further, by performing the management operation as described above, the medicine-box delivering apparatus 10 is capable of grasping the shortage number NL and the stock number NS of the medicine boxes MB prepared in the medicine-box paths 22 based, for example, on the distance L5 detected with the distance-measuring sensor 106. Further, by performing the management operation, the medicine-box delivering apparatus 10 is also capable of appropriately judging preparation timings and numbers of the medicine boxes MB based on the shortage number NL and the stock number NS. Thus, with a configuration in which the management operation can be performed as described above, the loading operation of the medicine boxes MB can be much more efficiently performed. Note that, as described above in this embodiment, a configuration is illustrated as an example in which the shortage number NL and the stock number NS can be grasped based on the detection signals from the distance-measuring sensor 106, but the present invention is not limited thereto. For example, the shortage number NL and the stock number NS may be grasped by other methods. Alternatively, the shortage number NL and the stock number NS need not be specifically grasped.

Further, as described above, in a case of obtaining the number of stocks assumed to exist (theoretical stock number NR) based on the difference between the number of medicine boxes MB put in the medicine-box paths 22 (loaded number NC), which is grasped in advance, and the counted number of medicine boxes MB discharged from the medicine-box paths 22 (discharged number NO), an instruction may be issued to an operator to control errors therebetween, and a warning of the errors may be issued to the operator based on results of the comparison between the stock number NS and the theoretical stock number NR obtained based on the detection signals from the distance-measuring sensor 106. Further, when there is a discrepancy between the stock number NS and the theoretical stock number NR, delivery of the medicine boxes MB by the medicine-box delivering apparatus 10 may be stopped until both the numbers add up, or any one or both of the stock number NS and the theoretical stock number NR may be reset or corrected.

As described above, the medicine-box delivering apparatus 10 is capable of judging occurrence of medicine-box jam in the medicine-box path 22 based on whether or not the medicine boxes MB have been detected during the management operation by the medicine-box-outlet-side sensor 100 and the medicine-box-inlet-side sensor 102 provided to the medicine-box path 22. Thus, with the above-mentioned configuration, the failures in discharge of the medicine boxes MB involved with occurrence of the medicine-box jam in the medicine-box path 22 are prevented in advance, and the medicine-box jam can be rapidly coped with. Note that, as described above in this embodiment, an example is illustrated in which the medicine-box-outlet-side sensor 100 and the medicine-box-inlet-side sensor 102 are used for detecting occurrence of the medicine-box jam in the medicine-box path 22, but the present invention is not limited thereto. For example, occurrence of the medicine-box jam may be detected by other methods such as other sensors additionally prepared. Alternatively, occurrence of the medicine-box jam need not be specifically grasped.

### <Jam clearing means>

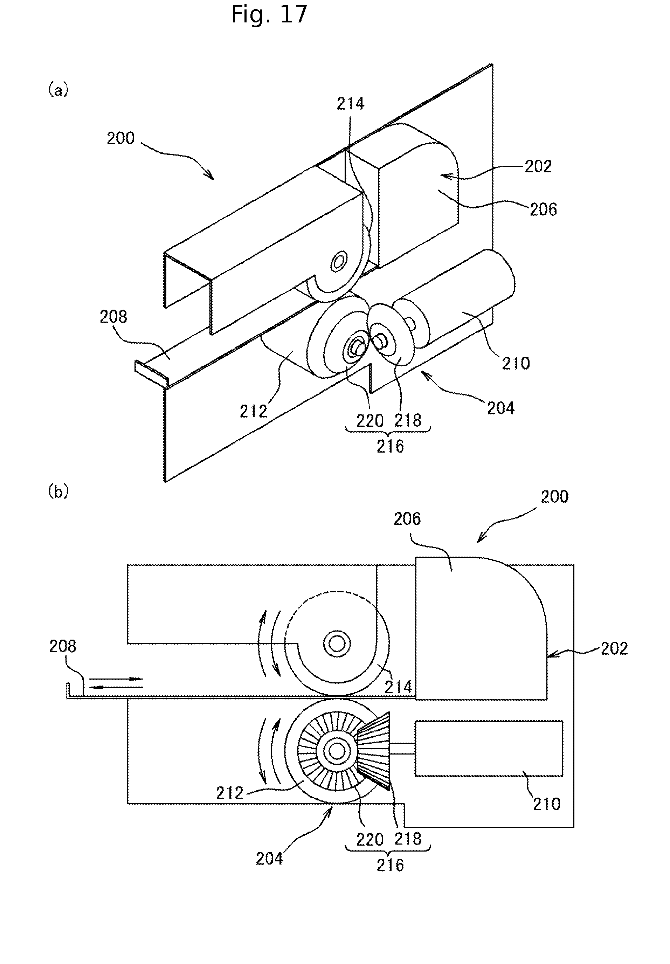

Further, the medicine-box delivering apparatus 10 may be provided with means capable of clearing the medicine-box jam, for example, by pressing the medicine box MB from the inlet 22d side to the outlet 22e side of the medicine-box path 22 when the medicine box MB is jammed in the medicine-box path 22. Specifically, jam clearing means 200 as illustrated, for example, in FIGS. 17 to 19, can be provided on the inlet 22d side of each of the medicine-box paths 22.

In more detail, the jam clearing means 200 includes a press mechanism portion 202 and a drive mechanism portion 204. The press mechanism portion 202 has a structure similar to those of conventionally well-known tape measures. Specifically, a long metal presser 208 is accommodated in a main-body case 206 in such a manner as to be capable of freely retracting and extending. A proximal end side of the presser 208 is coupled to a power spring (not shown) fixed in the main-body case 206. Normally, substantially the entire of the presser 208 is retracted in the main-body case 206. Further, when a leading end side of the presser 208 is drawn out to an outside of the main-body case 206 against an urging force of the above-mentioned power spring, the presser 208 can be maintained in a state of extending substantially straight.

The drive mechanism portion 204 is provided to draw out the presser 208 toward the outside of the main-body case 206. The drive mechanism portion 204 includes a motor 210 which functions as a drive source, a drive roller 212, a free roller 214, and a power transmission portion 216. The power transmission portion 216 includes an umbrella gear 218 connected to an output shaft of the motor 210, and another umbrella gear 220 connected to a center shaft of the drive roller 212. An output of the motor 210 can be transmitted to the drive roller 212 side through intermediation of the umbrella gears 218 and 220. The presser 208 of the above-mentioned press mechanism portion 202 is sandwiched between the drive roller 212 and the free roller 214. Thus, when the motor 210 is activated to rotate the drive roller 212, the presser 208 can be extended and retracted.

The jam clearing means 200 is attached, for example, to a bottom portion of the loading rack 32 constituting the loading unit 30, and is freely movable vertically and laterally in a region on the inlet 22d sides of the medicine-box paths 22 through actuation of the drive device 34. Further, the jam clearing means 200 is attached in a posture capable of extending the presser 208 straight from the inlet 22d side to the outlet 22e side in the medicine-box path 22. Thus, when occurrence of the medicine-box jam is confirmed, the drive device 34 is actuated to move the jam clearing means 200 to a position of the medicine-box path 22 in which the medicine boxe is jammed. Then, the presser 208 is inserted into the medicine-box path 22 from the inlet 22d side so as to move the jammed medicine box by pushing the medicine box toward the outlet 22e side. In this way, the jam can be cleared.

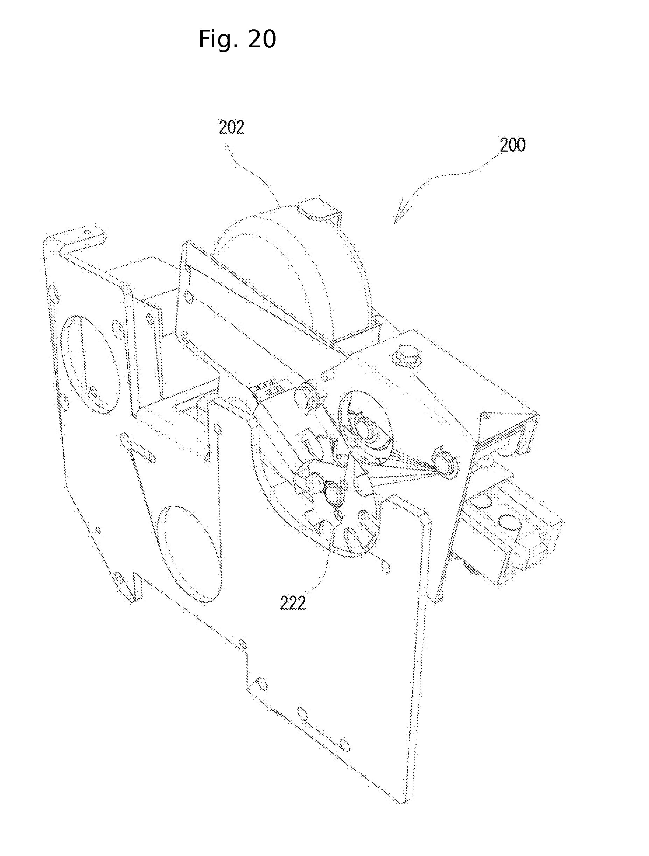

When being configured to be capable of detecting a length D of the presser 208 drawn out to the outside of the main-body case 206, the above-mentioned jam clearing means 200 is capable of adjusting the presser 208 to project by a length suitable for pressing of the medicine box MB, and in addition, may be used as an alternative to the distance-measuring sensor 106 provided as distance-measuring means. Specifically, for example, rotational-amount detection means 222 (refer to FIG. 19) such as a rotary encoder or a slit sensor capable of detecting rotational amounts of the drive roller 212 and the free roller 214, and extension/retraction-amount detection means such as a linear encoder capable of detecting an extension/retraction amount of the presser 208 may be provided. Based on detection results from those means, the above-mentioned length D may be detectable. With such a structure, when the presser 208 is inserted from the inlet 22d side of the medicine-box path 22 to a position of butting the medicine box MB, it is possible to detect the length D corresponding to a space into which the medicine boxes MB can be replenished in each of the medicine-box paths 22, which is useful in management of the stock number NS.

Although operations of the jam clearing means 200 can be appropriately set, for example, the following operations may be performed. Specifically, a distance to a medicine box MB existing most on the inlet 22d side in each of the medicine-box paths 22 (hereinafter, also referred to as "measured distance DM") is measured with the above-mentioned distance-measuring sensor 106 and the like. Then, based on the information pieces of the theoretical stock number NR, the sizes of the medicine boxes MB, and the length of the medicine-box path MB obtained through calculation and the like as described above, a distance from the inlet 22d to the medicine box MB in a case where the theoretical stock number NR of the medicine boxes MB are assumed to exist (hereinafter, also referred to as "theoretical distance DR") is obtained. As a result, when the measured distance DM and the theoretical distance DR described above add up, it is assumed that the medicine box MB is not jammed in the medicine-box path 22. Meanwhile, when the measured distance DM is smaller than the theoretical distance DR (DM<DR), there is a risk that the medicine box MB is jammed in the midway of the medicine-box path 22. In this context, when the measured distance DM is smaller than the theoretical distance DR, the jam clearing means 200 is actuated so that the presser 208 presses the medicine box MB from the inlet 22d side to the outlet 22e side of the medicine-box path 22. In this way, the jam can be cleared.

Further, pressing methods for pressing the medicine box MB with the presser 208 for the purpose of clearing the jam also can be appropriately determined. For example, the following method may be employed. Specifically, when there is a risk that the medicine box MB is jammed in the medicine-box path 22 as described above, the following operations can be repeated by predetermined times. That is, first, the medicine box MB is pressed with the presser 208 by a predetermined length (for example, X1 cm), and then the measured distance DM is obtained. When the measured distance DM is still smaller than the theoretical distance DR, the medicine box MB is pressed with the presser 208 further by a predetermined length (for example, X2 cm). By pressing step-by-step the medicine box MB, which may be jammed, in this way, the medicine box MB is prevented from being pressed beyond necessity and being broken. Note that, the above-mentioned predetermined lengths X1 and X2 may be the same as or different from each other. Further, the number of times by which pressing is repeated can be appropriately set. Still further, after the operation of clearing the jam of the medicine box MB is performed by the jam clearing means 200, re-measurement may be performed with the distance-measuring sensor 106 so as to confirm whether or not the measured distance DM and the theoretical distance DR are substantially equal to each other.

As described above in this embodiment, the loading rack 32 is provided with the distance-measuring sensor 106, and the drive device 34 is actuated to vertically and laterally move the loading rack 32 on the inlet 22d sides of the medicine-box paths 22. In this way, the distance between the inlet 22d and the medicine box MB nearest to the inlet 22d in each of the medicine-box paths 22 can be measured. However, the present invention is not limited thereto. Specifically, the above-mentioned distance-measuring sensor 106 may be provided, for example, on the rear surface of the casing 12 or to the doors 12c provided on the rear surface side correspondingly to each of the medicine-box paths 22, and the distance between the medicine box MB and the inlet 22d in each of the medicine-box paths 22 may be measured with those distance-measuring sensors 106. With such a structure, even when the drive device 34 is not actuated to move the loading rack 32, it is possible to measure the distance between the inlet 22d and the medicine box MB most on the inlet 22d side in each of the medicine-box paths 22. As a result, tasks such as stock management performed based on the measurement results from the distance-measuring sensor 106 can be rapidly performed.

In the example illustrated in FIGS. 2 and 3, an upper end of the jumping-out preventing member 44 is extended up to heights at which lower ones of the medicine-box paths 22 constituting the medicine-box accommodating portion 20 are installed, but the upper end may be extended further upward. Further, the jumping-out preventing member 44 may be formed of something like a conventionally well-known scroll curtain so that the upper end of the jumping-out preventing member 44 can be appropriately moved in the vertical direction. In this way, when the upper end of the jumping-out preventing member 44 is extended up to heights at which upper ones of the medicine-box paths 22 constituting the medicine-box accommodating portion 20 are installed, not only the medicine boxes MB discharged from the lower ones of the medicine-box paths 22, but also the medicine boxes MB discharged from the upper ones of the medicine-box paths 22 are prevented from jumping out to the outside of the transport unit 40.

The loading paths 36 and the replenishing paths 64 of the loading rack 32 and the replenishing rack 62, respectively, described above in this embodiment may be undetachably fixed, or may be appropriately detachable. Further, the loading paths 36 and the replenishing paths 64 of the loading rack 32 and the replenishing rack 62, respectively, may be appropriately detachable from the loading rack 32 and the replenishing rack 62 in units of a loading-path group including the plurality of loading paths 36 and a replenishing-path group including the plurality of replenishing paths 64. Specifically, each of the loading rack 32 and the replenishing rack 62 described above in this embodiment has a structure in which the plurality of loading paths 36 or the plurality of replenishing paths 64 are provided over three stages in the vertical direction as illustrated in FIGS. 12 and 15. In this context, units of the replenishing paths 36 and the replenishing paths 64 constituting the stages can be defined as the loading-path groups and the replenishing-path groups. In this case, the replenishing paths 36 can be detached in loading-path group units (stage units), and the replenishing paths 64 can be detached in replenishing-path group units (stage units). When the loading paths 36 and the replenishing paths 64 are appropriately detachable one by one or in group units as described above, operations of replenishing the medicine boxes MB with respect to the loading rack 32 and preparing the medicine boxes MB into the replenishing rack 62 can be much more efficiently performed.

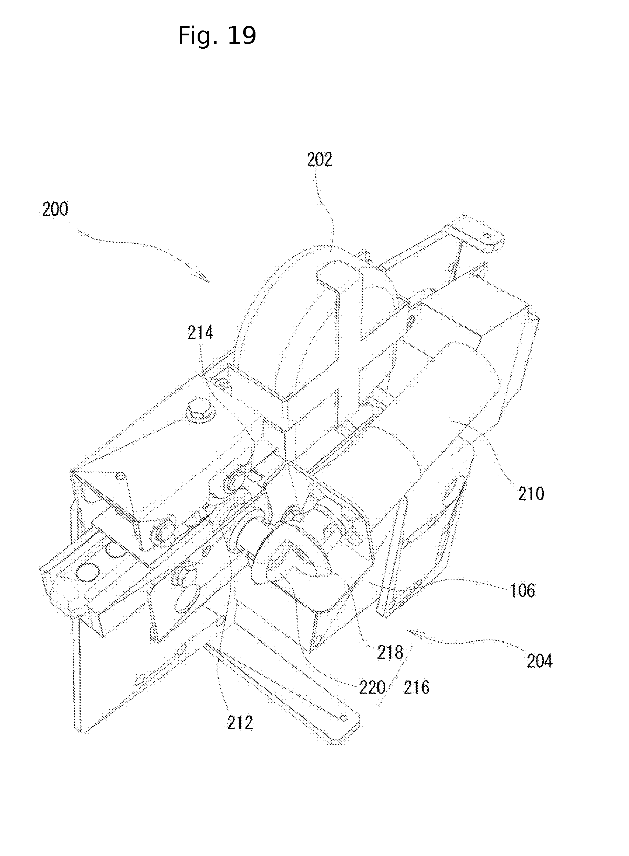

Further, as described above, the loading rack 32 is provided with the distance-measuring sensor 106, but the distance-measuring sensor 106 may be provided, for example, integrally with a casing of the jam clearing means 200 as illustrated in FIG. 18. With such a structure, not only a structure of the apparatus can be compactified, but also both the position measurement of the medicine boxes MB and the jam clearing operation of the medicine boxes MB can be performed respectively with the distance-measuring sensor 106 and the jam clearing means 200 from substantially the same position. As a result, the jam clearing operation can be much more accurately performed.

### <Medicine-box collection means>

The medicine-box delivering apparatus 10 described above in this embodiment includes the means for preparing, in a phase preceding loading of the medicine boxes MB into the medicine-box paths 22 provided in the medicine-box accommodating portion 20, the medicine boxes MB to be loaded (hereinafter, also referred to as "medicine-box preparation portion" 15). Specifically, in the above-mentioned medicine-box delivering apparatus 10, the loading unit 30 corresponds to the medicine-box preparation portion 15, and both the loading unit 30 and the replenishing unit 60 correspond to the medicine-box preparation portion 15 under a state in which the replenishing unit 60 is connected to the loading unit 30.

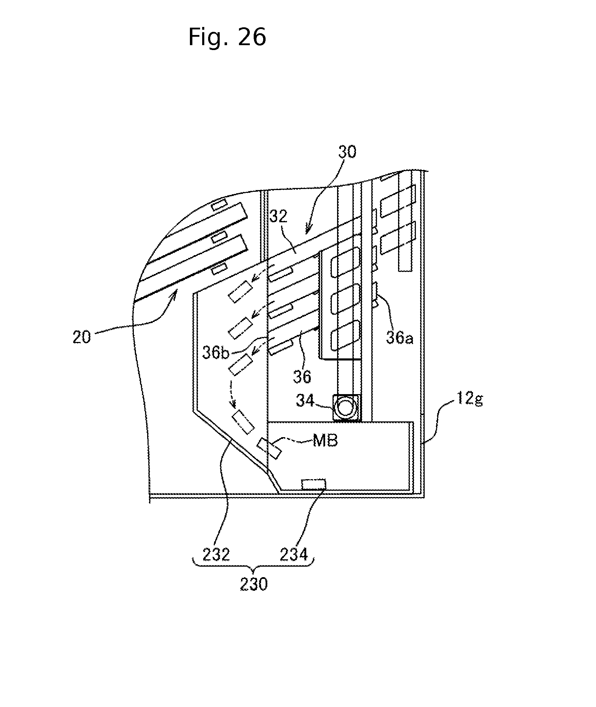

In this context, for example, it is desired to employ a structure in which, in a case where medicine boxes MB other than medicine boxes MB to be replenished are replenished in the loading paths 36 of the loading rack 32 and the replenishing paths 64 of the replenishing unit 60 constituting the medicine-box preparation portion 15, the erroneously-replenished medicine boxes MB can be easily collected. Specifically, as indicated by broken lines in FIG. 26, the medicine-box delivering apparatus 10 may have a structure in which medicine-box collection means 230 is provided between the loading unit 30 provided with the loading rack 32 and the medicine-box accommodating portion 20 or at a position below the medicine-box accommodating portion 20. With such a structure, when incorrect medicine boxes MB are replenished in the loading paths 36, the incorrect medicine boxes MB can be easily collected prior to a phase in which the medicine boxes MB are loaded from the loading unit 30 side to the medicine-box accommodating portion 20 side. Note that, when the medicine boxes MB are erroneously replenished, a notification of erroneous insertion may be displayed on the indicator 74 and the like, or issued in an audible manner.

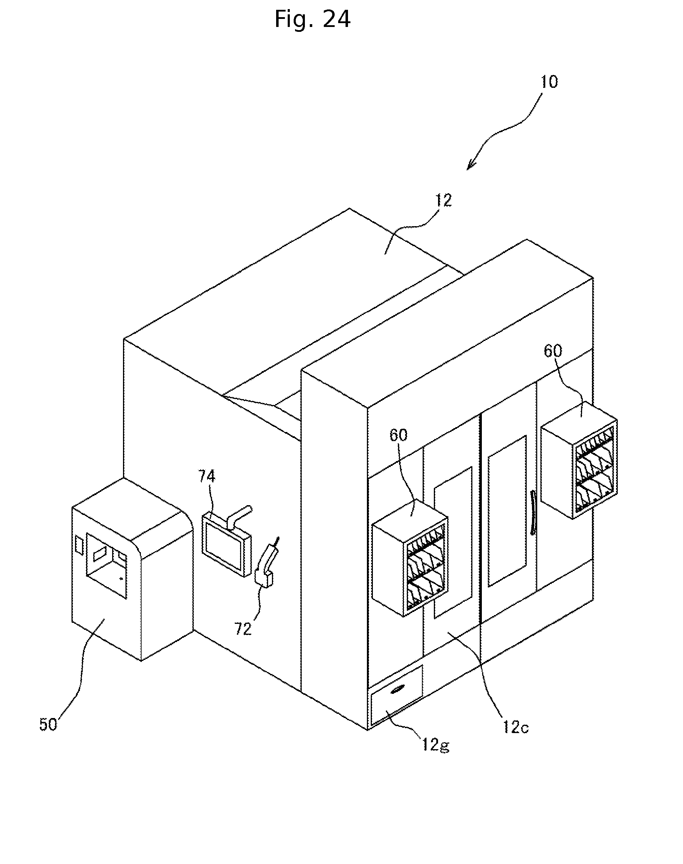

The above-mentioned medicine-box collection means 230 can be formed of a path dedicated to collection, or a box or a bag for collection. For example, a structure as illustrated in FIG. 26 may be employed. Specifically, the medicine-box collection means 230 illustrated in FIG. 26 includes a shooter 232 and a collection box 234. The shooter 232 is provided below the medicine-box accommodating portion 20 so that the medicine boxes MB discharged from the loading rack 32 of the loading unit 30 are led to an inlet 234a of the collection box 234 without being loaded into the medicine-box accommodating portion 20. The collection box 234 is provided below the replenishing unit 60, and can be removed and inserted by opening a dedicated collection door 12g on the rear surface side of the casing 12 (refer to FIGS. 24 and 26). Thus, when the medicine boxes MB are erroneously replenished in the loading unit 30, the loading rack 32 is moved to a position facing the shooter 232 on the lower side of the medicine-box accommodating portion 20, and in this state, the medicine boxes MB are discharged from the loading rack 32 toward the shooter 232. In this way, the medicine boxes MB can be collected into the collection box 234.

### <Modified examples of medicine-box accommodating portion/glide promoting member>

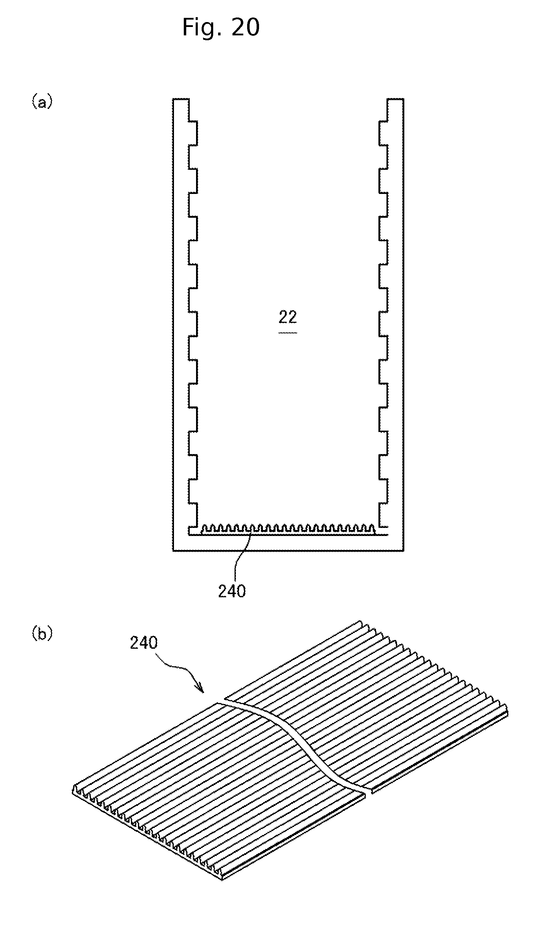

When the projections and recesses extending straight from the inlet 22d side to the outlet 22e side are formed on the bottom surface 22a and the side surfaces 22b and 22c of each of the medicine-box paths 22 as illustrated in FIG. 6 so as to suppress to a minimum the contact areas of the medicine boxes and the medicine-box paths 22 and frictional resistance therebetween, the medicine-box delivering apparatus 10 is capable of causing the medicine boxes to smoothly slide down the medicine-box paths 22 from the inlet 22d sides to the outlet 22e sides thereof. Further, instead of the structure illustrated in FIG. 6, it is possible to employ a structure in which, as illustrated in FIGS. 20, any one or all of the steel bottom surface 22a and the side surfaces 22b and 22c constituting the medicine-box path 22 is formed to be flat, and another member having projections and recesses extending straight from the inlet 22d side to the outlet 22e side (hereinafter, also referred to as "glide promoting member" 240) is attached to the surface (surface on the medicine box side). In this case, the steel material for the medicine-box path 22 and a material for the glide promoting member 240 can be different from each other. Specifically, a material having a dynamic friction coefficient lower than that of the steel material can be employed as the material for the glide promoting member 240. More specifically, polyethylene impregnated with a silicone resin can be suitably employed as a raw material for the glide promoting member 240. In this way, when the material having a low dynamic friction coefficient is employed as the material for the glide promoting member 240, the medicine boxes MB can be slid down in or delivered from the medicine-box paths 22 at much higher speed, and all the delivery tasks for the medicine boxes MB can be performed with further improved efficiency.

Under assumption that the large number of medicine boxes are prepared in the medicine-box path 22 and dynamic friction resistance acts on the medicine boxes MB, it is desired that, as described above, the medicine-box path 22 be formed of a raw material having high strength, such as a steel material, and the glide promoting member 240 be attached to the medicine-box path 22. Further, when the glide promoting member 240 is formed of a raw material capable of exerting sufficiently high strength, the medicine-box path 22 may be formed of the same raw material, and the projections and recesses as illustrated in FIG. 6 may be formed on the surfaces to be brought into contact with the medicine boxes.

Further, for example, when the glide promoting member 240 is attached to the medicine-box path 22 as described above so that a dynamic friction force which acts on the medicine boxes MB when passing the medicine-box path 22 is suppressed to a minimum, the tilt of the medicine-box path 22 can be further reduced. Specifically, when the glide promoting member 240 is attached, the tilt of the medicine-box path 22 can be set to be smaller than the above-mentioned 25 degrees, specifically, set to 20 degrees or smaller. In this way, a height of the medicine-box accommodating portion 20 can be further reduced, and the larger number of the medicine-box paths 22 can be vertically and laterally provided in the medicine-box accommodating portion 20.

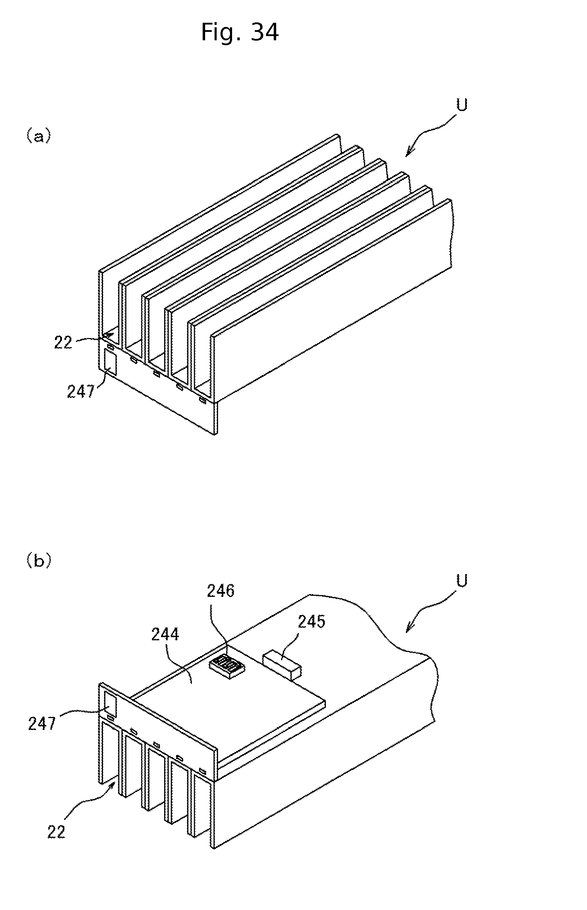

Further, the medicine-box accommodating portion 20 may have a structure in which the gutter-like members such as channel members each forming the medicine-box path 22 are separately installed in the apparatus main body 12, but the present invention is not limited thereto. For example, as illustrated in FIGS. 34, a path unit U may be formed by integrating (unifying) a plurality of members each constituting the medicine-box path 22, and the medicine-box paths 22 may be attached and detached in units of the path unit U. With such a structure, the medicine-box paths 22 can be easily attached and detached for assembly, maintenance, and the like of the medicine-box accommodating portion 20.

Further, as described above, in the medicine-box accommodating portion 20, a large number of electronic components such as the medicine-box-outlet-side sensor 100, the medicine-box-inlet-side sensor 102, the power source 26d of the discharge regulating means 26, and the medicine-box passage sensor 104 are provided to each of the medicine-box paths 22. Thus, when those electronic components are also unified, time and effort for wiring and the like can be further saved, and a wiring structure can be simplified. Still further, when the medicine paths 22 are unified as described above, as illustrated in FIG. 34(b), in each unit, the electronic components and other members can be unified so as to form a shared member 244, with the result that the structure of the apparatus can be simplified. Yet further, with provision of a connector 245 for electrically connecting the shared member 244 of the path unit U to a connector (not shown) provided on the casing side of the medicine-box delivering apparatus 10, not only installation of the path unit U, but also wiring connection can be integrally performed, which leads to an increase in convenience.

The medicine-box delivering apparatus 10 may include path-information setting means 246 capable of setting information pieces unique to the medicine path 22, such as positions and sizes of the medicine paths 22 in the medicine-box accommodating portion 20 (hereinafter, also referred to as "path information pieces"). The path-information setting means 246 may include switches such as conventionally well-known DIP switches, recording media such as memories, and other members. Further, it is also possible to electrically connect the path-information setting means 246 directly or indirectly to the control device 70 so that the path information pieces are recorded into the control device 70 or recording means separately provided, and to establish a path-information master compiling the path-information pieces of the medicine-box paths 22. With such a configuration, the path information pieces can be collectively managed on the control device 70 side.

Although the above-mentioned path-information setting means 246 may be provided to each of the medicine paths 22, when the path units U are formed, the path-information setting means 246 may be provided to each of the path units U. Thus, the apparatus structure can be simplified. Further, when the path units U are formed, the number (row number) of the medicine paths 22 provided in each of the path units U can be used as the path-information pieces. In addition to the row number, positional information pieces (address information pieces) of the medicine units U and the medicine paths 22 also can be used as the path-information pieces.

### <Modified example of discharge regulating means>

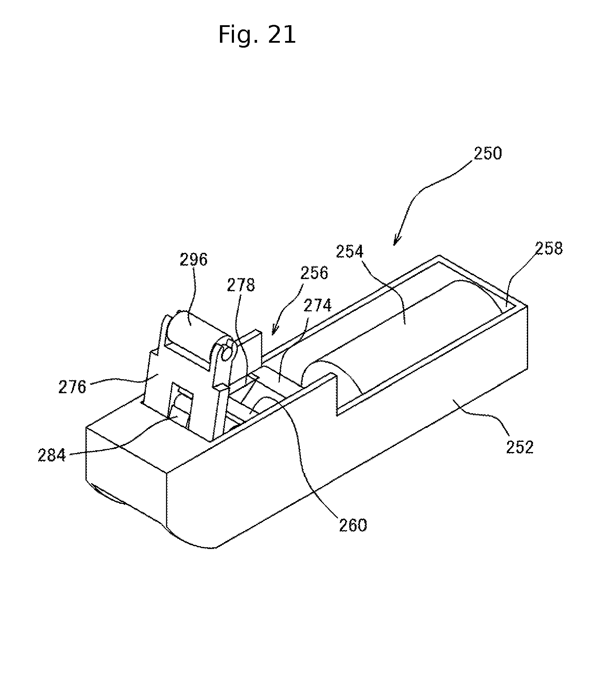

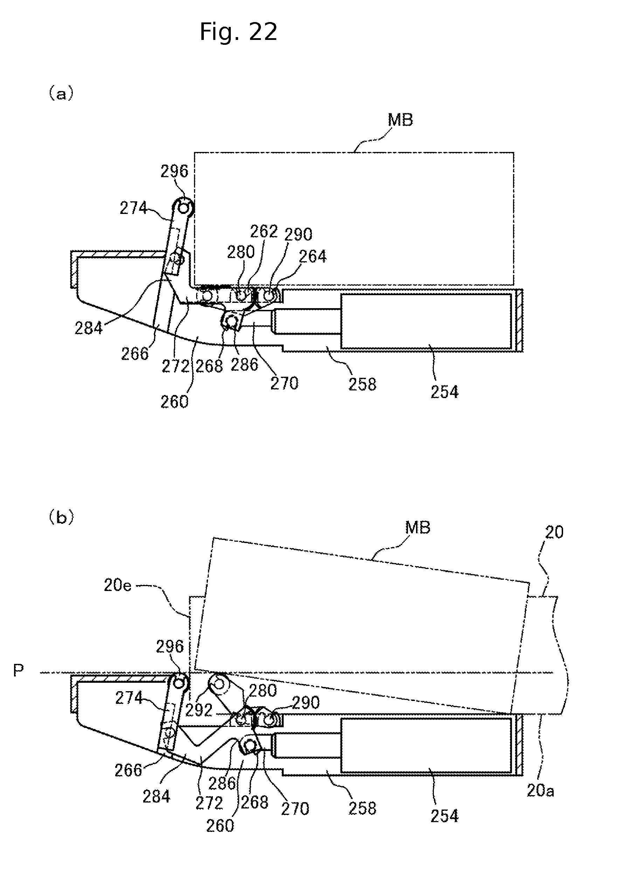

The above-mentioned discharge regulating means 26 includes the push-up piece 26b and the receiving piece 26c, and the medicine box MB stemmed by the receiving piece 26c can be discharged from the outlet 22e of the medicine-box path 22 by being pushed up by the push-up piece 26b. In this context, other means may be used therefor as long as the same functions and advantages can be obtained. Specifically, instead of the discharge regulating means 26, discharge regulating means 250 illustrated in FIGS. 21 and 22 may be attached to the outlet 22e of the medicine-box path 22.

In much more detail, the discharge regulating means 250 is formed by incorporating a power source 254 and a drive mechanism 256 into a main-body portion 252. The main-body portion 252 is a resin member, and similarly to the main-body portion 26a of the above-mentioned discharge regulating means 26, attached in such a posture that a longitudinal direction thereof corresponds to a path direction of the medicine-box path 22 at a leading end part on the outlet 22e side of the medicine-box path 22 and that a short-side direction (width direction) thereof corresponds to a width direction of the medicine-box path 22. The main-body portion 252 includes, on one end side in the longitudinal direction, a power-source accommodating portion 258 accommodating the power source 254, and on another end side, a drive-mechanism accommodating portion 260 accommodating the drive mechanism 256. As illustrated in FIGS. 22, the drive-mechanism accommodating portion 260 is provided with shaft engaging portions 262 and 264 and a groove 266.

Similarly to the power source 26d, the power source 254 is formed of a cylinder or the like. As illustrated in FIGS. 22, the power source 254 includes a drive piece 270 having an engaging portion 268 provided at a leading end thereof. The drive piece 270 of the power source 254 enters an extended state as illustrated in FIG. 22(a) in a non-energized state, and enters a retracted state as illustrated in FIG. 22(b) in an energized state.

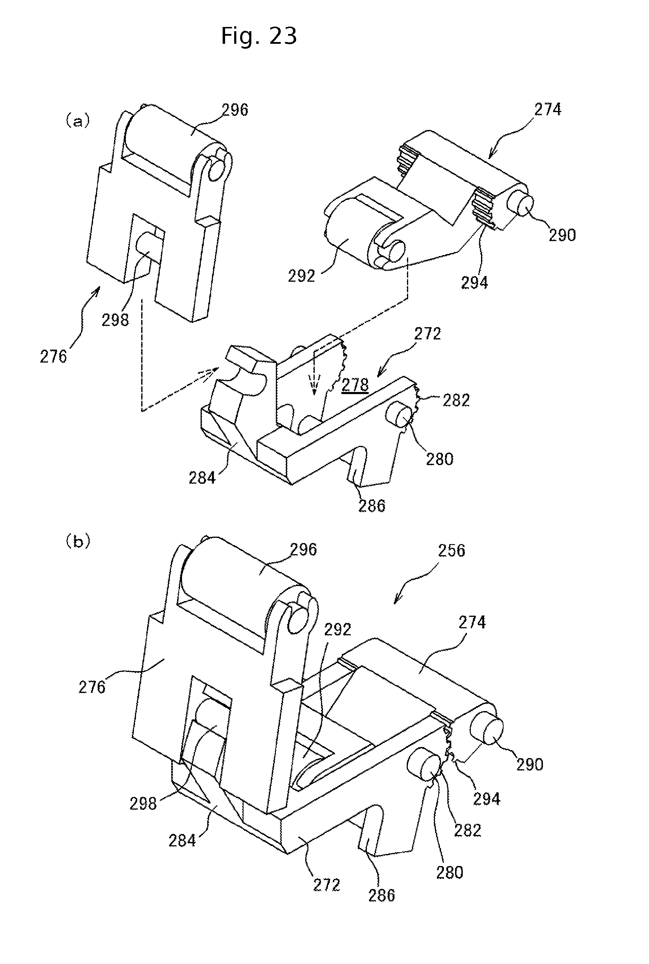

As illustrated in FIGS. 21 and 22, the drive mechanism 256 includes a coupling piece 272, a push-up piece 274, and a receiving piece 276. The coupling piece 272 is a member for coupling the push-up piece 274 and the receiving piece 276 to each other so as to transmit power received from the power source 254 to both the push-up piece 274 and the receiving piece 276. As illustrated in FIGS. 23, the coupling piece 272 has a region 278 surrounded in a substantially "U"-shape in plan view and opened toward a proximal end side. Further, a support shaft 280 and a gear portion 282 are provided on the proximal end side of the coupling piece 272. The support shaft 280 projects from both sides in the width direction of the coupling piece 272 toward an outside, and is engaged with the shaft engaging portion 262 provided to the main-body portion 252. Thus, the coupling piece 272 is freely turnable about the support shaft 280 with respect to the main-body portion 252. Further, the gear portion 282 is a part including a plurality of teeth formed about an axial center of the support shaft 280.

As illustrated, for example, in FIGS. 22 and 23, the coupling piece 272 includes a receiving-piece coupling portion 284 provided on an opposite side with respect to the proximal end side (free end side). The receiving-piece coupling portion 284 is formed to rise upward on the free end side of the coupling piece 272. Further, a power-source coupling portion 286 is provided on the bottom surface side of the coupling piece 272. The power-source coupling portion 286 has a shaft-like shape, and the engaging portion 268 provided at the leading end of the above-mentioned drive piece 270 of the power source 254 is engaged therewith. Thus, as illustrated in FIGS. 22(a) and 22(b), when the power source 254 is actuated to extend and retract the drive piece 270, the coupling piece 272 turns about the support shaft 262. Further, in accordance therewith, the gear portion 282 turns also about the support shaft 280, and the receiving-piece coupling portion 284 vertically moves. In more detail, when the power source 254 is brought into an energized state so as to bring the drive piece 270 into a retracted state, as illustrated in FIG. 22(b), the coupling piece 272 is pulled by the drive piece 270, and turns downward about the support shaft 280. Reversely, as illustrated in FIG. 22(a), when the power source 254 is brought into a non-energized state so as to bring the drive piece 270 into an extended state, the coupling piece 272 is pushed back by the drive piece 270, and turns upward about the support shaft 280.

As illustrated, for example, in FIGS. 23, the push-up piece 274 is a resin member having a substantially "V"-shaped external shape in front view. A support shaft 290 is provided on one end side (proximal end side) of the push-up piece 274, and a roller 292 is attached to another end side (free end side) thereof so as to be freely rotatable. Further, a gear portion 294 is provided on the proximal end side of the push-up piece 274, and a plurality of teeth are formed along a circular arc about the support shaft 290. The push-up piece 274 is supported to the main-body portion 252 through intermediation of the support shaft 290, and normally, a part on the proximal end side and the roller 292 on the free end side are substantially horizontal to each other. Further, the push-up piece 274 is normally accommodated in the above-mentioned region 278 of the coupling piece 272, which is surrounded in a substantially "U"-shape.

The gear portion 294 provided to the proximal end portion of the push-up piece 274 meshes with the above-mentioned gear portion 282 provided on the coupling piece 272 side. Thus, when the power source 254 is activated to actuate the drive piece 270, power can be transmitted from the coupling piece 272 side to the push-up piece 274 side through intermediation of the gear portions 282 and 294 so that the push-up piece 274 can be turned about the support shaft 290. In more detail, when the drive piece 270 of the power source 254 is retracted, the coupling piece 272 turns downward about the support shaft 280, and in conjunction therewith, the push-up piece 274 turns upward about the support shaft 290. As a result, the free end side is lifted up.

As illustrated in FIGS. 22(a) and 22(b), the receiving piece 276 is slidable in the vertical direction along the groove 266 provided to the main-body portion 252. As illustrated in FIGS. 21 to 23, a roller 296 is attached to an upper end side of the receiving piece 276 so as to be freely rotatable, and a coupling portion 298 is provided to a lower end side thereof. The above-mentioned receiving-piece coupling portion 284 of the coupling piece 272 is engaged with the coupling portion 298.

The discharge regulating means 250 is structured as described above, that is, capable of delivering the medicine boxes MB prepared in the medicine-box path 22 one by one when necessary through energization control on the power source 254. Specifically, the power source 254 of the discharge regulating means 250 is normally in a non-energized state. Thus, as illustrated in FIG. 22(a), the drive piece 270 of the power source 254 is normally in an extended state, and each of the coupling piece 272 and the push-up piece 274 is in a posture substantially horizontal to each other. Further, the receiving piece 276 projects upward from the main-body portion 252. Thus, the receiving piece 276 functions as a stopper, and hence the medicine boxes MB are held in the medicine-box paths 22.

Meanwhile, at the time of delivering the medicine boxes MB, the power source 254 is brought into an energized state. In this way, the drive piece 270 of the power source 254 is retracted as illustrated in FIG. 22(b), and the coupling piece 272 and the push-up piece 274 turn respectively about the support shafts 280 and 290. Specifically, the coupling piece 272 turns about the support shaft 280 in such a manner that the free end side thereof tilts downward. Further, the push-up piece 274 is coupled to the coupling piece 272 through intermediation of the gear portions 282 and 294, and hence the free end side thereof is lifted up in conjunction with turning of the coupling piece 272. In accordance therewith, the medicine box MB existing most on the outlet 22e side in the medicine-box path 22 is pushed up from below by the push-up piece 274. Further, when the coupling piece 272 turns as described above, the receiving piece 276 slides downward along the groove 266 in conjunction therewith. Then, the receiving piece 276 withdraws toward an inside of the main-body portion 252, and the function as the stopper for the medicine boxes MB is cancelled. In this way, the medicine boxes MB pushed up from below by the push-up piece 274 as described above are discharged. At a timing after discharge of one medicine box MB, the power source 254 is brought into a non-energized state again. In this way, each of the coupling piece 272 and the push-up piece 274 forms the posture substantially horizontal to each other again. In conjunction therewith, the receiving piece 276 projects upward from the main-body portion 252, with the result that discharge of the medicine boxes MB is regulated.

Similarly to those of the discharge regulating means 26, the push-up piece 274 and the receiving piece 276 of the above-mentioned discharge regulating means 250 move in association with each other, and at the time of delivering the medicine boxes MB, the push-up piece 274 rises and the receiving piece 276 withdraws into the main-body portion 252. Thus, the medicine box MB existing at a downstream end in the medicine-box path 22 (most on the outlet 22e side) is pushed up by the push-up piece 274, and smoothly discharged from the outlet 22e. At this time, as illustrated in FIG. 22(b), the roller 296 on the receiving piece 276 side and the roller 292 on the push-up piece 274 side come to substantially the same height, and are aligned on a conveying plane P parallel to the bottom surface 22a of the medicine-box path 22. Further, although being horizontally illustrated in FIG. 22(b) for the sake of convenience in description, the bottom surface 22a of the medicine-box path 22 and the conveying plane P are tilted downward by a predetermined angle with a falling gradient toward the outlet 22e side of the medicine-box path 22. Thus, when the medicine boxes MB are pushed up by the push-up piece 274 so as to be delivered, momentum of jumping out toward the outlet 22e side is further increased by rotation of the rollers 292 and 296 into tilt directions of the bottom surface 22a and the conveying plane P. As a result, the medicine boxes MB can be further more reliably and rapidly discharged.

Further, in the discharge regulating means 250, when energization to the power source 254 is stopped, the push-up piece 274 returns to a state of being put down, and the receiving piece 276 projects upward from the main-body portion 252. Thus, through repetition of power on and off with respect to the power source 254, the medicine boxes MB can be reliably delivered one by one.

### <Bounce suppression means>

As described above, when the medicine boxes MB are discharged from the medicine-box paths 22 by being pushed up from the bottom side by the discharge regulating means 26 or the discharge regulating means 250, the medicine boxes MB bounce out. In this context, when the medicine boxes MB bounce high, a distance between the medicine-box passage sensor 104 provided to the discharge regulating means 26 or the discharge regulating means 250 for the purpose of detecting discharge of the medicine boxes MB and each of the medicine box MB greatly increases, which may lead to a risk that the discharged medicine boxes MB cannot be detected. When the discharge of the medicine boxes MB cannot be detected, the following various failures may be caused: a judgment is made that shortage of the medicine boxes MB has occurred; and the number of discharged medicine boxes MB cannot be accurately grasped. As a countermeasure, it is desired that the medicine-box delivering apparatus 10 be provided with bounce suppression means capable of regulating a bounce of the medicine box MB on the outlet 22e side of the medicine-box path 22 within a certain range.

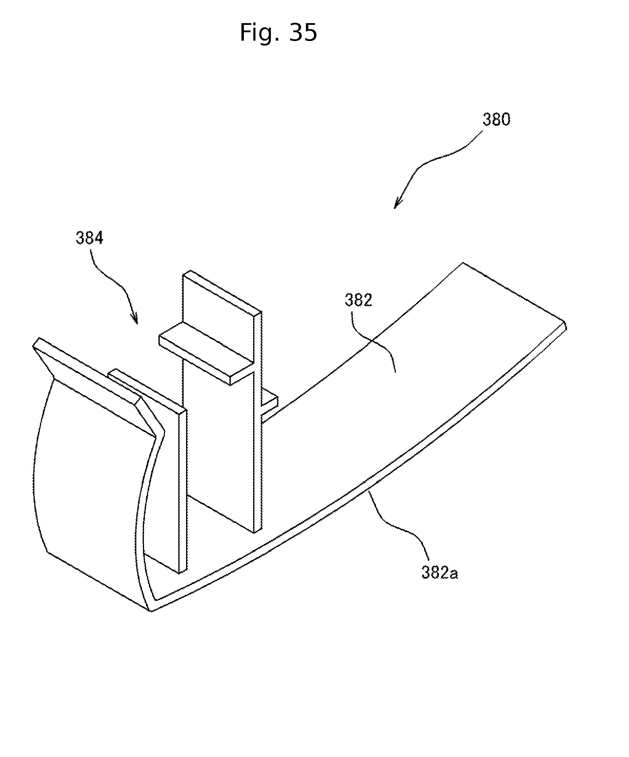

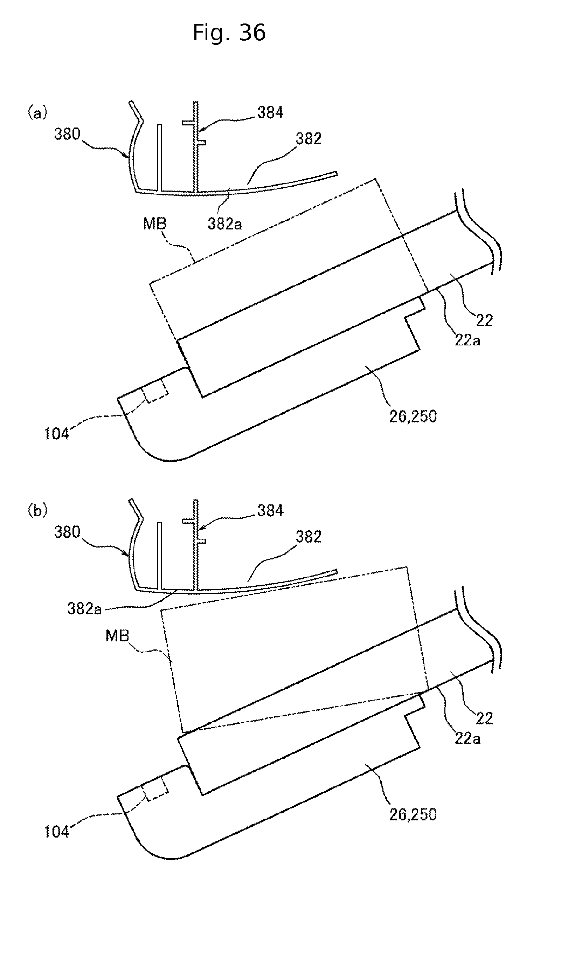

Specifically, it is desired that the medicine-box delivering apparatus 10 be provided with bounce suppression means 380 illustrated, for example, in FIGS. 35 and 36. As illustrated in FIGS. 36, the bounce suppression means 380 is mounted to the top surface side of the medicine-box path 22 (bottom surface side of the medicine-box path 22 positioned thereabove). As illustrated in FIGS. 35 and 36, the bounce suppression means 380 includes a bounce suppression plate 382 and a support portion 384 supporting the same. The bounce suppression plate 382 is a plate body including a curved surface 382a gently curved from one end side to another end side in the longitudinal direction.

The bounce suppression means 380 is obtained by integrating the support portion 384 with the one end side in the longitudinal direction of the bounce suppression plate 382. When the support portion 384 is mounted to another member, the bounce suppression plate 382 can be supported in a cantilever manner. When the support portion 384 of the bounce suppression plate 382 is mounted to the top plate side of the medicine-box path 22 to which the bounce suppression means 380 is to be attached (bottom surface side of the medicine-box path 22 positioned thereabove), the curved surface 382a faces the medicine-box path 22 side, and then is suspended. The curved surface 382 is formed in such a shape that, in comparison with the support portion 384 side, an opposite side with respect to the support portion 384 side (free end side) warps toward the support portion 384 side (upward). The bounce suppression means 380 is mounted in such a posture that the support portion 384 side of the bounce suppression plate 382 corresponds to an opening end side (outlet 22e side) under a state in which the medicine-box path 22 is viewed from the outlet 22e side and the free end side thereof corresponds to an inner end side (inlet 22d side). In this way, as illustrated in FIG. 34(a), a clearance of a size allowing passage of the medicine boxes MB is formed between the curved surface 382 and the bottom surface 22a of the medicine-box path 22.

As illustrated in FIG. 34(b), in the case where the bounce suppression means 380 is installed on the outlet 22e side of the medicine-box path 22, even when being pushed up from the bottom side by the discharge regulating means 26 or the discharge regulating means 250, the medicine boxes MB do not bounce up high owing to regulation by the bounce regulating means 380. As a result, the medicine boxes MB pass within such a range as to be capable of being detected with the medicine-box passage sensor 104. Thus, with the provision of the bounce suppression means 380, the medicine boxes MB to be discharged from the medicine-box path 22 can be further more reliably detected with the medicine-box passage sensor 104.

Although the above-mentioned bounce suppression means 380 may be provided to each of all the medicine-box paths 22, the bounce suppression means 380 may be provided only to ones in which failures due to a bounce at the time of delivery are assumed, such as a medicine-box path 22 in which lightweight medicine boxes MB are to be accommodated. Further, various changes may be made to a size of the bounce suppression means 380, the clearance between the bounce suppression plate 382 and the bottom surface 22a of the medicine-box path 22, a length of the support portion 384, and the like in consideration of, for example, sizes of medicine boxes MB to be treated.

Further, the bounce suppression means 380 may be used together with the above-mentioned opening-height adjustment means 28 (refer to FIG. 10), or may be installed instead of the opening-height adjustment means 28. When the bounce suppression means 380 is used together with the above-mentioned opening-height adjustment means 28, the opening-height adjustment means 28 can be provided mainly for preventing rotation of the medicine boxes MB passing the medicine-box path 22 toward the outlet 22e side and the box jam involved therewith, and the bounce suppression means 380 can be attached mainly for suppressing bounces of the medicine boxes MB. Further, the sizes and arrangement of the opening-height adjustment means 28 and the bounce suppression means 380 can be appropriately adjusted in consideration of the above-mentioned purposes of rotation suppression and bounce suppression. For example, the opening-height adjustment means 28 can be provided at a position on the inlet 22d side so as to be adjacent to the bounce suppression means 380 provided on the outlet 22e side. Further, the bounce suppression means 380 may be integrated with the above-mentioned opening-height adjustment means 28.

### <Spacer for preventing reverse flow of medicine boxes MB>

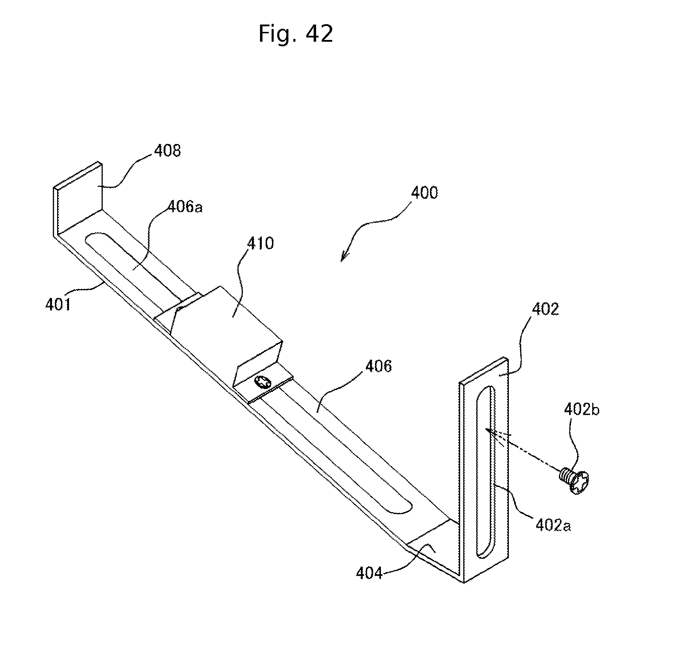

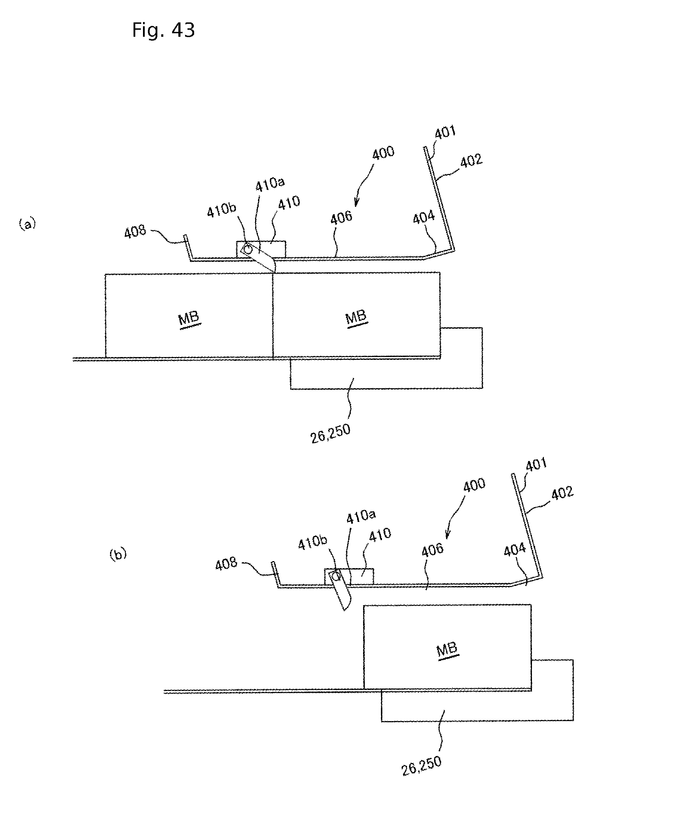

As described above, in the structure in which the medicine boxes MB are discharged from the medicine-box paths 22 by being pushed up from the bottom side by the discharge regulating means 26 or the discharge regulating means 250, when an attempt is made to deliver last one of the medicine boxes MB left in the medicine-box path 22, the last one of the medicine boxes MB may not be properly discharged owing to a bounce to the upstream side or vertically upward. Further, such a phenomenon is liable to be caused especially when the medicine box MB is lightweight or has a square shape in side view. As a countermeasure for preventing failures in delivery of the medicine boxes MB, which are caused by such a phenomenon, a spacer 400 as illustrated in FIG. 42 can be provided to the outlet 22e side in the medicine-box path 22 as illustrated in FIGS. 43.

In more detail, the spacer 400 is obtained by attaching a stopper 410 to a spacer main body 401 formed, for example, through a bending process of a metal plate having a width equal to or smaller than the path width of the medicine-box path 22. As illustrated in FIG. 42, the spacer main body 401 includes a fixation portion 402 extending in the vertical direction, a horizontal portion 404, a parallel portion 406, and a terminal portion 408 which are formed in series in the longitudinal direction. The fixation portion 402 is a part for fixing the spacer 400. Further, the horizontal portion 404 is a part which is continuous with the fixation portion 402 and becomes substantially horizontal when the spacer 400 is fixed. The parallel portion 406 is a part substantially parallel to the bottom surface 22a of the medicine-box path 22 under a state in which the spacer 400 is attached. The terminal portion 408 is a part which is continuous with the parallel portion 406, constitutes a terminal of the spacer main body 401, and rises upward under the state in which the spacer 400 is attached.

More detailed description is made of the spacer 400. The fixation portion 402 is a part capable of adjusting an attachment position of the spacer 400 in the vertical direction. Specifically, the fixation portion 402 is provided with a slit 402a extending in the vertical direction. A part corresponding to from the horizontal portion 404 to the terminal portion 408 is inserted from the terminal portion 408 side into the medicine-box path 22 via the outlet 22e side. When the spacer 400 is fixed on the outlet 22e side with respect to the medicine-box accommodating portion 20 with a fixer 402b such as a screw inserted into the slit 402a, the spacer 400 can be suspended downward from the top surface 22f side of the medicine-box path 22. With fixation in this way, the parallel portion 406 is arranged parallel to the bottom surface 22a on the outlet 22e side of the medicine-box path 22. Further, when the position of fixation with the fixer 402b is appropriately adjusted in the vertical direction in a region in which the slit 402a of the fixation portion 402 is formed, a clearance between the parallel portion 406 and the bottom surface 22a, that is, the opening height at a position on the outlet 22e side of the medicine-box path 22 can be adjusted. Normally, the attachment position of the spacer 400 is adjusted in the vertical direction so that the clearance between the parallel portion 406 and the bottom surface 22a becomes equal to or somewhat higher than the medicine boxes MB to be charged into the medicine-box path 22.

Further, the stopper 410 includes a stopper piece 410a turnably supported about a support shaft 410b on one end side. The stopper 410 is attached so that the support shaft 410b side thereof faces the inlet 22d side (upstream side) of the medicine-box path 22 and the free end side thereof faces the outlet 22e side of the medicine-box path 22. Further, the stopper 410 is attached so that the stopper piece 410a projects downward from a slit 406a formed in a manner of extending in the longitudinal direction in the horizontal portion 404. Thus, under a state in which the stopper piece 410a has projected toward the medicine-box path 22 side (downward), when the medicine boxes MB passing from the inlet 22d side of the medicine-box path 22 press the stopper piece 410a into a direction toward the outlet 22e side, the stopper piece 410a is pushed upward, and the medicine boxes MB are allowed to pass. However, passage in the reverse direction is not allowed. That is, the stopper 410 is capable of exerting a function as reverse-flow preventing means for the medicine boxes MB, which allows passage of the medicine boxes MB in the medicine-box path 22 only in a direction from the inlet 22d side toward the outlet 22e side.

An attachment position of the stopper piece 410a is appropriately adjustable along the slit 406a in the longitudinal direction of the horizontal portion 406. The stopper piece 410a is adjusted in position so as to reach a position apart from the outlet 22e side to the inlet 22d side in the medicine-box path 22 by a length corresponding substantially to one of the medicine boxes MB to be charged into the medicine-box path 22 to which the spacer 400 is attached.

In a case where the spacer 400 is attached as described above, when two or more medicine boxes MB are accommodated in the medicine-box path 22, the stopper piece 410a of the spacer 400 is pushed up by one of the two or more medicine boxes MB, the one corresponding to the second or one of the subsequent medicine boxes accommodated on the upstream side (inlet 22d side) with respect to the outlet 22e side as illustrated in FIG. 43(a). Thus, the medicine boxes MB can smoothly pass the medicine-box path 22 without being hindered.

Meanwhile, when the last one of the medicine boxes MB is left in the medicine-box path 22, as illustrated in FIG. 43(b), the medicine box MB having been pushing up the stopper piece 410a does not exist any longer. Thus, the stopper piece 410a projects downward from the horizontal portion 406. In this context, as described above, the stopper 410 is provided at the position apart from the outlet 22e side in the medicine-box path 22 to the inner end side (inlet 22d side) by the length corresponding substantially to one medicine box MB. Thus, at the time of delivery, even when the last one of the medicine boxes MB left in the medicine-box path 22 should bounce back toward the upstream side of the medicine-box path 22 (inlet 22d side) by the discharge regulating means 26 or the discharge regulating means 250, the last one of the medicine boxes MB cannot bounce back by butting the stopper piece 410a projecting downward (somewhat discharge side), and hence is delivered from the outlet 22e.

In a case where the above-mentioned spacer 400 is attached to the top surface 22f side at the outlet 22e of the medicine-box path 22, even when the last one of the medicine boxes MB is left in the medicine-box path 22, the last one of the medicine boxes MB is not bounced back to the upstream side of the medicine-box path 22 in accordance with the operation of the discharge regulating means 26 or the discharge regulating means 250 and does not merely bounce vertically upward. Thus, the last one of the medicine boxes MB is smoothly discharged from the medicine-box path 22.

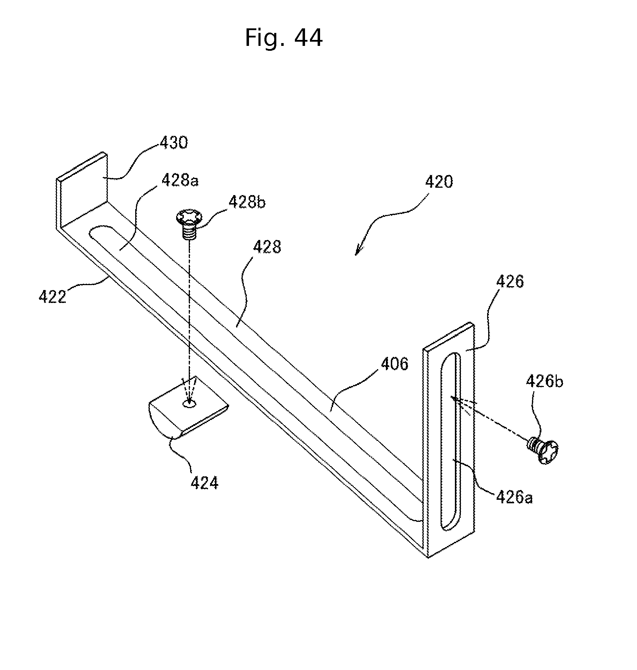

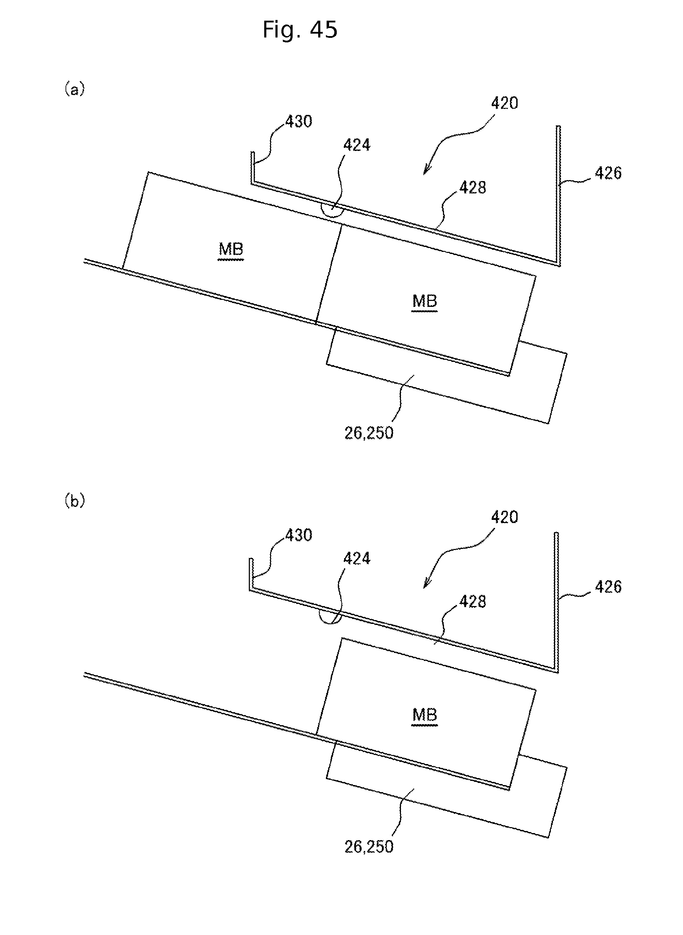

Note that, the above-mentioned spacer 400 is merely an example of the present invention, and hence one having similar functions may be provided instead of the spacer 400. Specifically, for example, a spacer 420 illustrated in FIGS. 44 and 45 may be used instead of the spacer 400. Similarly to the above-mentioned spacer 400, the spacer 420 is obtained by attaching a stopper 424 to a spacer main body 422 formed, for example, through a bending process of a metal plate having a width equal to or smaller than the path width of the medicine-box path 22.

The spacer main body 422 includes a fixation portion 426, a parallel portion 428, and a terminal portion 430. The fixation portion 426, the parallel portion 428, and the terminal portion 430 have structures respectively similar to those of the fixation portion 402, the parallel portion 406, and the terminal portion 408 of the above-mentioned spacer main body 401. Similarly to the above-mentioned spacer main body 401, the spacer main body 422 is inserted from the terminal portion 430 into the medicine-box path 22 via the front surface side (outlet 22e side), and a fixer 426b such as a screw is inserted through a slit 426a provided to the fixation portion 426. In this way, the spacer main body 422 can be fixed.

As illustrated in FIGS. 44 and 45, the stopper 424 is a member having a semi-cylindrical external shape, and is attached to the parallel portion 428 with use of a fixer 428b such as a screw inserted through a slit 428a provided to the parallel portion 428. The stopper 424 is attached to project downward from the parallel portion 428. An attachment portion of the stopper 424 can be appropriately changed in the longitudinal direction of the parallel portion 428. In this case, the stopper 424 is attached to a position apart from the outlet 22e side to the inner end side (inlet 22d side) by the length corresponding substantially to one of the medicine boxes MB to be charged into the medicine-box path 22

The spacer 420 is adjusted in height so that a height of the medicine-box path 22 at the position at which the above-mentioned stopper 424 is provided is slightly higher than the height of the medicine box MB, and then fixed with the fixer 426b. Also in a case where the spacer 420 is attached in this way, when two or more medicine boxes MB are accommodated in the medicine-box path 22, the medicine boxes MB smoothly pass the medicine-box path 22 without being hindered similarly to a case where the spacer 420 is not provided, and then discharged.

Meanwhile, in the case where the last one of the medicine boxes MB is left in the medicine-box path 22, when the last one of the medicine boxes MB is bounced back toward the inlet 22d side in accordance with the operation of the discharge regulating means 26 or the discharge regulating means 250, the last one of the medicine boxes MB collides against the spacer 420, and hence does not move to the inlet 22d side any more. Further, a counteracting force caused by the collision against the spacer 420 causes the last one of the medicine boxes MB to move to the outlet 22e side, and then is discharged. Thus, also when the spacer 420 is provided, similarly to the case where the above-mentioned spacer 400 is provided, the last one of the medicine boxes MB in the medicine-box path 22 is prevented, at the time of delivery, from being bounced back toward the upstream side (inlet 22d side) or merely bouncing vertically upward.

Note that, the above-mentioned spacers 400 and 420 are merely examples of the present invention, and hence the spacer main body 401 of the spacer 400 and the stopper 424 of the spacer 420 may be used in combination with each other.

### <Modified examples of loading unit>

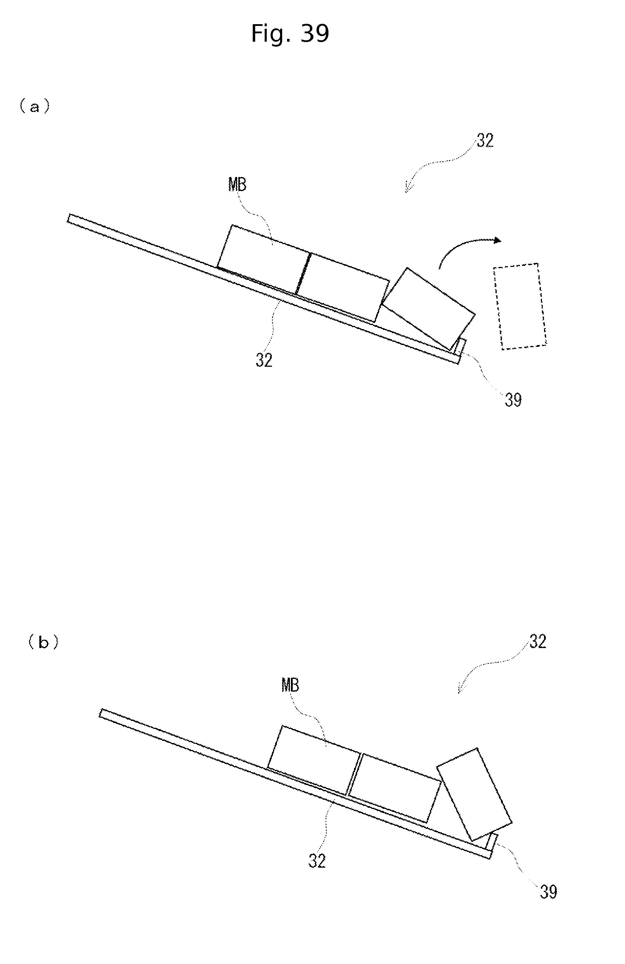

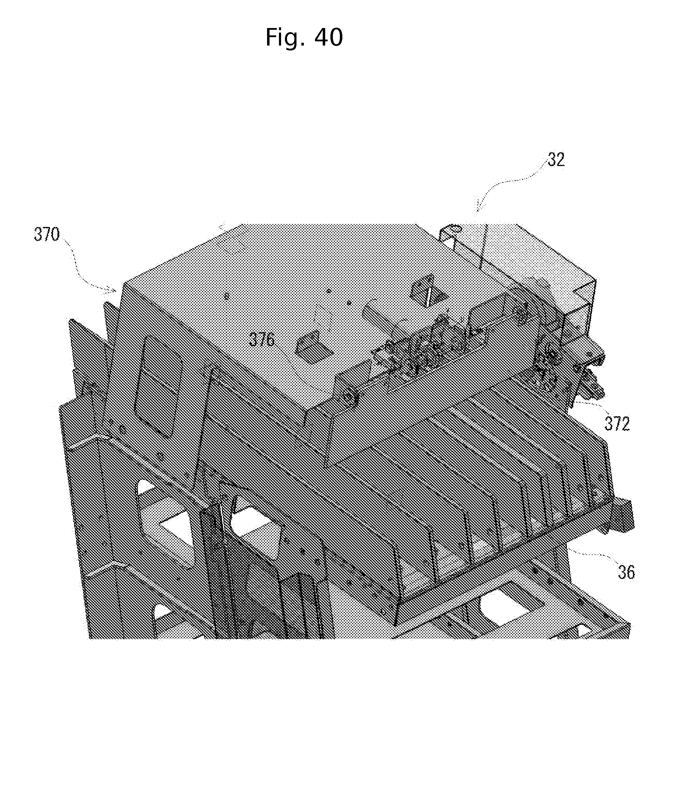

As described above, the loading rack 32 is structured such that the medicine boxes MB prepared in the replenishing rack 62 of the replenishing unit 60 are received at once into the loading paths 36. Thus, there are following risks: as illustrated in FIG. 39(a), the medicine boxes MB having slid down from the replenishing rack 62 side to the loading rack 32 side turn about the stopper 39 provided at a leading end of the loading path 36 with excessive momentum and jump out; and as illustrated in FIG. 39(b), subsequent medicine boxes MB are stuck by a leading medicine box MB which has turned about the stopper 39 and been stuck. Further, there is a tendency that such phenomena are liable to be caused at the time of shifting relatively large medicine boxes MB from the replenishing rack 62 side to the loading rack 32 side. In this context, as a countermeasure taken under assumption of such situations, for example, a jumping-out suppression unit 370 as illustrated in FIG. 40 can be provided.

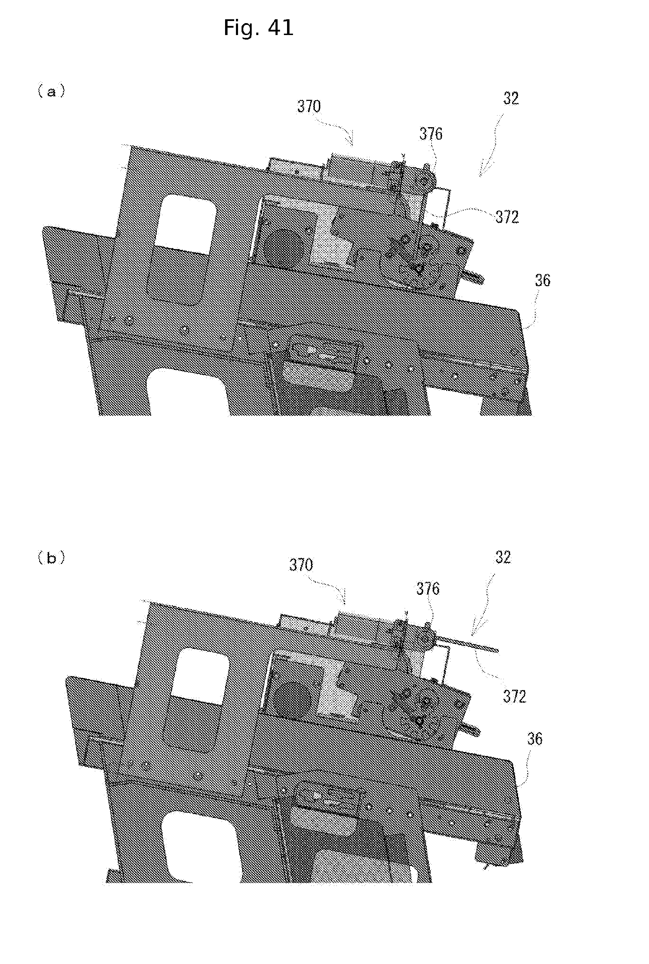

Specifically, as illustrated in FIG. 40, the jumping-out suppression unit 370 includes a jumping-out suppression member 372 provided over intermediate portions in the longitudinal direction of the loading paths 36 of the loading rack 32 and a suppression-member actuating mechanism 374 for actuating the jumping-out suppression member 372. The jumping-out suppression member 372 is a plate-like member, and has a function of hindering passage of the medicine boxes MB in the loading paths 36. The jumping-out suppression member 372 is supported to be turnable about a shaft 376. Normally, the jumping-out suppression member 372 is suspended substantially in the vertical direction as illustrated in FIGS. 40 and 41(a). The jumping-out suppression member 372 can be turned about the shaft 376 through actuation of the suppression-member actuating mechanism 374, and then the free end side thereof can be lifted up as illustrated in FIG. 41(b). When the free end of the jumping-out suppression member 372 is lifted up, the medicine boxes MB put into the loading paths 36 becomes movable to the position of the stopper 39.

When the jumping-out suppression unit 370 is provided, the medicine box MB having moved from the replenishing rack 60 side to the loading rack 32 side first abuts against the suspended jumping-out suppression member 372, and then is stemmed. With this, the momentum of the medicine boxes MB having slid down from the replenishing rack 60 side is suppressed. After that, when the free end side of the jumping-out suppression member 372 is lifted up, the medicine box MB gently reach the stopper 39 provided on the leading end side of each of the loading paths 36 provided in the loading rack 32, and then rests thereat. That is, when the jumping-out suppression unit 370 is provided, a gliding speed of the medicine box MB passing the loading path 36 can be reduced at or below the intermediate portion of the loading path 36. Thus, when the jumping-out suppression unit 370 is provided, the following failures are prevented from occurring: the medicine box MB turns on the leading end side of the loading path 36 with excessive momentum and then is stuck or jumps out.

Note that, in the example illustrated in FIGS. 40 and 41, a structure is illustrated as an example in which the jumping-out suppression unit 370 is provided only over the loading paths 36 positioned on the uppermost stage of the loading rack 32, but the present invention is not limited thereto. For example, the jumping-out suppression unit 370 may be provided over the loading paths 36 on lower stages. Note that, as described above, there is a tendency that, in comparison with a case where small medicine boxes MB are treated, the failures caused by jump-out and turning of the medicine box MB as illustrated in FIGS. 39 are liable to occur in the case where large medicine boxes MB are treated. Thus, it is desired that the jumping-out suppression unit 370 be attached preferentially to the loading paths 36 for treating the large medicine boxes MB.

The above-mentioned jumping-out suppression unit 370 is merely an example of a structure for overcoming the failures caused by jump-out and turning of the medicine box MB as illustrated in FIGS. 39, and hence other structures may be employed. The jumping-out suppression member 372 of the above-mentioned jumping-out suppression unit 370 crosses all the loading paths 36 positioned on the uppermost stage of the loading rack 32, but the present invention is not limited thereto. For example, the jumping-out suppression member 372 may cross only some of the loading paths 36, or the jumping-out suppression member 372, which is independently operable, may be provided to each of the loading paths 36.

### <Modified examples of structure of apparatus>

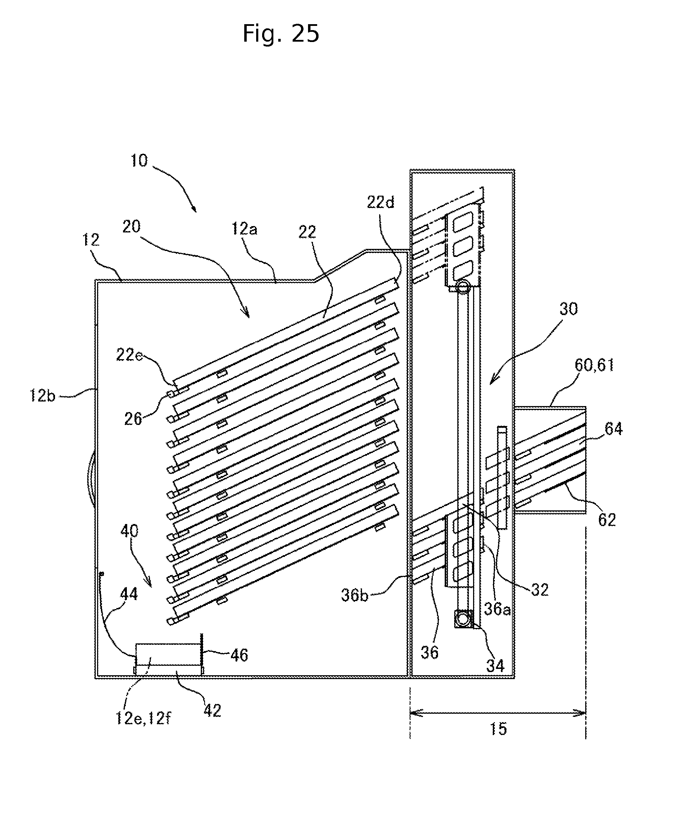

As described above in this embodiment, the medicine-box delivering apparatus 10 has a form in which the replenishing unit 60 is independent of the casing 12 constituting the apparatus main body, but the present invention is not limited thereto. For example, as illustrated in FIGS. 24 and 25, a unit corresponding to the replenishing unit 60 may be integrally provided on the rear surface side of the casing 12. Further, as illustrated in FIG. 24, when a plurality of units each corresponding to the replenishing unit 60 are provided (two in the example illustrated in FIG. 24), the medicine boxes MB can be more efficiently prepared.

As described above, when the unit corresponding to the replenishing unit 60 is integrated with the casing 12 of the medicine-box delivering apparatus 10, the loading unit 30 and the replenishing unit 60 function as means (medicine-box preparation portion 15) for preparing, in a phase preceding loading of the medicine boxes MB into the medicine-box path 22 provided in the medicine-box accommodating portion 20, the medicine boxes MB to be loaded. When such a structure is employed, it is desired that medicine boxes MB having been erroneously charged into the plurality of replenishing paths 64 provided to the replenishing unit 60 be easily collected.

Specifically, as illustrated in FIG. 26, when the medicine-box collection means 230 is provided for collecting the medicine boxes MB erroneously replenished into the loading paths 36 provided to the loading unit 30, it is possible to employ a structure in which, when the medicine boxes MB are erroneously charged from the replenishing unit 60, the medicine boxes MB erroneously charged are collected by the medicine-box collection means 230 after being received once on the loading unit 30 side. Alternatively, it is also possible to employ a structure in which, at a position capable of collecting the medicine boxes MB directly from the replenishing unit 60, the medicine-box collection means 230 constituted by a box or a bag is provided for collection of the medicine boxes MB.

### <Modified example of replenishing unit 60>

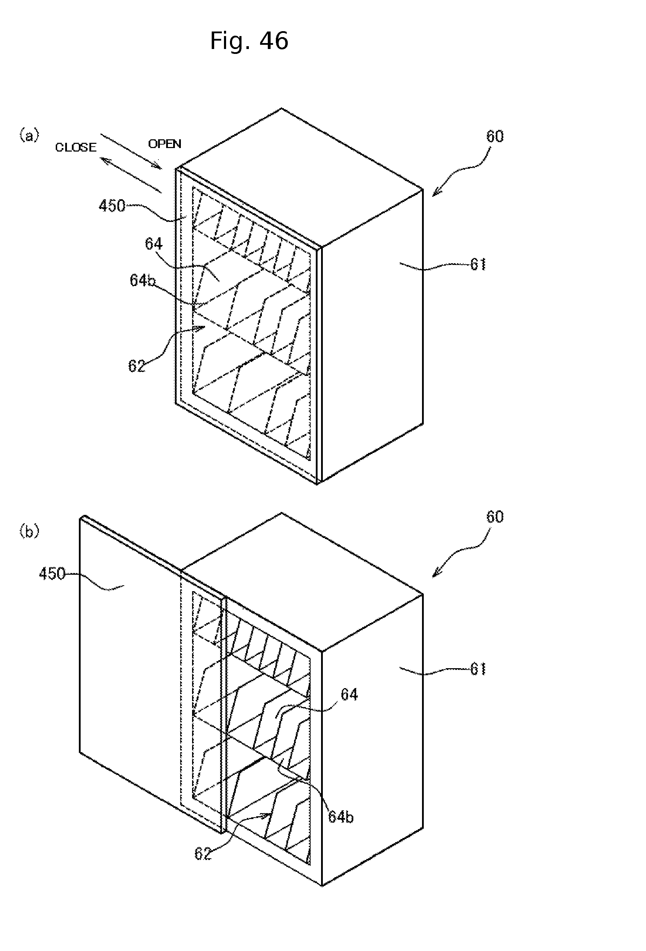

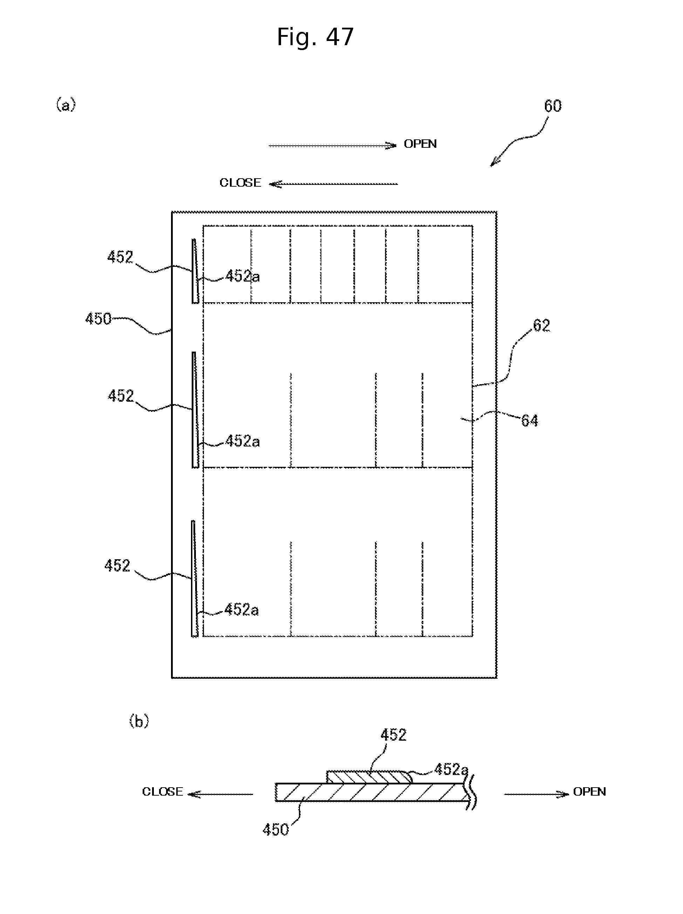

As described above, the replenishing unit 60 is capable of discharging, by free-fall, the medicine boxes MB prepared in the replenishing paths 64 through disengagement of the stoppers 64c provided on the discharge port 64b side of the replenishing rack 62 provided in the replenishing-unit main body 61. However, the present invention is not limited thereto. Instead of providing the stopper 64c, a plate-like shutter 450 may be provided on the discharge port 64b side as illustrated in FIGS. 46 and 47. When the shutter 450 is provided, the discharge ports 64b are opened by opening the shutter 450 by sliding into a transverse direction (width direction). As a result, the medicine boxes MB prepared in the replenishing paths 64 can be discharged at once by free-fall.

Further, when the shutter 450 as described above is provided, it is desired that abutment pieces 452 as illustrated in FIGS. 47 be provided on a rear surface of the shutter 450, that is, a surface facing the medicine-box-MB side prepared in the replenishing paths 64. In more detail, in the replenishing rack 62, the replenishing-path groups each formed of the plurality of replenishing paths 64 arrayed in the lateral direction (width direction) are arranged over the plurality of stages in the vertical direction. The abutment pieces 452 are provided at heights corresponding to the respective replenishing-path groups arrayed in the vertical direction on the rear surface side of the shutter 450. In this embodiment, in the replenishing rack 62, the replenishing-path groups are provided over three stages in the vertical direction, and correspondingly thereto, three abutment pieces 452 are provided in the vertical direction. Further, each of the abutment pieces 452 is provided at a position most on the terminal side with respect to a traveling direction of the shutter 450 at the time of opening. In the example illustrated in FIG. 47(a), the shutter 450 is opened by being slid to the right in front view of the rear side of the shutter 450. Thus, the three abutment pieces 452 are arrayed along a left end side of the shutter 450 in the vertical direction.

The abutment piece 452 has an elongated shape in the vertical direction in front view of the shutter 450 from the rear side. Further, the abutment piece 452 has a trapezoidal or triangular shape in front view. The abutment piece 452 is longer on a lower end side than an upper end side, and has a shape of swelling in the traveling direction of the shutter 450. Specifically, in the example illustrated in FIGS. 47, the abutment piece 452 swells to the right. The abutment piece 452 is positioned and arranged so that a lower end portion thereof reaches a vicinity of a bottom surface of each of the replenishing paths 64 constituting the above-mentioned replenishing-path group. Further, the abutment piece 452 projects to the replenishing path 64 side to such an extent as to be capable of coming in contact with the medicine box MB most on the discharge port 64b side of each of the replenishing paths 64 when the shutter 450 is opened. Further, as illustrated in FIG. 47(b), the abutment piece 452 is formed (chamfered) so that a part on a side of the traveling direction at the time of opening the shutter 450 (open-side inclined surface 452a) has a substantially round shape in cross-section.

When the shutter 450 is provided with the abutment pieces 452 as described above, as the shutter 450 is opened, each of the abutment pieces 452 comes in contact sequentially with medicine boxes MB prepared on a top side (discharge port 64b side) of each of the replenishing paths 64. The abutment piece 452 has a shape longer on the lower end side than the upper end side, and hence comes into contact first with a part of the medicine box MB, the part being on a bottom surface side of the replenishing path 64. As a result, the end portion of the medicine box MB is somewhat lifted up. Further, as described above, the open-side inclined surface 452a of the abutment piece 452 is curved in a substantially round shape. Thus, when the abutment piece 452 abuts against the medicine box MB, the above-mentioned phenomenon that the end portion of the medicine box MB is lifted up is smoothly caused. When the end portion of the medicine box MB is lifted up, the medicine box MB is given a momentum to glide down the replenishing path 64. That is, the abutment piece 452 is capable of positively give the medicine box MB the momentum to glide down by somewhat lifting up the end portion of the medicine box MB. Thus, when the shutter 450 is opened, the medicine box MB can be smoothly discharged onto the loading unit 30 side.

### <Management system>

The medicine-box delivering apparatus 10 according to this embodiment is desired to employ a management system capable of collectively managing tasks such as a loading task, the delivery task, and a stock management task for the medicine boxes MB. Specifically, the medicine-box delivering apparatus 10 is desired to include a management system capable of collectively managing various tasks such as the loading task with use of the control device 70 constituted by, for example, a personal computer. An example of the management system that can be employed in the medicine-box delivering apparatus 10 is illustrated below.

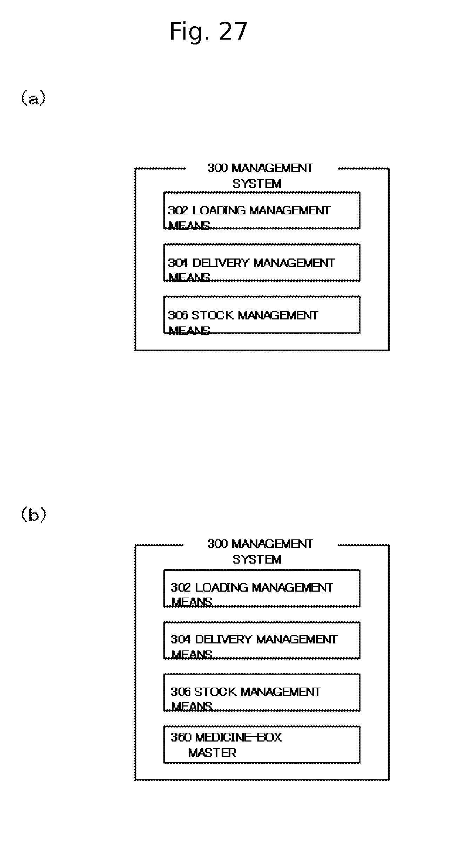

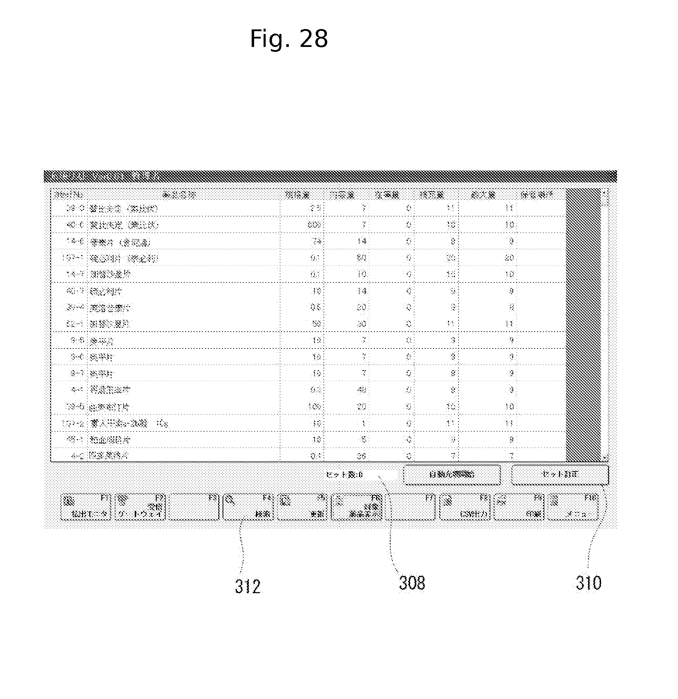

As illustrated in FIG. 27(a), a management system 300 includes loading management means 302, delivery management means 304, and stock management means 306. The loading management means 302 is means for managing the loading task for loading the medicine boxes MB into the medicine-box accommodating portion 20 with use of the replenishing unit 60. Specifically, when the loading task is performed with use of the management system 300, a user interface as illustrated in FIG. 28 (hereinafter, also referred to as "basic interface") is displayed on the indicator 74 of the control device 70 so that information pieces of the medicine boxes MB to be loaded are viewable as a list. More specifically, the following are displayed on the basic interface: names of medicines accommodated in the medicine boxes MB to be loaded; numbers of the medicine-box paths 22 (cassette No.); standard amounts; standard units; loaded numbers of the medicines; stock amounts in the medicine-box paths 22; the maximum numbers of medicine boxes that can be loaded in the medicine-box paths 22 (maximum stock numbers); and storage locations of the medicine boxes MB.

Further, the basic interface is provided with a set-number display portion 308. On the set-number display portion 308, the number of medicine boxes MB prepared in the medicine preparation portion 15 is displayed as a set number. Specifically, when the replenishing unit 60 is provided separately from the casing 12 as in the medicine-box delivering apparatus 10 illustrated, for example, in FIGS. 1 and 2, the number of medicine boxes MB replenished in the loading unit 30 is displayed as the set number. Further, when the replenishing unit 60 is provided integrally with the casing 12 as in the medicine-box delivering apparatus 10 illustrated in FIGS. 24 and 25, the number of medicine boxes MB charged in the replenishing unit 60 is displayed as the set number.

By the way, in some cases, the number displayed as the set number of the medicine boxes MB as described above may be different from the number of the medicine boxes MB actually prepared for loading with respect to the medicine-box accommodating portion 20. In this context, assuming such a situation, the set number can be changed when a set correction button 310 displayed on the basic interface illustrated in FIG. 28 is selected.

With the loading management means 302, it is possible to search for medicine information pieces, specifically, medicine names and medicine numbers of the medicine boxes MB prepared in the medicine preparation portion 15 for the loading task. The medicine information pieces can be searched for also by inputting the medicine names into an interface (not shown) additionally displayed by selecting a search button 312 provided to the basic interface illustrated in FIG. 28. In this context, when the medicine boxes MB are recognized with the medicine-box recognition means 72 including a bar-code reader, the information pieces of the medicines accommodated in the medicine boxes MB are selected from a medicine-name database (not shown) separately prepared.

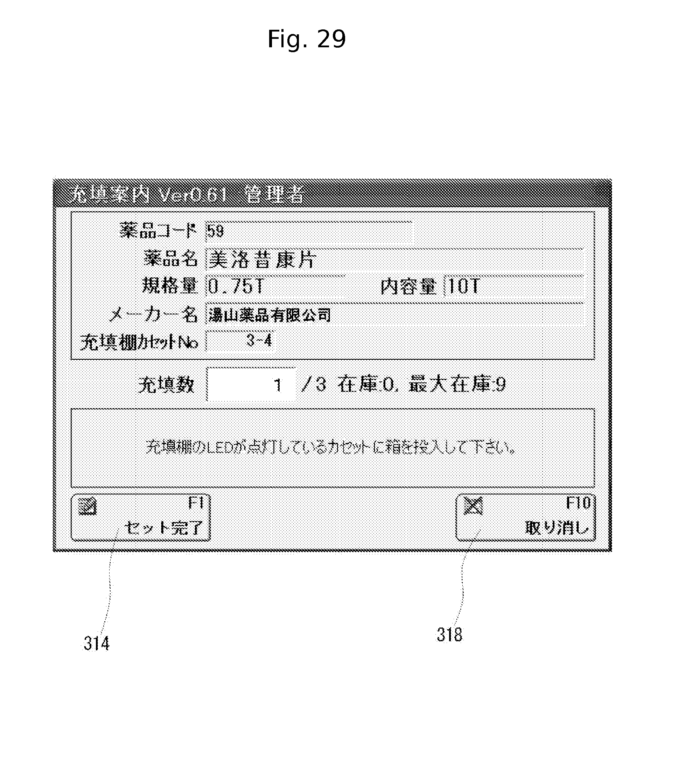

As described above, after the medicine information pieces are searched for and medicines accommodated in the medicine boxes MB to be loaded by the loading task are specified, an interface as illustrated in FIG. 29 (hereinafter, also referred to as "charging guide interface") is displayed. The charging guide interface displays the following: medicine information pieces such as the name of the medicine accommodated in the medicine boxes MB to be charged into the replenishing unit 60 and the standard; and information pieces such as the number of the medicine boxes MB to be charged into the replenishing unit 60. Further, instructions as to which of the replenishing paths 64 of the replenishing unit 60 the medicine boxes MB are to be charged into are issued by a light emitting diode and the like.

Detailed description is made of the charging guide interface. The maximum number of the medicine boxes MB to be charged (hereinafter, also referred to as "charging-object medicine boxes" MB) that can be stocked in the medicine-box path 22 prepared in the medicine-box accommodating portion 20 is displayed as the "maximum stock number" (nine in the example of FIG. 29). Further, the current stock number of the charging-object medicine boxes MB in the medicine-box path 22 is displayed as "stock" (zero in the example of FIG. 29). Still further, the number of the charging-object medicine boxes MB that can be prepared in the replenishing path 64 in the charging unit 60 (hereinafter, also referred to as "preparable number" CP) and the number of the charging-object medicine boxes MB having already been prepared in the replenishing path 64 (hereinafter, also referred to as "preparation completion number" PP) are displayed in a form of PP/CP in a field of "charging number" (in the example of FIG. 29, the preparable number CP is three, and the preparation completion number PP is one).

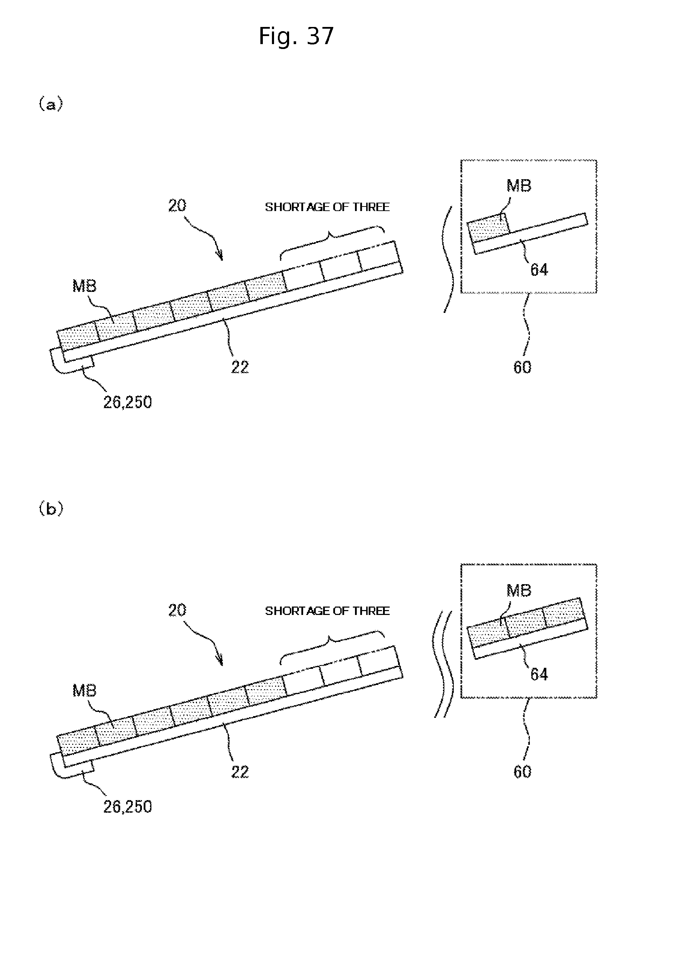

Detailed description is made by way of a specific example. For example, as illustrated in FIGS. 37, when the maximum stock number of the charging-object medicine boxes MB is nine and the stock number is six, only another three charging-object medicine boxes MB can be replenished into the medicine-box path 22. Thus, in this case, it is displayed as in FIG. 29 that the preparable number CP of the charging unit 60 is three, and hence putting-in of the charging-object medicine boxes MB into the charging unit 60 is required to be regulated at a time point at which the preparation completion number PP reaches three as a maximum number (time point of FIG. 37(a)).
Thus, in this embodiment, when such a state is reached, instructions for replenishment of the charging-object medicine boxes MB into the replenishing path 64 is stopped, the instructions having been issued by the light emitting diode and the like. Further, simultaneously therewith, subsequent medicines to be charged may be displayed on the screen.

Further, it is assumed a case where medicine boxes MB have been erroneously replenished into the replenishing path 64 under the state in which the putting-in of the charging-object medicine boxes MB as described above is required to be regulated, that is, a case where the charging-object medicine boxes MB more than a shortage number in the medicine-box path 22 have been prepared in the charging unit 60. Specifically, the following case corresponds to the above-mentioned assumed case: the preparation completion number PP is four despite a state in which only another three charging-object medicine boxes MB can be replenished into the medicine-box path 22 as illustrated in FIG. 37(b). In such a case, when the charging unit 60 is actuated in this state, some medicine boxes MB cannot be accommodated in the medicine-box path 22, and failures such as jam of the medicine boxes MB may occur. As a countermeasure, when medicine boxes MB are additionally replenished after the state is reached in which the putting-in of the charging-object medicine boxes MB is required to be regulated, it is notified that the charging-object medicine boxes MB are excessively prepared in the charging unit 60. Further, when means capable of collecting the medicine boxes MB from the charging unit 60, such as the above-mentioned medicine-box collection means 230, is provided, the medicine boxes MB having already been prepared in the charging unit 60 can be collected, and the failures such as jam of the medicine boxes MB are prevented from occurring in advance.

As described above, after the medicine boxes MB have been prepared in the replenishing unit 60 by charging medicines specified through intermediation of the charging guide interface into the replenishing paths 64 specified by the light emitting diode, when a setting completion button 314 displayed on the charging guide interface is selected, the display on the indicator 74 is switched to the basic interface of FIG. 28. Specifically, under the state in which up to n medicine boxes MB can be put into the replenishing path 64, even at a time point at which the number of medicine boxes MB having been put in is less than n, the basic interface is displayed on the indicator 74 by selecting the setting completion button 314. When an automatic-charge start button 316 is selected through intermediation of the basic interface, the medicine boxes MB are replenished from the replenishing unit 60 into the loading unit 30, and then loaded from the loading unit 30 into the medicine-box paths 22.

Meanwhile, when the medicine boxes MB are erroneously charged in the medicine preparation portion 15, specifically, when the medicine boxes MB are confirmed to have been put in other replenishing paths 64 than those specified, through intermediation of the above-mentioned charging guide interface, as the replenishing paths 64 into which the medicine boxes MB are to be charged, or when the medicine boxes MB are confirmed to have been put in at a time point at which the charging paths 64 into which the medicine boxes MB are to be charged have not yet been specified, messages of the confirmations are displayed on the charging guide interface. Further, in this state, the automatic-charge start button 316 cannot be selected. In this state, when a cancel button 318 displayed on the charging guide interface illustrated in FIG. 29 is selected, the medicine boxes MB are collected from the medicine preparation portion 15.

Specifically, when the medicine-box collection means 230 as illustrated in FIG. 26 is provided, the medicine boxes MB erroneously prepared in the medicine-box preparation portion 15 are collected into the collection box 234 via the shooter 232 without being loaded into the medicine-box accommodating portion 20. In this context, when the loading unit 60 is independent of the casing 12 of the medicine-box delivering apparatus 10 (refer, for example, to FIGS. 1 and 2), the stopper 39 provided on the loading outlet 36a side of the loading path 36 is disengaged for the purpose of collecting the medicine boxes MB prepared in the loading unit 30. In this way, the medicine boxes MB erroneously charged are discharged and collected. Further, as illustrated in FIGS. 24 and 25, when units corresponding to the loading units 60 are integrated with the casing 12, the stopper 64c provided at the end portion on the discharge port 64b side of each of the replenishing paths 64 is disengaged, and the medicine boxes MB are once loaded into the loading unit 30. After that, the loading unit moves to a position of the medicine-box collection means, and then the stopper 36c provided at an end portion on a discharge port 36b of the replenishing path 36 in which the medicines to be collected are accommodated is disengaged. In this way, the medicine boxes MB erroneously charged are collected with the medicine-box collection means 230.

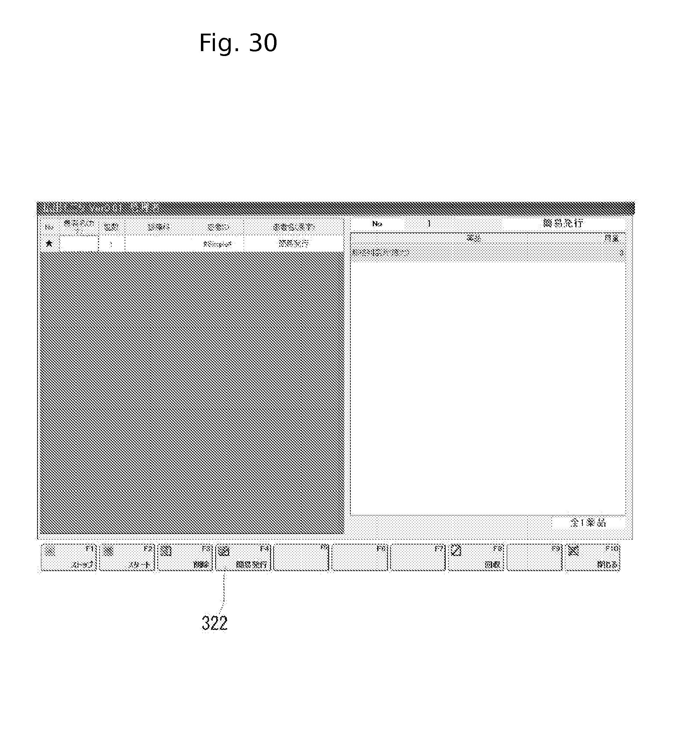

The delivery management means 304 is provided to manage a delivery condition of the medicine boxes MB. When the delivery management means 304 is actuated, an interface as illustrated in FIG. 30 (hereinafter, also referred to as "delivery management interface") is displayed. The delivery management interface displays the following: information pieces of prescription during the delivery task, more specifically, information pieces of prescription numbers, patients' IDs, patients' names, hospital wards, and clinical departments, and the like.

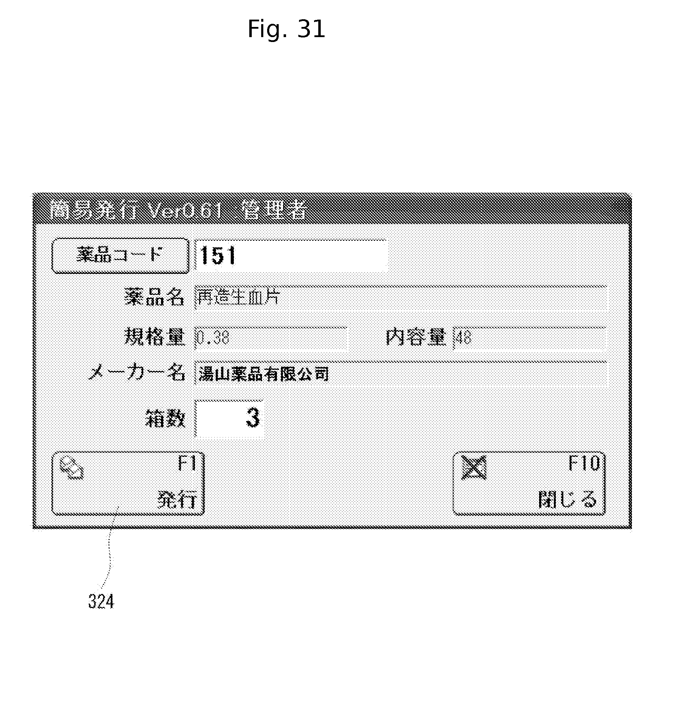

Further, irrespective of prescription data, an operation of delivering a required number of desired medicine boxes MB (hereinafter, also referred to as "simple-issuance operation") can be performed. The simple-issuance operation is performed when a simple-issuance button 322 displayed on the delivery management interface illustrated in FIG. 30 is selected. When the simple-issuance button 322 is selected, an interface as illustrated in FIG. 31 (hereinafter, also referred to as "simple-issuance interface") is displayed. When the names of medicines accommodated in the medicine boxes MB to be delivered and the number of the medicine boxes MB are input to the simple-issuance interface and then an issuance button 324 is selected, the specified medicine boxes MB are delivered by the specified number from the medicine-box accommodating portion 20. Further, when the simple-issuance operation is performed, letters, graphics, symbols, and the like indicating simple-issuance prescription are printed onto a sheet indicating prescription information pieces to be printed by the journal printer 58a when the medicine boxes MB are delivered from the supply unit 50.

The stock management means 306 is provided to perform the stock management task for the medicine boxes MB in the medicine-box accommodating portion 20. When the stock management task is performed, the stock management means 306 issues actuation commands to the devices provided to confirm stock, such as the distance-measuring sensor 106 and the jam clearing means 200 described above. The stock management means 306 is capable of grasping actual stock based on the detection results from the distance-measuring sensor 106 and the jam clearing means 200.

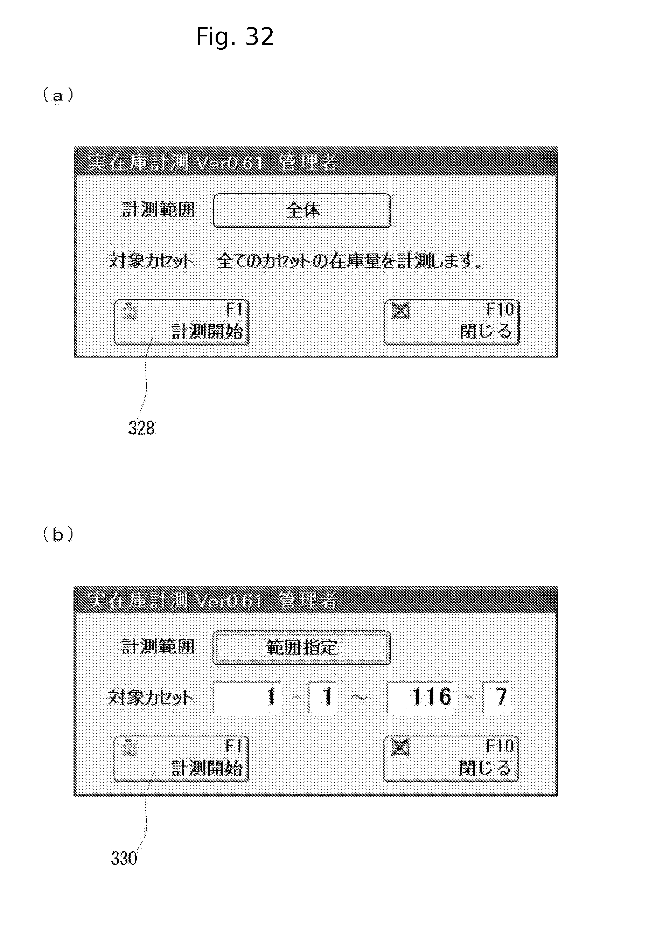

In the stock management task, it is possible to selectively perform confirmation of actual stock conditions with respect to all the medicine-box paths 22 existing in the medicine-box accommodating portion 20 (hereinafter, also referred to as "entire actual-stock confirmation operation") or confirmation of actual stock conditions with respect to some of the medicine-box paths 22 (hereinafter, also referred to as "partial actual-stock confirmation operation"). When the entire actual-stock confirmation operation is selected, an interface as illustrated in FIG. 32(a) (hereinafter, also referred to as "entire actual-stock calculation interface") is displayed on the indicator 74. When a calculation start button 328 displayed on the entire actual-stock calculation interface is selected, the entire actual-stock confirmation operation is performed. Further, when a range specification button 332 is selected, an interface as illustrated in FIG. 32(b) (hereinafter, also referred to as "partial actual-stock calculation interface") is displayed on the indicator 74. When a range of the medicine-box paths 22 as objects of actual-stock confirmation of the medicine boxes MB is specified through intermediation of the partial actual-stock calculation interface and then a calculation start button 330 displayed thereon is selected, the partial actual-stock confirmation operation is performed.

In this embodiment, a stock amount of the medicine boxes MB can be managed with the above-mentioned stock management means 306 and the like. Despite the management, when errors in delivery of the medicine boxes MB occur owing, for example, to jam of the medicine boxes MB in the medicine-box path 22, values of the theoretical stock number NR may be incorrect. Thus, when the errors in delivery of the medicine boxes MB occur in the medicine-box path 22, it is desired that measurements with the distance-measuring sensor 106 be performed on corresponding ones of the medicine-box paths 22 at appropriate timings such as a timing after completion of the charging operation of the medicine boxes MB, and the theoretical stock number NR be updated with the stock number obtained based on the detection results.

### <Medicine-box master>

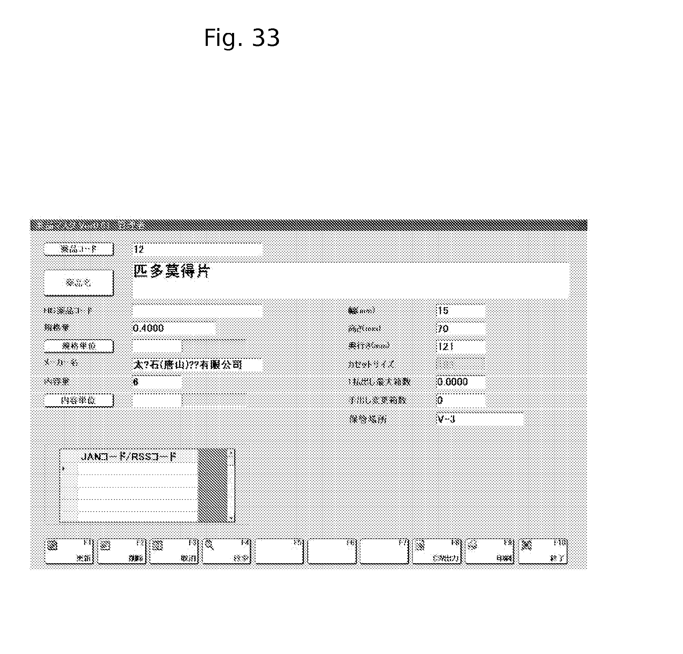

As illustrated in FIG. 27(b), the management system 300 may establish a medicine-box master 360 so that the management can be performed thereby. Specifically, the medicine-box master 360 can be established by aggregated data of the medicine boxes MB to be treated in the medicine-box delivering apparatus 10, and include information pieces of the medicines, such as medicine names, medicine codes, standard amounts, standard units, manufacturers' names, and contents, and information pieces of sizes (widths, heights, depths, and the like of the medicine boxes MB) and storage locations of the medicine boxes MB. The management system 300 is capable of displaying the information pieces of the medicine-box master 360 on the indicator 74 in a form of an interface as illustrated in FIG. 33 (hereinafter, also referred to as "medicine-box master interface").

The management system 300 can be used for determining, at the time of initial setting of the actuation conditions of the medicine-box delivering apparatus 10, arrangement of the medicine boxes MB based on the information pieces of the sizes of the medicine boxes MB (widths, heights, depths, and the like) recorded in the medicine-box master 360 so that the medicine boxes MB are accommodated in an optimum condition in the medicine-box delivering apparatus 10. Further, the medicine master 360 is capable of specifying types of the medicine boxes MB or searching for the same in a smaller range, for example, by recognizing images of external shapes of the medicine boxes MB or inputting the sizes of the medicine boxes MB. Thus, types of medicine boxes MB free from identification marks such as a bar-code can be specified based, for example, on the sizes of the medicine boxes MB or information pieces printed on the medicine boxes MB. As a result, the management operation of the medicine boxes MB can be further more easily and appropriately performed.

When the medicine boxes MB are stored in predetermined units in a storage location such as a storage, specifically, in a state of being packed in units of dozens, cartons, or the like, in some cases, the number of medicine boxes MB to be delivered as one prescription may be larger than the number of medicine boxes MB packed in the above-mentioned units. In such a case, it may be possible to further more smoothly perform the delivery task for the medicine boxes MB by performing, rather than delivery of all the medicine boxes MB with the medicine-box delivering apparatus 10, an operation of taking out the medicine boxes MB packed in units from the storage location (hereinafter, also referred to as "manual delivery operation") and then delivering fractional medicine boxes MB with the medicine-box delivering apparatus 10 except those delivered by the manual delivery operation. Further, as described above, when the manual delivery operation and the delivery of the medicine boxes MB with the medicine-box delivering apparatus 10 are used together, the stock of the medicine boxes MB may be prevented from being abruptly reduced from the medicine-box accommodating portion 20, and it may be possible to suppress to a minimum time and effort required for stock management in the medicine-box delivering apparatus 10 and replenishment of the medicine boxes MB into the medicine-box accommodating portion 20.

In order to cope with the delivery form as described above, the medicine master 360 is desired to contain information pieces which indicate that in how many units the medicine boxes MB are stored (hereinafter, also referred to as "manually-changed box number") (refer to FIG. 33). Further, in a case where such a configuration is employed, when the medicine boxes MB more than the manually-changed box number, that is, the fractional medicine boxes MB except those delivered by the manual delivery operation are delivered with the medicine-box delivering apparatus 10, it is desired that notification of the number of the medicine boxes MB to be taken out by an operator from the storage and the like be printed on journal sheets by the journal printer 58a or be separately displayed on the indicator 74.

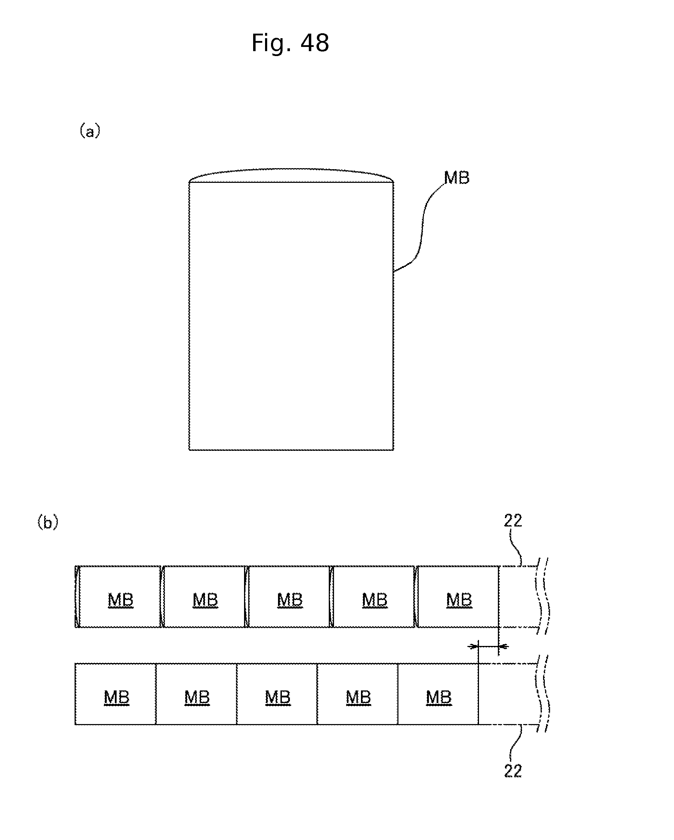

As described above, the medicine-box master 360 can be established by the aggregated information pieces of the widths, the heights, and the depths of the medicine boxes MB. In this context, the sizes of the medicine boxes MB may slightly vary from each other depending on tightness of closing lids of the boxes. Specifically, as illustrated in FIG. 48(a), the lids of the medicine boxes MB may swell in some cases. Although such errors in size of the medicine boxes MB derived, for example, from swelling of the lids may be minute on a one-by-one basis, the errors may be significant as a whole when the large number of medicine boxes are arrayed and arranged in the medicine-box path 22 and the like (refer to FIG. 48(b)). Further, as described above, when the stock management and the like are performed based on the data of the sizes of the medicine boxes MB, there is a risk that the stock number is erroneously recognized. Thus, it is desired that minute errors in size of the medicine boxes MB as described above be suppressed as much as possible.

In order to solve such problems, the medicine-box master 360 may be established by actual sizes of the medicine boxes MB, which are obtained, for example, by the following method. Specifically, after n medicine boxes MB (n = natural number) are charged into the medicine-box path 22, measurement with the distance-measuring sensor 106 is performed on the medicine-box path 22. In this way, a length corresponding to the n medicine boxes MB is obtained. After that, a value obtained by dividing the length corresponding to the n medicine boxes MB by the number n is defined as a length corresponding to one medicine box MB, and then is registered into the medicine-box master 360. With the medicine-box master 360 established in this way, the stock management and the like of the medicine boxes MB can be easily and accurately performed while reflecting the actual sizes of the medicine boxes MB.

### <Separate prescription>

The medicine-box delivering apparatus 10 is also capable of supplying the medicine boxes MB by a method of supplying the medicine boxes MB corresponding to one prescription in a plurality of separated times from the supply unit 50 (hereinafter, also referred to as "separate prescription"). In more detail, a delivery capacity that can be exerted by the medicine-box delivering apparatus 10 in a single delivery operation is registered as a maximum delivery number into the medicine-box master 360 based on the number of medicine boxes MB, and based on a balance between the maximum delivery number (displayed as "single-delivery maximum box number" in FIG. 33) and the number of medicine boxes MB to be prescribed, a judgment can be made by the control device 70 as to whether or not the separated prescription is performed. The above-mentioned maximum delivery number can be defined depending on the types of the medicine boxes MB.

Specifically, for example, in a case where a maximum delivery number of medicine boxes MBα each accommodating a medicine α is set to ten, when fifteen medicine boxes MBα are prescribed, the control device 70 determines to separately deliver ten medicine boxes MBα and five medicine boxes MBα. The medicine-box delivering apparatus 10 is actuated based on the determination.

Alternatively, for example, in a case where the maximum delivery number of the medicine boxes MBα is set to ten and a maximum delivery number of medicine boxes MBβ each accommodating a medicine β is set to five, when five medicine boxes MBα and seven medicine boxes MBβ are prescribed as one prescription, 50% of the delivery capacity that can be exerted at once by the medicine-box delivering apparatus 10 is used for delivering the five medicine boxes MBα, and hence the other 50% of the delivery capacity can be spared for delivering the medicine boxes MBβ. Thus, the number of the medicine boxes MBβ that can be delivered together with the five medicine boxes MBα is two (five (maximum delivery number of the medicine boxes MBβ) × 0.5; the figures below the decimal point are omitted), which is smaller than the number of the medicine boxes MBβ to be prescribed (seven). Thus, the separate prescription is performed in this case. Specifically, the five medicine boxes MBα and the two medicine boxes MBβ are delivered first, and then remaining five medicine boxes MBβ are separately delivered.

In a case where the medicine-box delivering apparatus 10 is capable of performing separate prescription as described above, when the medicine boxes MB corresponding to one prescription are too many to be accommodated in the container BS, the container BS may be replaced by the time all the medicine boxes MB corresponding to one prescription are delivered. However, except such a special case, it is unnecessary to replace the container BS installed in the container arrangement portion 52y of the supply unit 50 until the time all the medicine boxes MB corresponding to one prescription are delivered, and it suffices that the container BS is set in the container arrangement portion 52y at the delivery timing of the medicine boxes MB. Thus, when the separate prescription is performed, as long as the existence of the container BS is confirmed by the container detection sensor 108 during delivery of the medicine boxes MB corresponding to one prescription, the medicine boxes MB may be sequentially delivered toward the container BS even when the container BS is not replaced after preceding delivery of the medicine boxes MB. That is, during delivery of the medicine boxes MB corresponding to one prescription, the medicine boxes MB can be sequentially delivered under the state in which the container BS has been detected with the container detection sensor 108 provided to the supply unit 50 (first detection state). Even when the state in which the container BS has not been detected with the container detection sensor 108 (second detection state) is not once reached after the preceding delivery of the medicine boxes MB, the subsequent delivery of the medicine boxes MB can be performed.

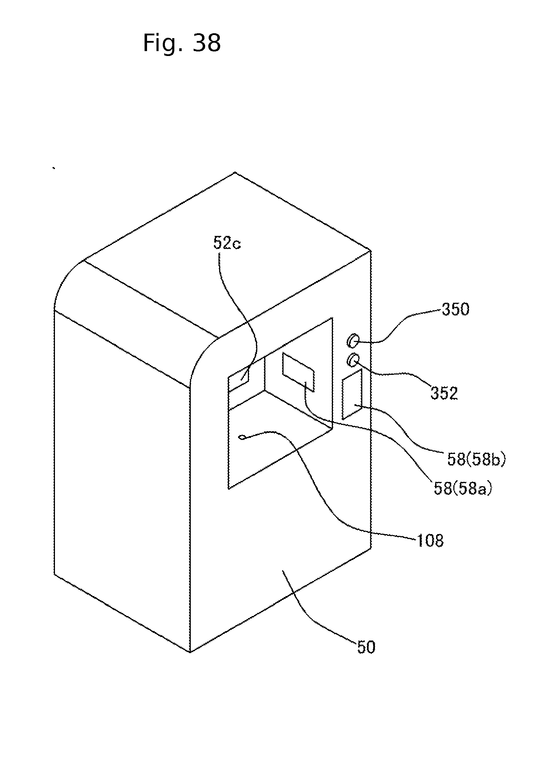

As described above, when the medicine-box delivering apparatus 10 is capable of delivering the medicine boxes MB by separate prescription, it is desired that whether or not the medicine boxes MB are delivered by separate prescription can be easily confirmed. Specifically, as illustrated in FIG. 38, at an appropriate part of the supply unit 50 and the like, it is desired to provide a separate-prescription lamp 350 capable of indicating that separate prescription is being performed. Further, although the separate-prescription lamp 350 may be turned off at any timing during separate prescription, it is desired that the separate-prescription lamp 350 be not turned off until all the medicine boxes MB to be delivered by separate prescription are delivered. With such a configuration, it is possible to reliably notify an operator that there still exist undelivered ones of the medicine boxes MB to be delivered by separate prescription. In addition, the following failure is reliably prevented from occurring: the medicine boxes MB to be delivered by separate prescription are mixed with medicine boxes MB to be delivered by another prescription.

Further, as illustrated in FIG. 38, a light-emitting button 352 which emits light through energization may be provided so as to notify through light emission of the light-emitting button 352 that some of the medicine boxes MB are standing by in an undelivered state when the medicine boxes MB are delivered by separate prescription, and the medicine boxes MB standing by in the undelivered state may be configured not to be delivered until the light-emitting button 352 is pressed. With such a configuration, even in a case where the container BS has not been replaced after preceding delivery of the medicine boxes MB, when the light-emitting button 352 is pressed, the medicine boxes MB standing by in the undelivered state can be delivered toward the container BS.

Note that, in the example illustrated in FIG. 38, a configuration is illustrated in which, for simplification of the apparatus structure, the light-emitting button 352 is provided with a function of a lamp for notifying existence of the undelivered medicine boxes MB and a function as a button for forcibly delivering the undelivered medicine boxes MB irrespective of whether or not the container BS has been replaced. However, the present invention is not limited thereto. For example, components such as a lamp and a button respectively having the functions may be separately provided. Alternatively, at the time of performing separate prescription, light-emitting conditions of the light-emitting button 352 may be changed in accordance with a preparation condition of the medicine boxes MB when separate prescription is performed. For example, the light-emitting button 352 may be blinked when preparation for delivery of the medicine boxes MB standing by in the undelivered state is completed.

Further, in a case where separate prescription is performed as described above, when the medicine boxes MB delivered as one prescription are accommodated into separate containers BS, sheets (journal sheets) indicating prescription information pieces of the medicine boxes MB or indicating that separate prescription has been performed may be issued by the journal printer 58a and put into the containers BS. With such a configuration, it can be easily notified that separate prescription is being performed.

Note that, when separate prescription is performed, prescription information pieces such as the types of the medicine boxes MB may be printed on each of the journal sheets to be put into the respective containers BS. Alternatively, prescription information pieces may be collectively printed onto any one of the journal sheets to be put into one of the containers BS without being printed on another journal sheet to be put into another container BS. However, in this case, information pieces indicating separate prescription or indicating how many times the medicine boxes MB corresponding to one prescription are separately prescribed by separate prescription (small lots) are printed on the another journal sheet to be put into the another container BS. Further, when the prescription information pieces are printed on each of the journal sheets to be put into the respective containers BS at the time of separate prescription, all the types and the numbers of the medicine boxes MB according to the prescription may be printed. Alternatively, the prescription information pieces such as the types of the medicine boxes MB having been put in may be classified and printed for each of the containers BS. When, for example, the types of the medicine boxes MB having been put in each of the containers BS are separately printed on the respective journal sheets, a monitoring task for the medicine boxes MB can be further more simplified.

The medicine-box delivering apparatus 10 as described above in this embodiment may be provided with a sensor capable of detecting the medicine boxes MB (hereinafter, also referred to as "inlet-side sensor"), which is provided at a position on the loading inlet 36b side of each of the loading paths 36 or on the put-in port 64a side of each of the replenishing paths 64. The medicine-box delivering apparatus 10 may be configured not to grasp that the medicine boxes MB have been prepared in the loading unit 30 or the replenishing unit 60 until the medicine boxes MB are detected with the inlet-side sensor. With this configuration, the medicine-box delivering apparatus 10 is capable of counting a prepared number of the medicine boxes MB. Further, assuming that the prepared number of the medicine boxes MB is erroneously recognized when someone who prepares the medicine boxes MB with respect to the medicine-box preparation portion 15 performs an irregular operation of once inserting the medicine box MB from the loading inlet 36b or the put-in port 64a up to a position detectable by the above-mentioned inlet-side sensor and then taking out the medicine box MB from the loading inlet 36b or the put-in port 64a, still another condition may be added to counting of the prepared number. Specifically, in addition to the above-mentioned inlet-side sensor, another sensor (hereinafter, also referred to as "second inlet-side sensor") may be provided at a position adjacent to the inlet-side sensor on a downstream side of the loading path 36 or the replenishing path 64 relative to the inlet-side sensor (loading outlet 36b side or discharge port 64b side), and the prepared number may be counted after confirming, based on detection conditions of the inlet-side sensor and the second inlet-side sensor, whether or not the medicine boxes MB have been accurately prepared.

Specifically, in a case where the medicine box MB has been detected in the order of the inlet-side sensor and the second inlet-side sensor, it is conceived that the medicine box MB has been accurately put in from the loading inlet 36b or the put-in port 64a. In contrast, in a case where the medicine box MB has been detected in the order of the second inlet-side sensor and the inlet-side sensor, it is conceived that the operation of taking out the medicine box MB having been once inserted from the loading inlet 36b or the put-in port 64a has been performed. Thus, in the case where the medicine box MB has been detected in the order of the second inlet-side sensor and the inlet-side sensor, erroneous counting as described above is prevented from occurring by preventing counting the detection result as the prepared number of the medicine boxes MB or by performing an operation of asking an operator whether or not the detection result may be counted.

### <Calibration operation>

As described above, in the medicine-box delivering apparatus 10 in this embodiment, the large number of medicine-box paths 22 are installed in the medicine-box accommodating portion 20, and hence it is assumed that various factors such as deflections of constituent materials and loosening of fixation screws cause slight differences between actual positions and designed positions of the medicine-box paths 22. Further, in the medicine-box delivering apparatus 10, the loading unit 30 moves on the rear surface sides of the medicine-box paths 22 so as to prepare the medicine boxes MB in the medicine-box paths 22. Thus, when the positions of the medicine-box paths 22 are not accurately grasped, there is a risk that jam of the medicine boxes MB may occur. As a countermeasure, the medicine-box delivering apparatus 10 is desired to perform an operation of confirming errors between information pieces about the designed positions and information pieces about the actual positions for each of the medicine-box paths 22 in fixed units or all the medicine-box paths 22 at a predetermined timing such as that of installation of the apparatus and adjusting the errors (hereinafter, also referred to as "calibration operation").

Specifically, for example, when the plurality of medicine-box paths 22 are unified as described above and installed in a form of the path unit U, as illustrated in FIGS. 34, a mark 247 for the calibration operation is provided to each of the path units U, and recognition means (not shown) for recognizing the above-mentioned mark 247 is installed to the loading unit 30. When the calibration operation is performed, the loading unit 30 is vertically and laterally moved on the rear surface side of the medicine-box accommodating portion 20 so that the marks 247 provided respectively to the path units U are sequentially recognized with the recognition means. Thus, the positions of the marks 247 are grasped. In this way, it is possible to confirm (compare) the information pieces about the actual positions and the information pieces about the designed positions of the path units U thus grasped, to thereby accurately recognize information pieces about positions of the path units U.

When a sensor which passes immediately behind the path inlet sides 22d from a wall surface on a left side of a rear portion of the main body is installed, the sensor is blocked by a medicine box MB in such an abnormal state that the medicine box MB remains between the outlet 36a of the loading path 36 and the path inlet sides 22d or a part of a foremost one of the medicine boxes MB loaded in the loading path 36 protrudes. In this way, abnormality can be detected. When the abnormality is detected, the loading rack 32 does not proceed to the loading operation, and the abnormality is notified. As a result, failures of the apparatus are prevented in advance.

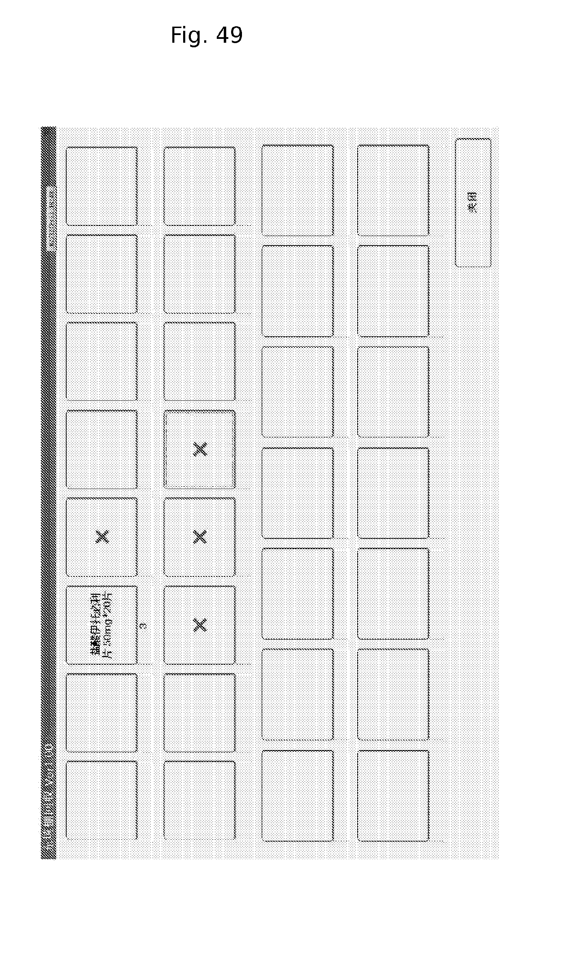

As described above, the medicine-box delivering apparatus 10 in this embodiment is capable of preparing medicine boxes MB prepared in the replenishing unit 60 by a user with respect to predetermined one of the medicine-box paths 22 through intermediation of the loading unit 30. In this context, the medicine boxes MB may be put into medicine-box paths 64 different from specified ones of the replenishing paths 64 in the replenishing unit 60, or medicine boxes MB different from specified ones may be put into the replenishing paths 64. In such cases, it is necessary to collect the medicine boxes MB erroneously prepared in the medicine-box paths 64. In this context, for example, an interface as illustrated in FIG. 49 can be employed as a manipulation interface for performing the collection.

Specifically, in the interface illustrated in FIG. 49, divisions are displayed correspondingly to the arrangement of the medicine-box paths 64 in the replenishing unit 60 so that ones of the medicine-box paths 64, in which the medicine boxes MB are erroneously put, can be intuitively specified. In this interface, when divisions corresponding to the ones of the medicine-box paths 64, in which the medicine boxes MB are erroneously put, are specified, a selection interface (not shown) for selecting whether or not to collect the medicine boxes MB from the medicine-box paths 64 is displayed. When collection is selected in the selection interface, as illustrated in FIG. 49, "×" marks are displayed in the divisions indicating the medicine-box paths 64 corresponding to the collection. In this way, the medicine boxes MB prepared in the medicine-box paths 64 corresponding to the divisions added with the "×" marks are collected without being put in the loading unit 30 side. Further, the operator can visually cancel subsequent putting-in of the medicine boxes MB.

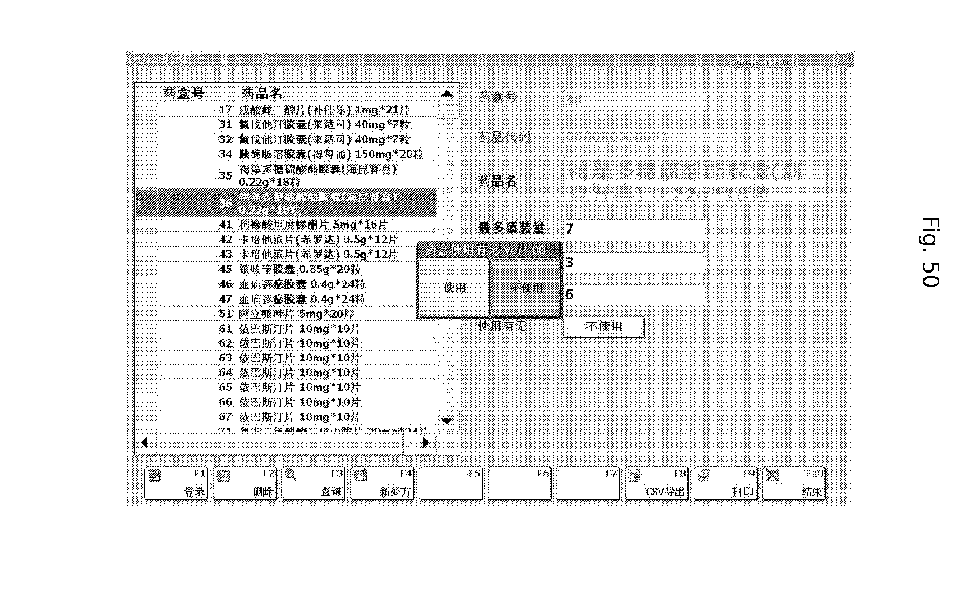

In the medicine-box delivering apparatus 10 in this embodiment, the large number of medicine-box paths 22 are provided in the medicine-box accommodating portion 20, which can be used for storing and delivering the medicine boxes MB. For example, when errors occur owing to the failures of the discharge regulating means 26 and jam of the medicine boxes MB in the medicine-box paths 22, selection can be made so as not to use only some of the medicine-box paths 22. In this way, normally usable ones of the medicine-box paths 22 can be effectively used. Based on the findings, it is also possible to employ a configuration in which a medicine-box path master interface as illustrated in FIG. 50 can be displayed, and the medicine-box paths 22 are appropriately selected on the interface so that use or non-use can be selected.

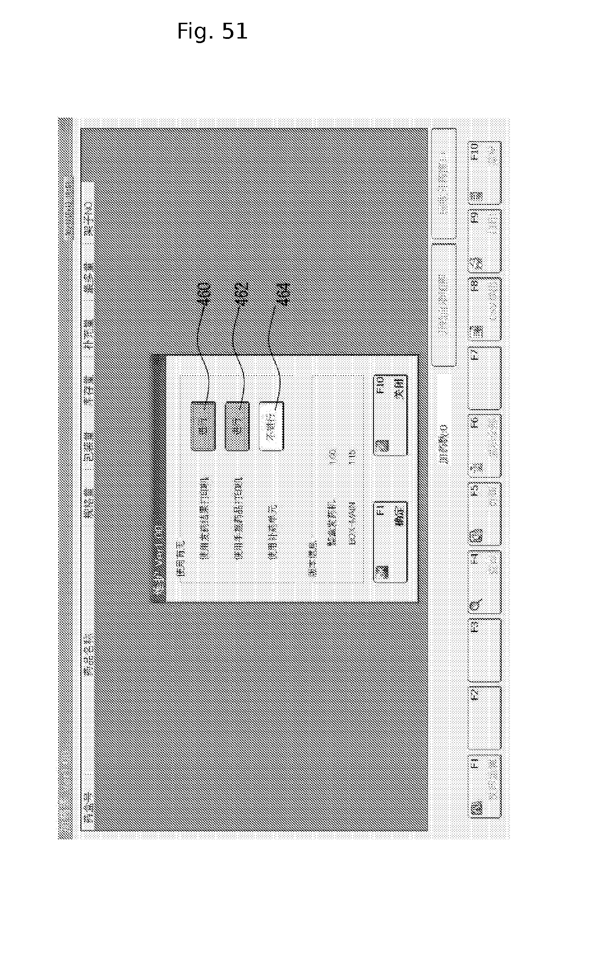

In the medicine-box delivering apparatus 10 in this embodiment, when the loading unit 30 is stopped owing to some failure, in conjunction therewith, the delivery operation of the medicine boxes MB in the medicine-box path 22 in which the same medicine boxes MB as those to be loaded by the loading unit 30 have already been prepared may be stopped. However, in some cases, the delivery operation of the medicine boxes MB in the medicine-box path 22 in which medicine boxes MB have already been accurately prepared needs not be stopped. Assuming such a case, the operation of the loading unit 30 and the operation of the medicine-box paths 22 may be performed independently of each other. Specifically, when a charging-unit non-use setting interface as illustrated in FIG. 51 can be displayed on a personal computer and the like provided for operation control and a button 460 provided on the interface is manipulated, the operation of the loading unit 30 and the operation of the medicine-box paths 22 can be performed independently of each other. With such a configuration, the delivery of the medicine boxes MB in the medicine-box paths 22 can be continued with the operation of the loading unit 30 being stopped. As a result, convenience can be much more enhanced.

Further, in the above-mentioned medicine-box delivering apparatus 10, journal sheets printed with prescription information pieces or information pieces about medicines required to be manually delivered can be printed and provided by the journal printer 58a or the manual-delivery printer 58b constituting the prescription-information providing means 58. However, in some cases, it suffices that the medicine boxes MB delivered from the medicine-box delivering apparatus 10 and prescriptions are checked against each other, and it is unnecessary to print the journal sheets as described above. In consideration of such a practical use, it is desired that an operation switch button 462 for the journal printer 58a and an operation switch button 464 for the manual-delivery printer 58b can be displayed, for example, on the interface as illustrated in FIG. 51 so that printing of the journal sheets by the journal printer 58a or the manual-delivery printer 58b can be appropriately stopped.

## Claims

1. A medicine-box delivering apparatus (10), comprising:
a medicine-box accommodating portion (20) capable of accommodating a large number of medicine boxes (MB) each containing medicines, collecting medicine boxes (MB) according to prescription, and delivering the medicine boxes (MB); and
a loading unit (30) capable of loading the medicine boxes (MB) into the medicine-box accommodating portion (20),
wherein the medicine-box accommodating portion (20) comprises medicine-box paths (22) of a plurality of types each having a different path width, which are arrayed in the medicine-box accommodating portion (20), and is capable of accommodating the medicine boxes (MB) in line in each of the medicine-box paths (22) and sequentially sending out the medicine boxes (MB), and
wherein the loading unit (30) comprises a loading rack (32) movable at a position adjacent on a medicine-box putting-in side with respect to the medicine-box accommodating portion (20), the loading rack (32) comprising loading paths (36) of a plurality of types each having a different path width,
the loading rack (32) being, under a state in which the medicine boxes (MB) are replenished in the loading paths (36), movable up to a position adjacent to one of the medicine-box paths (22), which corresponds to ones of the medicine boxes (MB) charged in the loading paths (36), so as to load the ones of the medicine boxes (MB) replenished in the loading paths (36) into corresponding one of the medicine-box paths (22).

2. A medicine-box delivering apparatus (10) according to claim 1, further comprising:
medicine-box recognition means (72) for recognizing types of the medicine boxes (MB) to be replenished with respect to the loading rack (32); and
replenishment instruction means (38) for specifying corresponding one of the loading paths (36) into which the medicine boxes (MB) recognized with the medicine-box recognition means (72) are to be replenished.

3. A medicine-box delivering apparatus (10) according to claim 1 or 2, further comprising:
medicine-box recognition means (72) for recognizing types of the medicine boxes (MB) to be loaded with respect to the corresponding one of the medicine-box paths (22); and
loading instruction means (25) for specifying the corresponding one of the medicine-box paths (22) into which the medicine boxes (MB) recognized with the medicine-box recognition means (72) are to be loaded.

4. A medicine-box delivering apparatus (10) according to any one of claims 1 to 3,
wherein each of the medicine-box paths (22) is tilted downward from an inlet side toward an outlet side,
wherein the medicine-box delivering apparatus (10) further comprises discharge regulating means (26, 250) provided on the outlet side of each of the medicine-box paths (22), the discharge regulating means (26, 260) comprising:
a push-up piece (26b, 274) for pushing up corresponding one of the medicine boxes (MB) from a bottom-surface side of each of the medicine-box paths (22); and
a receiving piece (26c, 276) which moves in association with the push-up piece (26b, 274),
wherein, when the medicine boxes (MB) stand by for delivery, the receiving piece (26c, 276) projects upward from the bottom-surface side of each of the medicine-box paths (22) so that the medicine boxes (MB) are stemmed in each of the medicine-box paths (22), and
wherein, when the medicine boxes (MB) are discharged, the push-up piece (26b, 274) is actuated so as to push up the corresponding one of the medicine boxes (MB), and the receiving piece (26c, 276) withdraws onto the bottom-surface side of each of the medicine-box paths (22).

5. A medicine-box delivering apparatus (10) according to claim 4, wherein the push-up piece (274) and/or the receiving piece (276) comprises a roller (292, 296) attached so as to be freely rotatable at a position which comes into contact with the medicine boxes (MB).

6. A medicine-box delivering apparatus (10) according to any one of claims 1 to 5,
wherein each of the medicine-box paths (22) is tilted downward from an inlet side toward an outlet side,
wherein the medicine-box delivering apparatus (10) further comprises discharge regulating means (26) provided on the outlet side of each of the medicine-box paths (22), the discharge regulating means (26) comprising an abutment surface (26e) against which the medicine boxes (MB) having passed each of the medicine-box paths (22) abut, the abutment surface (26e) comprising a protrusion (26f) provided at a position deviated from a width-direction center of each of the medicine-box paths (22).

7. A medicine-box delivering apparatus (10) according to any one of claims 1 to 6, wherein a surface of at least one of a bottom surface (22a) and side surfaces (22b and 22c) forming each of the medicine-box paths (22) is formed of a glide promoting member (240) obtained through impregnation of a silicone resin with respect to polyethylene.

8. A medicine-box delivering apparatus (10) according to claim 7, wherein the surface formed of the glide promoting member (240) comprises projections and recesses extending in a path direction of each of the medicine-box paths (22).

9. A medicine-box delivering apparatus (10) according to any one of claims 1 to 8,
wherein each of the medicine-box paths (22) is tilted downward from an inlet side toward an outlet side,
wherein the medicine-box delivering apparatus (10) further comprises, on the outlet side of each of the medicine-box paths (22):
discharge regulating means (26, 250) capable of stemming the medicine boxes (MB) in each of the medicine-box paths (22) when the medicine boxes (MB) stand by for delivery, and discharging the medicine boxes (MB) by pushing up the medicine boxes (MB) from a bottom-surface side of each of the medicine-box paths (22) when the medicine boxes (MB) are discharged; and
opening-height adjustment means (28) attachable and detachable above the discharge regulating means (26, 250), and
wherein the opening-height adjustment means (28) is attached to the attachment portion (22g) so as to reduce a height of an opening region of a part on the outlet side of each of the medicine-box paths (22).

10. A medicine-box delivering apparatus (10) according to any one of claims 1 to 9, wherein a part on an inlet side of each of the loading paths (36) and/or a part on an inlet side of each of the medicine-box paths (22) is widened in a tapered manner.

11. A medicine-box delivering apparatus (10) according to any one of claims 1 to 10, further comprising a replenishing unit (60) capable of replenishing the medicine boxes (MB) with respect to the loading unit (30),
wherein the replenishing unit (60) comprises:
replenishing paths (64) of a plurality of types each having a different path width; and
a stopper (400, 420) capable of stemming the medicine boxes (MB) put in each of the replenishing paths (64), and
wherein the medicine boxes (MB) prepared in each of the replenishing paths (64) are replenished into corresponding one of the loading paths (36) of the loading rack (32) when the stopper (400, 420) is disengaged under a state in which the replenishing unit (60) is connected to the loading rack (32) of the loading unit (30).

12. A medicine-box delivering apparatus (10) according to any one of claims 1 to 11, further comprising:
a transport conveyor (42) for transporting the medicine boxes (MB) discharged from the medicine-box paths (22); and
supply means (50) provided on a downstream side in a conveying direction of the transport conveyor (42), the supply means (50) being capable of supplying the medicine boxes (MB) transported by the transport conveyor (42) collectively to a predetermined position,
wherein the supply means (50) comprises:
a supply conveyor (54) for transferring the medicine boxes (MB) transported from the transport conveyor (42); and
a butting surface (52b) provided at a position adjacent to the supply conveyor (54),
wherein a conveying surface of the supply conveyor (54) is actuated toward the butting surface (52b) during transfer of the medicine boxes (MB) from the transport conveyor (42) toward the supply conveyor (54).

13. A medicine-box delivering apparatus (10) according to any one of claims 1 to 12, further comprising:
a transport conveyor (42) for transporting the medicine boxes (MB) discharged from the medicine-box paths (22);
supply means (50) provided on a downstream side in a conveying direction of the transport conveyor (42), the supply means (50) being capable of supplying the medicine boxes (MB) transported by the transport conveyor (42) collectively to a predetermined position,
wherein the supply means (50) comprises:
a container arrangement portion (52y) for arranging a container (BS) for accommodating the medicine boxes (MB) for each prescription; and
container detection means (108) for detecting whether or not the container (BS) exists in the container arrangement portion (52y), and
wherein detection of the container (BS) with the container detection means (108) is set as only one disengaging condition or one of disengaging conditions for allowing the medicines to be supplied by the supply means (50).

14. A medicine-box delivering apparatus (10) according to claim 13,
wherein the container detection means (108) is in a first detection state when the container (BS) is under the detection and in a second detection state when the container (BS) is out of the detection, and
wherein, switching of a detection signal indicating the second detection state to a detection signal indicating the first detection state after completion of delivery of ones of the medicine boxes (MB), which correspond to preceding prescription, is set as the only one disengaging condition or one of the disengaging conditions for allowing the medicines to be supplied by the supply means (50), the detection signals being transmitted from the container detection means (108).

15. A medicine-box delivering apparatus (10) according to any one of claims 1 to 14, further comprising distance-measuring means (106) capable of measuring a distance from an inlet of each of the medicine-box paths (22) to one of the medicine boxes (MB), which is at a position most on the inlet side,
wherein a stock management operation for detecting a stock condition in each of the medicine-box paths (22) can be performed based on the distance measured with the distance-measuring means (106) and a length of one of the medicine boxes (MB) loaded in each of the medicine-box paths (22).

16. A medicine-box delivering apparatus (10) according to any one of claims 1 to 15, further comprising:
an outlet-side sensor (100) provided on an outlet side of each of the medicine-box paths (22);
an inlet-side sensor (102) provided at a position deviated toward an inlet side of each of the medicine-box paths (22) with respect to the outlet-side sensor (100); and
box-jam judging means (70) for judging whether or not the medicine boxes (MB) are jammed in each of the medicine-box paths (22),
wherein the box-jam judging means (70) judges that the medicine boxes (MB) are jammed in corresponding one of the medicine-box paths (22) in a condition that the medicine boxes (MB) are detected with the inlet-side sensor (102) without being detected with the outlet-side sensor (100).

17. A medicine-box delivering apparatus (10) according to any one of claims 1 to 16, further comprising:
a medicine-box preparation portion (15) comprising the loading unit (30) and being capable of preparing the medicine boxes (MB) to be loaded at preset specified points in a phase preceding loading of the medicine boxes (MB) into the medicine-box paths (22); and
a medicine-box collection portion (230) capable of collecting the medicine boxes (MB) prepared in the medicine-box preparation portion (15) without through the medicine-box paths (22),
wherein, when the medicine boxes (MB) comprise medicine boxes (MB) erroneously prepared at points other than the preset specified points in the medicine-box preparation portion (15), the medicine boxes (MB) prepared at the points other than the preset specified points in the medicine-box preparation portion (15) are collected by the medicine-box collection portion (230).

18. A medicine-box delivering apparatus (10) according to claim 17, wherein, when the medicine boxes (MB) comprise the medicine boxes (MB) prepared at the points other than the preset specified points, preparation of the medicine boxes (MB) with respect to the points other than the preset specified points, at which the erroneously prepared medicine boxes (MB) exist, is prohibited.

19. A medicine-box delivering apparatus (10) according to any one of claims 1 to 18, the medicine-box delivering apparatus (10) being capable of performing separate prescription for delivering medicine boxes (MB) corresponding to one prescription in a plurality of separated times of delivery operations,
wherein, for each type of the medicine boxes (MB), a delivery capacity of each type of the medicine boxes (MB) that can be exerted in a single delivery operation is defined as a maximum number of medicine boxes (MB) that can be delivered at once on a premise that the medicine boxes (MB) to be delivered once are of a single type, and
wherein the separate prescription is performed when any one of the following (Condition 1) and (Condition 2) is satisfied:
(Condition 1) when the medicine boxes (MB) contained in one prescription are of a single type, a number of prescribed medicine boxes (MB) is larger than a number defined as the delivery capacity; and
(Condition 2) when the medicine boxes (MB) contained in one prescription are of a plurality of types, on a premise that medicine boxes (MB) of one type, which are contained in the one prescription, are delivered together with medicine boxes (MB) of another type, which are contained in the one prescription, a delivery capacity remaining after delivery of the medicine boxes (MB) of the another type is smaller than a delivery capacity required for delivery of the medicine boxes (MB) of the one type.
